(19) **Europäisches Patentamt / European Patent Office / Office européen des brevets**

(11) **EP 4 697 660 A1**

(12) **EUROPEAN PATENT APPLICATION**
published in accordance with Art. 153(4) EPC

(43) Date of publication:
**18.02.2026 Bulletin 2026/08**

(21) Application number: **24813836.4**

(22) Date of filing: **20.03.2024**

(51) International Patent Classification (IPC):
**H04L 27/26** (2006.01)

(52) Cooperative Patent Classification (CPC):
**H04L 5/00; H04L 25/02; H04L 25/03; H04L 27/26**

(86) International application number:
**PCT/CN2024/082689**

(87) International publication number:
**WO 2024/244630 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.05.2023 CN 202310633888**

(71) Applicant: **Huawei Technologies Co., Ltd.
Shenzhen, Guangdong 518129 (CN)**

(72) Inventors:
• **PENG, Zhongchong**
 **Shenzhen, Guangdong 518129 (CN)**
• **LIU, Fengwei**
 **Shenzhen, Guangdong 518129 (CN)**
• **CHEN, Lei**
 **Shenzhen, Guangdong 518129 (CN)**
• **CUI, Haixia**
 **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SYMBOL PROCESSING METHOD, APPARATUS AND SYSTEM**

(57) This application relates to the field of communication technologies, and provides a symbol processing method, an apparatus, and a system, to mitigate inter-symbol phase noise power fluctuation through inter-symbol transformation processing without relying on terminal's computing power for ultra-high-order modulation signals, thereby improving a phase noise compensation effect. The solution includes: obtaining a first modulation symbol block, where a time-domain resource of the first modulation symbol block includes M time-domain symbols, a frequency-domain resource of the first modulation symbol block includes N sub-carriers, and the first modulation symbol block includes $M \times N$ modulation symbols, where M is greater than or equal to 2, and N is greater than or equal to 1; and performing time-domain inter-symbol transformation processing on the first modulation symbol block to obtain a second modulation symbol block, where a time-domain resource of the second modulation symbol block includes M time-domain symbols, a frequency-domain resource of the second modulation symbol block includes N sub-carriers, and the second modulation symbol block includes $M \times N$ modulation symbols.

FIG. 10

## Description

This application claims priority to Chinese Patent Application No. 202310633888.1, filed with the China National Intellectual Property Administration on May 30, 2023 and entitled "SYMBOL PROCESSING METHOD, APPARATUS, AND SYSTEM", which is incorporated herein by reference in its entirety.

## TECHNICAL FIELD

Embodiments of this application relate to the field of communication technologies, and in particular, to a symbol processing method, an apparatus, and a system.

## BACKGROUND

High-frequency communication typically operates in frequency bands above 6 gigahertz (6G), mainly including 28 GHz, 39 GHz, 60 GHz, 73 GHz, and the like. Due to abundance of frequency band resources, high-frequency communication has become a research hotspot. Although the high-frequency communication offers high bandwidth and highly integrated antenna arrays for achieving high throughput, high-frequency communication has a problem of intermediate radio frequency distortion, leading to phase errors. Most common problems are phase noise (phase noise, PHN), center frequency offsets (carrier frequency offset, CFO), large Doppler frequency shifts, and the like, which severely affect performance of high-frequency communication. In high-frequency communication systems, demodulation performance of data with different modulation orders or code rates is affected differently by phase noise. When a higher-order modulation scheme is employed, inter sub-carrier interference (inter sub-carrier interference, ICI) occurs as well as common phase errors (common phase error, CPE). Therefore, in the high-frequency communication systems, it is crucial to mitigate impact of the phase noise on the data demodulation performance.

Currently, high-frequency phase noise is mitigated by introducing phase tracking reference signals (phase tracking reference signal, PTRS) for phase noise compensation. As a baseline solution, such an approach can meet a demodulation requirement of high-frequency communication when a lower modulation and coding scheme (modulation and coding scheme, MCS) is used or when a power spectral density of the phase noise is low. However, for ultra-high-order modulation signals, an error vector magnitude (error vector magnitude, EVM) required for demodulation is low, which entails higher risks. Furthermore, an iterative phase noise compensation solution is further proposed. Demodulated data is used as a pilot signal to re-estimate an ICI coefficient, and then time-domain phase noise compensation is performed. With each iteration, impact of residual phase noise is reduced, and demodulated data is more accurate. However, this solution increases processing overheads at a terminal, and a quantity of iterations and selection of an iterative algorithm are difficult to standardize.

## SUMMARY

This application provides a symbol processing method, an apparatus, and a system, to mitigate inter-symbol phase noise power fluctuation through time-domain inter-symbol transformation processing without relying on terminal's computing power for ultra-high-order modulation signals, thereby improving a phase noise compensation effect.

To achieve the foregoing objectives, the following solutions are used in this application.

According to a first aspect, an embodiment of this application provides a symbol processing method, including: A sending device obtains a first modulation symbol block, where a time-domain resource of the first modulation symbol block includes M time-domain symbols, a frequency-domain resource of the first modulation symbol block includes N sub-carriers, and the first modulation symbol block includes $M \times N$ modulation symbols, where M is greater than or equal to 2, and N is greater than or equal to 1. The sending device performs time-domain inter-symbol transformation processing on the first modulation symbol block to obtain a second modulation symbol block, where a time-domain resource of the second modulation symbol block includes M time-domain symbols, a frequency-domain resource of the second modulation symbol block includes N sub-carriers, and the second modulation symbol block includes $M \times N$ modulation symbols.

In this embodiment of this application, the sending device adopts an over-the-air phase noise compensation solution based on time-domain inter-symbol transformation processing with a modulation symbol block as a granularity. This helps mitigate fluctuation in inter-symbol phase noise power, and improves a compensation effect for ICI. This solution does not change an existing pilot structure and a phase noise compensation processing procedure, and can smooth inter-symbol phase noise power fluctuation and improve signal demodulation performance. This avoids increasing processing overheads and avoids resource waste of a receiving device (for example, a terminal).

In a possible implementation of this application, the time-domain inter-symbol transformation processing is performing preprocessing on two or more time-domain symbols within a same modulation symbol block by using a first transformation matrix, where the first transformation matrix includes one or more of a discrete Fourier transform DFT matrix, an inverse discrete Fourier transform IDFT matrix, an OCC matrix, and a permutation matrix.

In a possible implementation of this application, after that the sending device performs time-domain inter-symbol transformation processing on the first modulation symbol block to obtain the second modulation symbol block, the method may further include: The sending device maps a pilot signal onto a time-domain symbol that is used to carry a pilot signal and that corresponds to the second modulation symbol block. The sending device sends a second modulation symbol block onto which the pilot signal has been mapped.

In a possible implementation of this application, before that the sending device performs time-domain inter-symbol transformation processing on the first modulation symbol block to obtain the second modulation symbol block, the method provided in this embodiment of this application further includes: The sending device determines whether to perform time-domain inter-symbol transformation processing on the first modulation symbol block. Time-domain inter-symbol transformation processing can be performed on a high-frequency signal by determining whether to perform time-domain inter-symbol transformation processing.

In a possible implementation of this application, that the sending device determines whether to perform time-domain inter-symbol transformation processing on the first modulation symbol block includes: The sending device determines, based on an index value of a modulation and coding scheme corresponding to the first modulation symbol block, whether to perform time-domain inter-symbol transformation processing on the first modulation symbol block.

In a possible implementation of this application, that the sending device determines, based on the index value of the modulation and coding scheme corresponding to the first modulation symbol block, whether to perform time-domain inter-symbol transformation processing on the first modulation symbol block includes: The sending device determines, when the index value of the modulation and coding scheme is greater than or equal to an index threshold, to perform time-domain inter-symbol transformation processing on the first modulation symbol block; and determines, when the index value of the modulation and coding scheme is less than the index threshold, not to perform time-domain inter-symbol transformation processing on the first modulation symbol block.

In a possible implementation of this application, the method provided in this embodiment of this application further includes: The sending device obtains one or more third modulation symbol blocks, where a time-domain resource of the third modulation symbol block includes Y time-domain symbols, a frequency-domain resource of the third modulation symbol block includes Q sub-carriers, and the third modulation symbol block includes $Y \times Q$ modulation symbols, where Y is greater than or equal to 2, and Q is greater than or equal to 1. The sending device performs time-domain inter-symbol transformation processing on each of the third modulation symbol blocks to obtain one or more fourth modulation symbol blocks, where a time-domain resource of the fourth modulation symbol block includes Y time-domain symbols, a frequency-domain resource of the fourth modulation symbol block includes the Q sub-carriers, and the fourth modulation symbol block includes $Y \times Q$ modulation symbols.

Correspondingly, optionally, in a possible implementation of this application, after that the sending device performs time-domain inter-symbol transformation processing on each of the third modulation symbol blocks to obtain one or more fourth modulation symbol blocks, the method may further include: The sending device maps a pilot signal onto a time-domain symbol that is used to carry a pilot signal and that corresponds to the fourth modulation symbol block. The sending device sends one or more fourth modulation symbol blocks onto which the pilot signal has been mapped.

In a possible implementation of this application, the first modulation symbol block and the third modulation symbol block may be different modulation symbol blocks in a same slot, or may be modulation symbol blocks in different slots. This is not limited in embodiments of this application. The first modulation symbol block and the one or more third modulation symbol blocks belong to a same RB, or belong to different RBs.

In a possible implementation of this application, the method provided in this embodiment of this application further includes: The sending device determines, based on protocol-agreed maximum and minimum quantities of time-domain symbols included in a time-domain resource of a modulation symbol block, a quantity of time-domain symbols included in the time-domain resource of the first modulation symbol block or the third modulation symbol block; and/or the sending device determines, based on a protocol-agreed quantity of time-domain symbols included in a time-domain resource of a modulation symbol block, a quantity of time-domain symbols included in the time-domain resource of the first modulation symbol block or the third modulation symbol block.

In a possible implementation of this application, the sending device performs time-domain inter-symbol transformation processing on the first modulation symbol block or the third modulation symbol block by using a first transformation matrix respectively. The first transformation matrix is protocol-agreed or configured by default, or the first transformation matrix is determined based on the quantity of time-domain symbols included in the time-domain resource of the first modulation symbol block or the third modulation symbol block, or the first transformation matrix is determined based on a quantity of sub-carriers included in the frequency-domain resource of the first modulation symbol block or the third modulation symbol block.

In a possible implementation of this application, the sending device sends first indication information, where the first indication information is used to determine that the sending device performs time-domain inter-symbol transformation processing on one or more modulation symbol blocks. The one or more modulation symbol blocks include at least the first modulation symbol block. For example, the first indication information is used by the receiving device to determine to perform time-domain inter-symbol inverse transformation processing on a first to-be-demodulated symbol block corresponding to the first modulation symbol block. In this way, it is convenient for the receiving device to determine, by using the first indication information sent by the sending device, whether to perform time-domain inter-symbol inverse transformation processing on the received first to-be-demodulated symbol block.

In a possible implementation of this application, the first indication information further indicates a length of a time-domain resource of each modulation symbol block and/or a first transformation matrix used to perform time-domain inter-symbol transformation processing on each modulation symbol block. Certainly, the first indication information further indicates a frequency-domain resource of each modulation symbol block. In this way, it is convenient for the receiving device to determine, based on the first indication information, a length of the time-domain resource of the first modulation symbol block and/or a second transformation matrix used to perform time-domain inter-symbol inverse transformation processing on the first to-be-demodulated symbol block corresponding to the first modulation symbol block. The sending device further additionally uses the first indication information to indicate a specific rule and timing for the time-domain inter-symbol transformation processing. Therefore, not only processing manners of the receiving end and the sending end can be unified to smooth phase noise, but also an existing phase noise compensation method is not changed, thereby avoiding increasing processing overheads and avoiding resource waste of the receiving device.

In a possible implementation of this application, the method provided in this embodiment of this application further includes: The sending device sends second indication information and/or third indication information, where the second indication information indicates the quantity of time-domain symbols included in the time-domain resource of the first modulation symbol block, or the second indication information indicates a start time-domain symbol and/or an end time-domain symbol of the time-domain resource of the first modulation symbol block, or the second indication information indicates start data and/or end data of the frequency-domain resource of the first modulation symbol block. The third indication information is used to determine an inverse transformation matrix used to perform time-domain inter-symbol inverse transformation processing on the first to-be-demodulated symbol block corresponding to the first modulation symbol block. For example, the third indication information indicates the first transformation matrix corresponding to the first modulation symbol block, or the third indication information indicates the second transformation matrix associated with the first transformation matrix corresponding to the first modulation symbol block. In this way, it is convenient for the receiving device to determine, based on the second indication information, the M time-domain symbols included in the time-domain resource of the first modulation symbol block, and/or determine, based on the third indication information, the inverse transformation matrix used to perform time-domain inter-symbol inverse transformation processing, thereby unifying transformation rules for receiving and sending. The sending device further additionally uses the second indication information/the third indication information to indicate a specific rule and timing for the time-domain inter-symbol transformation processing. Therefore, not only processing manners of the receiving end and the sending end can be unified to smooth phase noise, but also an existing phase noise compensation method is not changed, thereby avoiding increasing processing overheads and avoiding resource waste of the receiving device.

In a possible implementation of this application, the method provided in this embodiment of this application further includes: The sending device configures one or more transformation matrices for the receiving device, where each of the one or more transformation matrices corresponds to a length of a time-domain resource of one modulation symbol block. In this way, it is convenient for the receiving device to determine a/an transformation matrix/inverse transformation matrix for each modulation symbol block based on a received length of a time-domain resource of the modulation symbol block.

In a possible implementation of this application, the M time-domain symbols include a first time-domain symbol, and when the first time-domain symbol is used to carry a pilot signal, the sending device performs time-domain inter-symbol transformation processing on time-domain symbols other than the first time-domain symbol in the M time-domain symbols; or when the first time-domain symbol carries data and is further used to carry the pilot signal, the sending device performs time-domain inter-symbol transformation processing on the M time-domain symbols.

In a possible implementation of this application, before that the sending device performs time-domain inter-symbol transformation processing on the first modulation symbol block to obtain the second modulation symbol block, the method provided in this embodiment of this application further includes: The sending device determines a resource mapping rule for the first modulation symbol block. The sending device performs, according to the resource mapping rule, resource mapping on a time-domain symbol used to carry data.

In a possible implementation of this application, the resource mapping rule is first performing resource mapping on the first modulation symbol block according to one of a first mapping rule and a second mapping rule, and then performing resource mapping on the first modulation symbol block according to the other of the second mapping rule and the first mapping rule. The first mapping rule is performing resource mapping on the time-domain symbols according to a sequence of the M time-domain symbols in time domain. The second mapping rule is performing resource mapping on the time-domain symbols corresponding to the sub-carriers according to a numbering sequence of the N sub-carriers in frequency domain. For example, the resource mapping may be performed on the time-domain symbols in descending or ascending order of the M time-domain symbols. The second mapping rule is performing resource mapping on the time-domain symbols according to the numbering sequence of the N sub-carriers in frequency domain. For example, the resource mapping is performed on the time-domain symbols in ascending order of numbers of the N sub-carriers. For example, the resource mapping is separately performed on a sub-carrier 1, a sub-carrier 2, a sub-carrier 3, ..., and a sub-carrier N corresponding to a same time-domain symbol according to a sequence of the sub-carrier 1, the sub-carrier 2, the sub-carrier 3, ..., and the sub-carrier N.

It may be understood that a resource mapping rule for resource mapping on any third modulation symbol block is the same as a resource mapping rule for resource mapping on the first modulation symbol block. Details are not described again in the following.

In a possible implementation of this application, the resource mapping rule is performing data mapping in frequency domain on the M time-domain symbols included in the first modulation symbol block according to a third mapping rule, and performing data mapping in time domain on the M time-domain symbols included in the first modulation symbol block according to a fourth mapping rule. The third mapping rule is cyclic mapping, and the fourth mapping rule is sequential mapping, or the third mapping rule is sequential mapping, and the fourth mapping rule is cyclic mapping.

In a possible implementation of this application, the method provided in this embodiment of this application may further include: The sending device sends fourth indication information to the receiving device, where the fourth indication information indicates the resource mapping rule for the first modulation symbol block or each modulation symbol block. In this way, it is convenient for the receiving device to perform time-domain inter-symbol inverse transformation processing according to the resource mapping rule indicated by the sending device.

In a possible implementation of this application, the time-domain inter-symbol transformation processing is performed, by using a same first transformation matrix, on the time-domain symbols corresponding to the N different sub-carriers included in the first modulation symbol block. That is, the time-domain inter-symbol transformation processing is performed, by using the same first transformation matrix, on the time-domain symbols corresponding to the N sub-carriers.

In a possible implementation of this application, the sending device is further configured to indicate, to the receiving device, that the time-domain inter-symbol transformation processing is performed, by using a same first transformation matrix, on the time-domain symbols corresponding to the N different sub-carriers included in the first modulation symbol block. In this way, it is convenient for the receiving device to perform, by using the same second transformation matrix, time-domain inter-symbol inverse transformation processing on the time-domain symbols corresponding to the N different sub-carriers included in the first modulation symbol block.

In a possible implementation of this application, the time-domain inter-symbol transformation processing is performed, by using different first transformation matrices, on the time-domain symbols corresponding to the N different sub-carriers included in the first modulation symbol block.

In a possible implementation of this application, the receiving device may determine, based on a quantity of time-domain symbols in any to-be-demodulated symbol block, a second transformation matrix corresponding to the any to-be-demodulated symbol block, and/or determine, based on a quantity of sub-carriers in any to-be-demodulated symbol block, a second transformation matrix corresponding to the any to-be-demodulated symbol block.

The N sub-carriers include a first sub-carrier and a second sub-carrier, and a first transformation matrix used to perform time-domain inter-symbol transformation processing on the plurality of time-domain symbols corresponding to the first sub-carrier and a first transformation matrix used to perform time-domain inter-symbol transformation processing on a plurality of time-domain symbols corresponding to the second sub-carrier are in a mutual transpose relationship. For example, the first transformation matrix corresponding to the first sub-carrier and the transformation matrix corresponding to the second sub-carrier are both permutation matrices with H rows and H columns. The permutation matrix with H rows and H columns is constituted by a first indicator and a second indicator, where any column or any row has one element being the first indicator and a remaining element being the second indicator.

In a possible implementation of this application, the method provided in this embodiment of this application further includes: The sending device sends fifth indication information, where the fifth indication information indicates that the time-domain inter-symbol transformation processing is performed, by using different first transformation matrices, on the M time-domain symbols corresponding to the different sub-carriers included in the frequency-domain resource of the same modulation symbol block. In this way, it is convenient for the receiving device to determine to perform, by using the different second transformation matrices, time-domain inter-symbol inverse transformation processing on the M time-domain symbols corresponding to the different sub-carriers included in the frequency-domain resource of the same to-be-demodulated symbol block. Alternatively, the sending device may send, to the receiving device, different first transformation matrices corresponding to different sub-carriers, or some sub-carriers correspond to a same first transformation matrix, so that the receiving device determines to perform, by using the different second transformation matrices, time-domain inter-symbol inverse transformation processing on the M time-domain symbols corresponding to the different sub-carriers.

According to a second aspect, an embodiment of this application provides a symbol processing method, including: A receiving device obtains a first to-be-demodulated symbol block, where a time-domain resource of the first to-be-demodulated symbol block includes M time-domain symbols, a frequency-domain resource of the first to-be-demodulated symbol block includes N sub-carriers, the first to-be-demodulated symbol block includes M×N demodulation symbols, and time-domain inter-symbol transformation processing is performed on time-domain symbols that carry a data signal in the M time-domain symbols, where M is greater than or equal to 2, and N is greater than or equal to 1. The receiving device performs time-domain inter-symbol inverse transformation processing on the first to-be-demodulated symbol block to obtain a target to-be-demodulated symbol block, where a time-domain resource of the target to-be-demodulated symbol block includes M time-domain symbols, a frequency-domain resource of the target to-be-demodulated symbol block includes N sub-carriers, and a second modulation symbol block includes M×N demodulation symbols.

In the method provided in this embodiment of this application, the receiving device performs time-domain inter-symbol inverse transformation processing before data demodulation.

In a possible implementation of this application, before that the receiving device performs time-domain inter-symbol inverse transformation processing on the first to-be-demodulated symbol block to obtain the target to-be-demodulated symbol block, the method provided in this embodiment of this application further includes: The receiving device receives a first to-be-demodulated symbol block onto which a pilot signal has been mapped. The receiving device performs phase noise estimation based on the first to-be-demodulated symbol block onto which the pilot signal has been mapped, to obtain the first to-be-demodulated symbol block.

In a possible implementation of this application, before that the receiving device performs time-domain inter-symbol inverse transformation processing on the first to-be-demodulated symbol block to obtain the target to-be-demodulated symbol block, the method provided in this embodiment of this application further includes: The receiving device determines whether to perform time-domain inter-symbol inverse transformation processing on the first to-be-demodulated symbol block; where correspondingly, that the receiving device performs time-domain inter-symbol inverse transformation processing on the first to-be-demodulated symbol block to obtain the target to-be-demodulated symbol block includes: The receiving device performs, when determining to perform time-domain inter-symbol inverse transformation processing on the first to-be-demodulated symbol block, time-domain inter-symbol inverse transformation processing on the first to-be-demodulated symbol block to obtain the target to-be-demodulated symbol block.

In a possible implementation of this application, that the receiving device determines whether to perform time-domain inter-symbol inverse transformation processing on the first to-be-demodulated symbol block includes: The receiving device determines, based on an index value of a modulation and coding scheme corresponding to the first to-be-demodulated symbol block, whether to perform time-domain inter-symbol inverse transformation processing on the first to-be-demodulated symbol block.

In a possible implementation of this application, that the receiving device determines, based on an index value of a modulation and coding scheme corresponding to the first to-be-demodulated symbol block, whether to perform time-domain inter-symbol inverse transformation processing on the first to-be-demodulated symbol block includes: The receiving device determines, when the index value of the modulation and coding scheme is greater than or equal to an index threshold, to perform time-domain inter-symbol inverse transformation processing on the first to-be-demodulated symbol block. The receiving device determines, when the index value of the modulation and coding scheme is less than the index threshold, not to perform time-domain inter-symbol inverse transformation processing on the first to-be-demodulated symbol block. In this solution, the receiving device can determine, based on the modulation and coding scheme, whether to perform time-domain inter-symbol inverse transformation processing.

In a possible implementation of this application, before that the receiving device performs time-domain inter-symbol inverse transformation processing on the first to-be-demodulated symbol block to obtain the target to-be-demodulated symbol block, the method provided in this embodiment of this application further includes: The receiving device receives first indication information. For example, the receiving device may obtain the first indication information from a sending device. The first indication information is used to determine to perform time-domain inter-symbol inverse transformation processing on the first to-be-demodulated symbol block. For example, the first indication information specifically indicates that the sending device performs time-domain inter-symbol transformation processing on a first modulation symbol block corresponding to the first to-be-demodulated symbol block. For example, the first indication information indicates that a state of the time-domain inter-symbol transformation processing is ON. The receiving device determines, based on the first indication information, to perform time-domain inter-symbol inverse transformation processing on the first to-be-demodulated symbol block. In this solution, the receiving device can dynamically determine, based on the first indication information of the sending device, whether the time-domain inter-symbol inverse transformation processing needs to be performed.

In a possible implementation of this application, the receiving device may alternatively determine, according to a protocol specification, whether the time-domain inter-symbol inverse transformation processing needs to be performed. In this case, the step of sending the first indication information by the sending device and/or the step of determining, by the receiving device based on the modulation and coding scheme, whether the time-domain inter-symbol inverse transformation processing needs to be performed may be omitted.

In a possible implementation of this application, the first indication information further indicates a length of a time-domain resource of each modulation symbol block and/or a first transformation matrix used to perform time-domain inter-symbol transformation processing on each modulation symbol block; and correspondingly, that the receiving device performs time-domain inter-symbol inverse transformation processing on the first to-be-demodulated symbol block to obtain the target to-be-demodulated symbol block includes: The receiving device determines, based on the first indication information, the M time-domain symbols included in the time-domain resource of the first to-be-demodulated symbol block; and/or the receiving device determines, based on a first transformation matrix corresponding to the first modulation symbol block indicated by the first indication information, a second transformation matrix corresponding to the first to-be-demodulated symbol block, where the second transformation matrix is an inverse transformation matrix of the first transformation matrix; and the receiving device performs, by using the second transformation matrix, time-domain inter-symbol inverse transformation processing on the M time-domain symbols included in the time-domain resource of the first to-be-demodulated symbol block, to obtain the target to-be-demodulated symbol block.

In a possible implementation of this application, the method provided in this embodiment of this application further includes: The first to-be-demodulated symbol block corresponds to the first modulation symbol block. The receiving device receives second indication information and/or third indication information, where the second indication information indicates a quantity of time-domain symbols included in a time-domain resource of the first modulation symbol block, or the second indication information indicates a start time-domain symbol and/or an end time-domain symbol of a time-domain resource of the first modulation symbol block, or the second indication information indicates start data and/or end data of the time-domain resource of the first modulation symbol block; and the third indication information indicates a first transformation matrix corresponding to the first modulation symbol block. The receiving device determines, based on the second indication information, the M time-domain symbols included in the time-domain resource of the first to-be-demodulated symbol block. The receiving device determines, based on the first transformation matrix corresponding to the first to-be-demodulated symbol block indicated by the third indication information, a second transformation matrix corresponding to the first to-be-demodulated symbol block, where the second transformation matrix is an inverse transformation matrix of the first transformation matrix; and the receiving device performs, by using the second transformation matrix, time-domain inter-symbol inverse transformation processing on the M time-domain symbols included in the time-domain resource of the first to-be-demodulated symbol block, to obtain the target to-be-demodulated symbol block.

In a possible implementation of this application, when the second indication information is received, the method provided in this embodiment of this application further includes: The receiving device determines, based on the second indication information, the M time-domain symbols included in the time-domain resource of the first to-be-demodulated symbol block. The receiving device determines, from one or more transformation matrices based on the M time-domain symbols included in the time-domain resource of the first to-be-demodulated symbol block, the second transformation matrix corresponding to the first to-be-demodulated symbol block, where each transformation matrix corresponds to a length of one time-domain resource. The receiving device performs time-domain inter-symbol inverse transformation processing on the first to-be-demodulated symbol block by using the second transformation matrix corresponding to the first to-be-demodulated symbol block, to obtain the target to-be-demodulated symbol block.

In a possible implementation of this application, the method provided in this embodiment of this application further includes: The receiving device obtains one or more transformation matrices. For example, the receiving device may obtain the one or more transformation matrices from the sending device. Alternatively, the one or more transformation matrices are configured in the sending device, or the one or more transformation matrices are protocol-specified.

In a possible implementation of this application, the M time-domain symbols included in the time-domain resource of the first to-be-demodulated symbol block include a first time-domain symbol, and when the first time-domain symbol is used to carry a pilot signal, the receiving device performs time-domain inter-symbol inverse transformation processing on time-domain symbols other than the first time-domain symbol in the M time-domain symbols included in the time-domain resource of the first to-be-demodulated symbol block; or when the first time-domain symbol carries data and is further used to carry the pilot signal, the receiving device performs time-domain inter-symbol inverse transformation processing on the M time-domain symbols included in the time-domain resource of the first to-be-demodulated symbol block.

In a possible implementation of this application, before that the receiving device performs time-domain inter-symbol inverse transformation processing on the first to-be-demodulated symbol block to obtain the target to-be-demodulated symbol block, the method provided in this embodiment of this application further includes: The receiving device determines a resource mapping rule used by the sending device to perform resource mapping on the first modulation symbol block corresponding to the first to-be-demodulated symbol block; where correspondingly, that the receiving device performs time-domain inter-symbol inverse transformation processing on the first to-be-demodulated symbol block to obtain the target to-be-demodulated symbol block includes: The receiving device performs time-domain inter-symbol inverse transformation processing on the first to-be-demodulated symbol block according to a resource mapping sequence indicated by the resource mapping rule, to obtain the target to-be-demodulated symbol block. In this solution, a sequence of the time-domain inter-symbol inverse transformation processing by the receiving device may be consistent with a sequence of the time-domain inter-symbol transformation processing by the sending device.

For example, the resource mapping rule is first performing resource mapping on the first modulation symbol block according to one of a first mapping rule and a second mapping rule, and then performing resource mapping on the first modulation symbol block according to the other of the second mapping rule and the first mapping rule. The first mapping rule is performing resource mapping on the time-domain symbols according to a sequence of the M time-domain symbols in time domain. The second mapping rule is performing resource mapping on the time-domain symbols according to a numbering sequence of the N sub-carriers in frequency domain.

For example, the resource mapping rule is first mapping the first modulation symbol block according to the first mapping rule and then mapping the first modulation symbol block according to the second mapping rule. In this case, when performing time-domain inter-symbol inverse transformation processing, the receiving device first performs time-domain inter-symbol inverse transformation processing according to the first mapping rule and then performs time-domain inter-symbol inverse transformation processing according to the second mapping rule.

In a possible implementation of this application, that the receiving device determines the resource mapping rule used by the sending device to perform resource mapping on the first modulation symbol block corresponding to the first to-be-demodulated symbol block includes: The receiving device receives fourth indication information from the sending device, where the fourth indication information indicates the resource mapping rule. Correspondingly, the receiving device determines the resource mapping rule based on the fourth indication information. In an example, the resource mapping rule indicates a sequence for the sending device to perform resource on the first modulation symbol block. For example, the resource mapping rule indicates which time-domain symbol that the resource mapping is to be performed on first and which time-domain symbols that the resource mapping is to be performed on subsequently.

In a possible implementation of this application, the time-domain inter-symbol inverse transformation processing is performed, by using the same second transformation matrix, on the time-domain symbols corresponding to the N different sub-carriers included in the first to-be-demodulated symbol block.

In a possible implementation of this application, before that the time-domain inter-symbol inverse transformation processing is performed, by using the same second transformation matrix, on the time-domain symbols corresponding to the N different sub-carriers included in the first to-be-demodulated symbol block, the method provided in this embodiment of this application may further include: The receiving device determines, based on the indication information of the sending device, to perform, by using the same second transformation matrix, time-domain inter-symbol inverse transformation processing on the time-domain symbols corresponding to the N different sub-carriers included in the first to-be-demodulated symbol block.

In a possible implementation of this application, the time-domain inter-symbol inverse transformation processing is performed, by using different second transformation matrices, on the time-domain symbols corresponding to the N different sub-carriers included in the first to-be-demodulated symbol block. In this solution, the time-domain inter-symbol inverse transformation processing may be performed, by using the different second transformation matrices, on the time-domain symbols corresponding to the different sub-carriers, to ensure that processing of the receiving device is consistent with that of the sending device.

In a possible implementation of this application, before that the time-domain inter-symbol inverse transformation processing is performed, by using the different second transformation matrices, on the time-domain symbols corresponding to the N different sub-carriers included in the first to-be-demodulated symbol block, the method provided in this embodiment of this application may further include: The receiving device determines, based on fifth indication information of the sending device, to perform, by using the different second transformation matrices, the time-domain inter-symbol inverse transformation processing on the time-domain symbols corresponding to the N different sub-carriers included in the first to-be-demodulated symbol block.

In a possible implementation of this application, the time-domain inter-symbol inverse transformation processing is performing transformation processing on two or more time-domain symbols within a same to-be-demodulated symbol block by using a second transformation matrix, where the second transformation matrix includes one or more of a discrete Fourier transform DFT matrix, an inverse discrete Fourier transform IDFT matrix, an OCC matrix, or a permutation matrix. The second transformation matrix is an inverse transformation matrix of the first transformation matrix.

According to a third aspect, an embodiment of this application provides a communication apparatus. The communication apparatus can implement the method in any one of the first aspect or the possible implementations of the first aspect, and therefore, can also achieve beneficial effects in any one of the first aspect or the possible implementations of the first aspect. The communication apparatus may be a sending device, or may be an apparatus, for example, a chip used in a sending device, that supports the sending device in implementing the method in any one of the first aspect or the possible implementations of the first aspect. The communication apparatus can implement the foregoing method by using software, hardware, or hardware executing corresponding software.

In an example, the communication apparatus may include a processing unit and a communication unit. The communication unit is configured to perform receiving/sending-related steps performed by the sending device in any one of the first aspect or the possible implementations of the first aspect. The processing unit is configured to perform processing-related steps performed by the sending device in any one of the first aspect or the possible implementations of the first aspect.

For example, when the communication apparatus is a chip or a chip system in the sending device, the processing unit may be a processor, and the communication unit may be a communication interface. For example, the communication interface may be an input/output interface, a pin, a circuit, or the like. The processing unit executes instructions stored in a storage unit, so that the sending device implements the symbol processing method described in any one of the first aspect and the possible implementations of the first aspect. The storage unit may be a storage unit (for example, a register or a cache) in the chip, or may be a storage unit (for example, a read-only memory or a random access memory) that is in the sending device and that is outside the chip.

According to a fourth aspect, an embodiment of this application provides a communication apparatus. The communication apparatus can implement the method in any one of the second aspect or the possible implementations of the second aspect, and therefore, can also achieve beneficial effects in any one of the second aspect or the possible implementations of the second aspect. The communication apparatus may be a receiving device, or may be an apparatus, for example, a chip used in a receiving device, that supports the receiving device in implementing the method in any one of the second aspect or the possible implementations of the second aspect. The communication apparatus can implement the foregoing method by using software, hardware, or hardware executing corresponding software.

In an example, the communication apparatus may include a processing unit and a communication unit. The communication unit is configured to perform receiving/sending-related steps performed by the receiving device in any one of the second aspect or the possible implementations of the second aspect. The processing unit is configured to perform processing-related steps performed by the receiving device in any one of the second aspect or the possible implementations of the second aspect.

For example, when the communication apparatus is a chip or a chip system in the receiving device, the processing unit may be a processor, and the communication unit may be a communication interface. For example, the communication interface may be an input/output interface, a pin, a circuit, or the like. The processing unit executes instructions stored in a storage unit, so that the receiving device implements the symbol processing method described in any one of the second aspect and the possible implementations of the second aspect. The storage unit may be a storage unit (for example, a register or a cache) in the chip, or may be a storage unit (for example, a read-only memory or a random access memory) that is in the receiving device and that is outside the chip.

According to a fifth aspect, an embodiment of this application provides a computer-readable storage medium. The computer-readable storage medium stores a computer program or instructions. When the computer program or the instructions are run on a computer, the computer is enabled to perform the symbol processing method described in any one of the first aspect or the possible implementations of the first aspect. The computer may be a sending device.

According to a sixth aspect, an embodiment of this application provides a computer-readable storage medium. The computer-readable storage medium stores a computer program or instructions. When the computer program or the instructions are run on a computer, the computer is enabled to perform the symbol processing method described in any one of the second aspect or the possible implementations of the second aspect. The computer may be a receiving device.

According to a seventh aspect, an embodiment of this application provides a computer program product including instructions. When the instructions are run on a computer, the computer is enabled to perform the symbol processing method described in any one of the first aspect or the possible implementations of the first aspect.

According to an eighth aspect, an embodiment of this application provides a computer program product including instructions. When the instructions are run on a computer, the computer is enabled to perform the symbol processing method described in any one of the second aspect or the possible implementations of the second aspect.

According to a ninth aspect, an embodiment of this application provides a communication apparatus, configured to implement various methods in the possible designs of either of the first aspect and the second aspect. The communication apparatus may be the foregoing sending device, or an apparatus including the foregoing sending device, or a component (for example, a chip) used in the sending device. Alternatively, the communication apparatus may be the foregoing receiving device, or an apparatus including the foregoing receiving device, or a component (for example, a chip) used in the receiving device. The communication apparatus includes a corresponding module or unit for implementing the foregoing method. The module or unit may be implemented by hardware or software, or by hardware executing corresponding software. The hardware or the software includes one or more modules or units corresponding to the foregoing functions.

It should be understood that the communication apparatus described in the ninth aspect may further include: a bus and a memory. The memory is configured to store code and data. Optionally, at least one processor, a communication interface, and the memory are coupled to each other.

According to a tenth aspect, an embodiment of this application provides a communication apparatus. The communication apparatus includes: a communication interface and at least one processor. The at least one processor communicates with the communication interface. When the communication apparatus runs, the at least one processor executes computer-executable instructions or a program stored in a memory, to enable the communication apparatus to perform the method in any one of the first aspect or the possible implementations of the first aspect. For example, the communication apparatus may be a sending device, or a chip used in a sending device.

According to an eleventh aspect, an embodiment of this application provides a communication apparatus. The communication apparatus includes: a communication interface and at least one processor. The at least one processor communicates with the communication interface. When the communication apparatus runs, the at least one processor executes computer-executable instructions or a program stored in a memory, to enable the communication apparatus to perform the method in the second aspect or the various possible implementations of the second aspect. For example, the communication apparatus may be a receiving device, or a chip used in a receiving device.

It should be understood that the communication apparatus described in either of the tenth aspect and the eleventh aspect may further include a memory. Alternatively, the memory may be replaced with a storage medium. This is not limited in embodiments of this application.

In a possible implementation, the memory described in either of the tenth aspect and the eleventh aspect may be a memory inside the communication apparatus. Certainly, the memory may alternatively be outside the communication apparatus, but the at least one processor can still execute the computer-executable instructions or the program stored in the memory.

According to a twelfth aspect, an embodiment of this application provides a communication apparatus. The communication apparatus includes one or more modules, configured to implement the method in either of the first aspect and the second aspect, where the one or more modules may correspond to the steps in the method in either of the first aspect and the second aspect.

According to a thirteenth aspect, an embodiment of this application provides a chip system. The chip system includes at least one processor, and the processor is configured to read and execute a computer program stored in a memory, to perform the method in any one of the first aspect or the possible implementations of the first aspect.

According to a fourteenth aspect, an embodiment of this application provides a chip system. The chip system includes at least one processor, and the processor is configured to read and execute a computer program stored in a memory, to perform the method in any one of the second aspect or the possible implementations of the second aspect.

Optionally, the chip system may be a single chip or a chip module including a plurality of chips.

Optionally, the chip system further includes a memory. The memory and the processor are connected through a circuit or a wire.

Optionally, the chip system further includes a communication interface. The communication interface is configured to communicate with a module other than the chip.

According to a fifteenth aspect, an embodiment of this application provides a communication system. The communication system includes: a sending device and a receiving device. The sending device is configured to perform the method in any one of the first aspect or the possible implementations of the first aspect, and the receiving device is configured to perform the method in any one of the second aspect or the possible implementations of the second aspect.

In this embodiment of this application, the sending device may be a network device, and the receiving device may be a terminal. Alternatively, the sending device may be a terminal, and the receiving device may be another terminal. Alternatively, the sending device may be a network device, and the receiving device is another network device.

Any apparatus, computer storage medium, computer program product, chip, or communication system provided above is configured to perform the corresponding method provided above. Therefore, for beneficial effects that can be achieved, refer to the beneficial effects of the corresponding solution in the corresponding method provided above. Details are not described herein again.

## BRIEF DESCRIPTION OF DRAWINGS

FIG. 1 to FIG. 9E are related diagrams of signal processing performed by a receiving end and a sending end according to an embodiment of this application;
FIG. 10 is a flowchart of a symbol processing method according to an embodiment of this application;
FIG. 11 to FIG. 22 are diagrams of symbol processing according to an embodiment of this application;
FIG. 23 is a diagram of a structure of a communication apparatus according to an embodiment of this application;
FIG. 24 is a diagram of a structure of a communication device according to an embodiment of this application; and
FIG. 25 is a diagram of a structure of a chip according to an embodiment of this application.

## DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first modulation symbol block and a second modulation symbol block are merely used to distinguish between different modulation symbol blocks, and a sequence of the first modulation symbol block and the second modulation symbol block is not limited. A person skilled in the art may understand that the terms such as "first" and "second" do not limit a quantity or an execution sequence, and the terms such as "first" and "second" do not indicate a definite difference.

It should be noted that, in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Before embodiments of this application are described, related terms in embodiments of this application are first explained as follows.

1. Orthogonal frequency division multiplexing (orthogonal frequency division multiplexing, OFDM): It is a multi-carrier transmission waveform based on frequency division multiplexing. Signals (carriers/sub-carriers) involved in multiplexing are orthogonal. Through serial/parallel conversion, high-speed data streams are converted into multiple parallel low-speed data streams, and then the low-speed data streams are allocated to sub-carriers of different frequencies for transmission.

2. Discrete Fourier transform spreading orthogonal frequency division multiplexing (discrete fourier transform spreading OFDM, DFT-s-OFDM): It is a technology derived from OFDM, and may also be referred to as a linear precoding OFDM technology. It is mainly used for performing discrete Fourier transform (discrete fourier transform, DFT) processing on sub-carriers used by each terminal to convert the sub-carriers from time domain to frequency domain. Then, OFDM modulation is performed on the frequency-domain signals of the terminals. In this way, the signals of the terminals are converted to time domain and sent together. After being optimized using DFT, the signals are converted from frequency-domain signals to time-domain signals.

3. Phase noise (phase noise, PN): It refers to random variations of phases of output signals of communication devices (for example, various radio frequency components) that send signals caused by various noise. In current high-frequency band communication, the phase noise problem is especially prominent. As a frequency band increases, a power spectral density of the phase noise becomes higher, leading to greater impact on received signals. When a frequency band for sending signals is high, degradation in the phase noise causes deteriorated signal demodulation performance and reduced communication quality.

4. Common phase error (common phase error, CPE): The introduction of phase noise causes rotation or scaling of original signals on sub-carriers. Assuming that phase noise on an OFDM time-domain signal is $\theta\_n$, where n=0, ..., N\_c-1, a frequency-domain response of the phase noise is:

$$E_k = \sum_{n=0}^{N_c-1} \frac{e^{j\theta_n}}{N_c} e^{-j*2\pi kn/N_c}, k = 0,1,\cdots,N_c - 1.$$

$E_0$ is independent of serial numbers of sub-carriers, and the original signal experience identical rotation or scaling for all the sub-carriers; therefore, this common error is referred to as CPE.

5. Inter sub-carrier interference (inter sub-carrier interference, ICI): The above summation formula of the frequency domain response is inter-carrier interference introduced by the phase noise. $E_0$ is the interference of a subcarrier on itself.

6. Reference signal (reference signal, RS): It is a signal/symbol carried in time and frequency, which is known to a sending device or a receiving device or time and frequency positions of the reference signal can be deduced according to predetermined rules. It is a known signal for obtaining impact of external factors (for example, spatial channels, or non-idealities of a sending or receiving end device) on signals during transmission. It is used to perform channel estimation, auxiliary signal demodulation, and detection.

Reference signals may be classified into multiple types according to functions: demodulation reference signals (demodulation reference signal, DMRS), channel state information reference signals (channel state information reference signal, CSI-RS), phase tracking reference signals (phase tracking reference signal, PTRS), sounding reference signals (sounding reference signal, SRS), and the like.

7. Physical downlink control channel (physical downlink control channel, PDCCH): It is used for transmission of downlink control information (Downlink Control Information, DCI), including information such as physical downlink shared channel PDSCH scheduling assignment, scheduling grant, and power control. A resource carried by the PDCCH occupies first {1, 2, 3} time-domain symbols of a slot in time domain, and may occupy a full bandwidth in frequency domain, or may be configured by using parameters.

8. Physical downlink shared channel (physical downlink shared channel, PDSCH): It is a channel used for transmission of downlink user data. Time-domain resource assignment is indicated by a time-domain resource assignment field in the DCI, which indicates a start symbol and a quantity of consecutive symbols; and frequency-domain resource assignment is indicated by a frequency-domain resource assignment field in the DCI, including RGB-granularity assignment and RB-granularity assignment.

9. Resource block (resource block, RB). It is also referred to as a physical resource block (physical resource block), and is a basic unit of a frequency resource in an OFDM-based communication system. One resource block is generally formed by N resource elements (resource element, RE). One resource element is also referred to as one sub-carrier. Generally, N is 12. Several resource blocks form one resource block group (resource block group, RBG), which is also referred to as a physical resource block group. Generally, precoding is performed on a per-resource block or per-resource block group basis, and a basic unit for precoding sending is also referred to as a precoding resource block group (precoding resource block group, PRG). One precoding resource group may be not less than one resource block group.

10. Layer (Layer): After layer mapping is performed on a complex symbol (modulation symbol) obtained by performing scrambling (scrambling) and modulation (modulation) on one or two codewords, the complex symbol is mapped to one or more transmission layers (transmission layer, which is usually also referred to as a layer). The transport layer is usually mapped to an antenna port, and therefore, is also referred to as an antenna port. Each layer corresponds to one valid data flow. A quantity of transport layers, that is, a quantity of layers, is referred to as a "transmission order" or a "transmission rank (rank)". The transmission rank may dynamically change. The quantity of layers needs to be less than or equal to the smaller value of a quantity of transmit antenna ports and a quantity of receive antenna ports, that is, "quantity of layers ≤ min(quantity of transmit antenna ports, quantity of receive antenna ports)". In new radio (new radio, NR) downlink communication, a quantity of transport layers is usually equal to a quantity of antenna ports. In downlink control information, a quantity of layers and/or a quantity of antenna ports (or further including a serial number of each antenna port) used during data and demodulation reference signal (demodulation reference signal, DMRS) transmission are/is indicated. In NR, an antenna port may also correspond to a transmission configuration indicator (Transmission Configuration Indicator, TCI), a beam, or the like. For example, one TCI corresponds to a plurality of antenna ports, or one beam corresponds to a plurality of antenna ports. In embodiments of this application, for ease of description, the TCI, the transport layer, the antenna port, and the beam are collectively referred to as a space domain.

11. Precoding and codebook: A multiple input multiple output (multiple input multiple output, MIMO) technology is used to increase system capacity and throughput. There is a mathematical expression $y = Hx + n$, where $y$ represents a received signal, $H$ represents a MIMO channel, $x$ represents a sent signal, and $n$ represents noise. In a communication system with multiple antennas, signals of multiple transmit antennas are superimposed on any receive antenna. Therefore, a method for sending a signal by a sending end affects system performance, and it is usually complex to restore the sent signal at a receiving end. In this context, precoding (precoding) is used to reduce system overheads and maximize MIMO system capacity, and to reduce the complexity of a receiver in eliminating inter-channel interference. In this case, there is a mathematical expression $y = HPx + n$, where $P$ represents a precoding matrix (or vector). To simplify implementation complexity, $P$ may be selected from a predefined matrix (or vector) set. The set is referred to as a codebook (Codebook), and this method is also referred to as a codebook-based sending method. If the sending end can know all information of $H$, $P$ may be obtained by the sending end itself, and this method is also referred to as a non-codebook sending method (non-codebook, NCB).

12. Beam: It is an abstract concept. It may correspond to an instantaneous or statistical channel characteristic during signal transmission, for example, a delay spread (delay spread), a Doppler spread (doppler spread), a Doppler shift (doppler shift), an average delay (average delay), an average gain, spatial reception parameters (spatial Rx parameters), and spatial transmission parameters (spatial Tx parameters). The spatial reception parameters or the spatial transmission parameters may include one or more of the following: an angle of arrival (angle of arrival, AOA), an average AOA, an AOA spread, an angle of departure (angle of departure, AOD for short), an average angle of departure AOD, an AOD spread, a receive antenna spatial correlation parameter, a transmit antenna spatial correlation parameter, a transmit beam, a receive beam, and a resource identifier. In other words, a beam may be indicated/represented by using a reference signal, that is, a QCL relationship between reference signals reflects different or same beams. In addition, a beam may alternatively be represented by using a weight acting on an antenna or a codebook (codebook) acting on an antenna port in a multi-antenna system. That is, alternatively, a beam may correspond to a codebook.

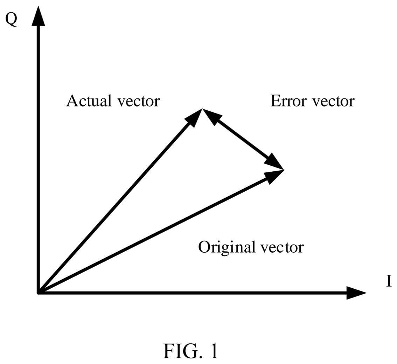

13. EVM: error vector magnitude. In an actual communication system, due to factors such as a non-linear feature of a power amplifier or a channel estimation error, a deviation occurs between a signal constellation diagram obtained through demodulation by a receiving end and an ideal (original) signal constellation diagram. In addition, the more severe the non-linearity of the power amplifier is, the greater the deviation is, and the error vector magnitude can well describe an in-band distortion of a signal. As shown in FIG. 1, the EVM is calculated based on deviations between actual vectors of constellation points after demodulation and vectors of original constellation points, and is specifically defined as follows:

$$EVM = \sqrt{\frac{mean[(I_r - I_o)^2 + (Q_r - Q_o)^2]}{mean(I_o{}^2 + Q_o{}^2)}} \times 100\%,$$

where $(I_r, Q_r)$ is a constellation diagram obtained through demodulation of the received signa, and $I_o, Q_o$ is a constellation diagram of the original signal.

At present, to meet increasing communication requirements, high-frequency band communication has become a focus of research and development. High-frequency bands mainly include frequency bands above 6G, mainly including 28 GHz, 39 GHz, 60 GHz, 73 GHz, and the like. Although the high-frequency bands have advantages such as high bandwidth, a highly integrated antenna array, and high throughput, phase noise (phase noise, PHN), a center frequency offset (carrier frequency offset, CFO), and a large Doppler frequency shift of a high frequency all lead to phase errors, resulting in performance deterioration or even failure of a high-frequency communication system.

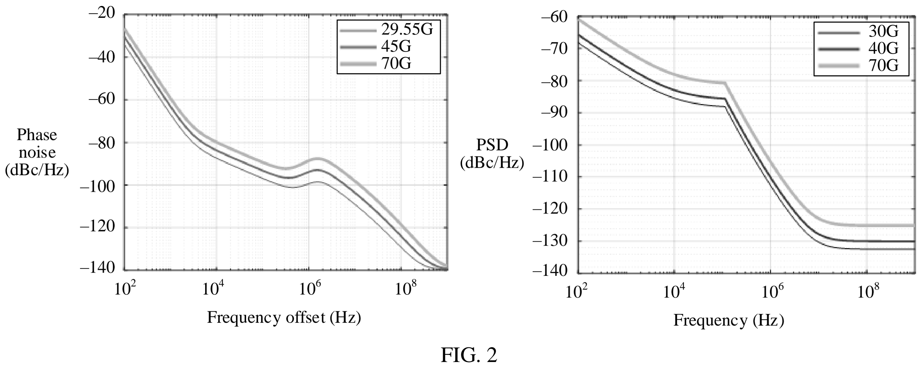

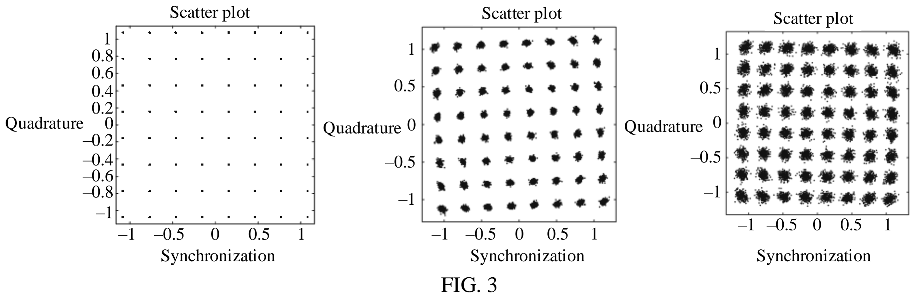

For example, phase noise is produced by a local oscillator (local oscillator, LO) of a transmitter and/or a receiver. The phase noise destroys orthogonality between sub-carriers, and deteriorates a signal-to-noise ratio (signal-to-noise ratio, SNR) and an error vector magnitude (error vector magnitude, EVM). Referring to FIG. 2 and FIG. 3, as a frequency band increases, a power spectral density of the phase noise becomes higher, and higher phase noise has greater impact on a received signal.

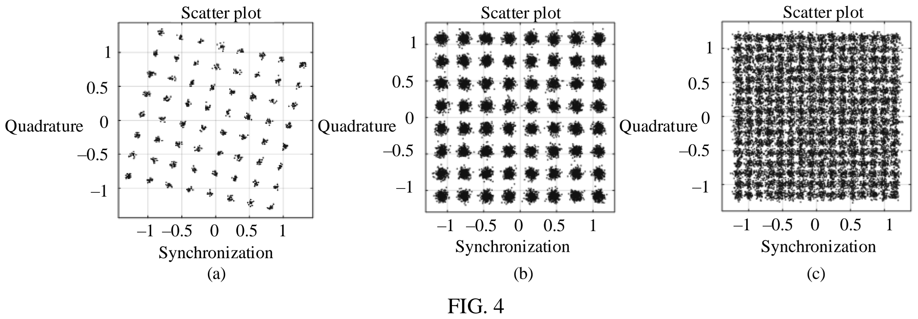

However, for a same frequency band, demodulation performance of data of different modulation orders also varies with phase noise. When the power spectral density of the phase noise reaches a value, quadrature amplitude modulation (quadrature amplitude modulation, QAM) is relatively high, and in addition to the CPE, the ICI caused by the phase noise also cannot be ignored. FIG. 4 shows impact of a CPE and ICI caused by phase noise at a same power spectral density on a received signal. (a) in FIG. 4 is a diagram of the CPE, and (b) and (c) in FIG. 4 are respectively constellation point diagrams of 64QAM and 256QAM after CPE compensation. It can be seen from FIG. 4 that constellation points of 256QAM are more blurred than those of 64QAM due to interference between sub-carriers, which increases the difficulty of 256QAM demodulation/decoding.

In addition, power fluctuation of the ICI also deteriorates signal demodulation performance. Assuming that a received signal in time domain on an $m^{th}$ OFDM symbol is expressed as:

$$y_m(n) = x_m(n)e^{j\phi_m(n)} + n(n) \qquad (1),$$

the received signal in frequency domain is expressed as:

$$Y_m(k) = J_m(0)H_m(k)X_m(k) + \sum_{l=0,l\neq k}^{N} J_m(k-l)H_m(l)X_m(l) + N(k) \qquad (2),$$

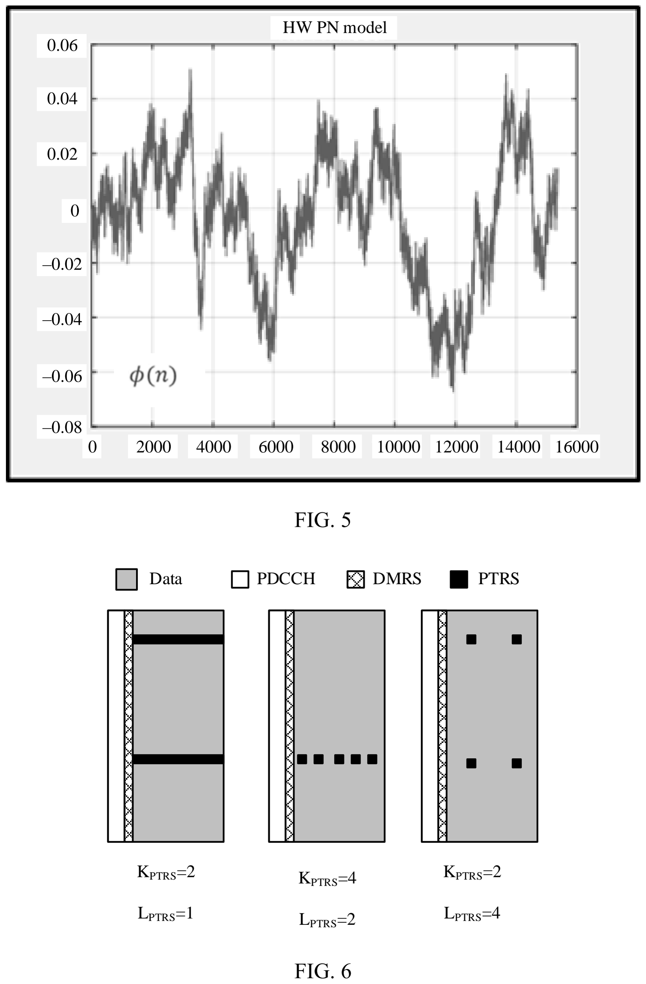

where $J_m(n) = \sum_{k=0}^{N} e^{j\phi_m(n)}e^{-\frac{j2\pi nk}{N}}$, and $\sum_{l=0,l\neq k}^{N} J_m(k-l)H_m(l)X_m(l)$ represents the ICI. $J_m(n)$ varies with different OFDM symbols, and therefore, power of the ICI fluctuates between different symbols. Referring to FIG. 5, signal-to-noise ratios between different time-domain symbols are significantly different, which severely affects overall signal demodulation performance. In addition, the fluctuation phenomenon is more prominent in a case of a high signal-to-noise ratio.

At present, the foregoing problem is mainly resolved by a baseline solution that introduces a phase tracking reference signal (phase tracking reference signal, PTRS) or by an iterative phase noise compensation solution.

Manner 1: The PTRS introduced in the baseline solution includes two parameters: a time density L and a frequency density K. The time density L indicates that there is a PTRS on one OFDM symbol among every L OFDM symbols. The frequency density K indicates that there is a PTRS on one RE (resource element, RE) among every K*Nsc/RB resource elements. Nsc/RB represents a quantity of sub-carriers included in one resource block (resource block, RB) in frequency domain. Referring to FIG. 6, a vertical coordinate in FIG. 6 represents frequency domain, and a horizontal coordinate represents time domain. There are a total of four RBs in frequency domain, and there are a total of 14 symbols in time domain.

A PTRS pattern corresponding to each data transmission is determined based on a scheduled modulation and coding scheme (Modulation and Coding Scheme, MCS) and a scheduled bandwidth. The time density is determined by the scheduled MCS, and the frequency density is determined by the scheduled bandwidth, as shown in Table 1-1 and Table 1-2 below respectively. ptrs-MCS$_i$ (i=1, 2, 3) and NRB$_i$ (i=0, 1) are both configured by a network device for a terminal by using radio resource control (Radio Resource Control, RRC) signaling, and ptrs-MCS$_4$ is a default value and is related to an MCS table.

Table 1-1

| Scheduled MCS | Time density (time density) ($L_{PT-RS}$) |
|---|---|
| $I_{MCS}$<ptrs-MCS$_1$ | PT-RS is not present (PT-RS is not present) |
| ptrs-MCS$_1$≤$I_{MCS}$<ptrs-MCS$_2$ | 4 |
| ptrs-MCS$_2$≤$I_{MCS}$<ptrs-MCS$_3$ | 2 |
| ptrs-MCS$_3$≤$I_{MCS}$<ptrs-MCS$_4$ | 1 |

Table 1-2

| Scheduled bandwidth | Frequency density ($K_{PT-RS}$) |
|---|---|
| $N_{RB}$<$N_{RB0}$ | PT-RS is not present (PT-RS is not present) |
| $N_{RB0}$≤$N_{RB}$<$N_{RB1}$ | 2 |
| $N_{RB1}$≤$N_{RB}$ | 4 |

During design of a PTRS pilot, the CPE introduced by the phase noise is mainly considered. Therefore, the pilot is evenly distributed on the scheduling bandwidth, and relatively robust phase noise estimation performance can be achieved. It is assumed that a quantity of time-domain points of an OFDM symbol is $N_c$, and phase noise $e^{j\theta_n}$($n$ = 0,1, ..., $N_c$ - 1) is multiplied by each sampling point of the OFDM symbol in time domain. In this case, circular convolution is reflected in frequency domain, as shown by formula (3) below, where **V** represents a circular convolution matrix formed by the phase noise.

$$\mathbf{r} = \mathbf{Vs} \qquad\qquad (3).$$

$$\mathbf{V} = \begin{bmatrix} E_0 & E_{N_c-1} & \cdots & E_2 & E_1 \\ E_1 & E_0 & \cdots & E_3 & E_2 \\ \vdots & \vdots & \ddots & \vdots & \vdots \\ E_{N_c-2} & E_{N_c-3} & \cdots & E_0 & E_{N_c-1} \\ E_{N_c-1} & E_{N_c-2} & \cdots & E_1 & E_0 \end{bmatrix} \qquad\qquad (4).$$

$$E_k = \frac{1}{N_c} \sum_{n=0}^{N_c-1} e^{j\theta_n} \cdot e^{-j2\pi kn/N_c} \quad k = 0,1, ..., N_c - 1 \qquad\qquad (5).$$

For a received signal on each sub-carrier, a common factor $E_0$ is introduced due to the phase noise. When it is considered that other items of the phase noise are relatively small, or are smaller than noise power, the received signal may be expressed by formula (6) below:

$$\mathbf{r} = \mathbf{Vs} = E_0\mathbf{s} + \begin{bmatrix} 0 & E_{N_c-1} & \cdots & E_2 & E_1 \\ E_1 & 0 & \cdots & E_3 & E_2 \\ \vdots & \vdots & \ldots & \vdots & \vdots \\ E_{N_c-2} & E_{N_c-3} & \cdots & 0 & E_{N_c-1} \\ E_{N_c-1} & E_{N_c-2} & \cdots & E_1 & 0 \end{bmatrix} \mathbf{s} \approx E_0\mathbf{s} \qquad (6).$$

The common factor, that is, the CPE, may be calculated by using formula (7), where $r_{ptrs}$ represents a received sequence at a pilot position, and $s_{ptrs}$ represents an original pilot sequence.

$$E_0 = mean\left(r_{ptrs}/s_{ptrs}\right) \qquad (7).$$

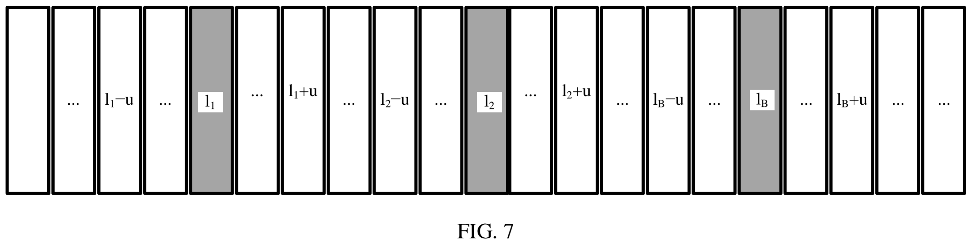

If other phase noise items cannot be ignored, the ICI needs to be estimated. It is assumed that a total of $I_B$ PTRS sequences are evenly distributed on the scheduling bandwidth, and an order of the ICI to be estimated is $2u + 1$, as shown in FIG. 7. $\delta_k$ is a coefficient of the ICI to be estimated that is generated by a conjugate $e^{-j\theta_n}$ of the phase noise, and may be obtained by FFT transform in formula (5). $\mathbf{V}_\delta$ is a circular convolution matrix formed by $\delta_k$, for which reference may be made to formula (4).

Both sides of the equal sign in formula (3) are multiplied by $\mathbf{V}_\delta$ to obtain:

$$\mathbf{V}_\delta \mathbf{r} = \mathbf{V}_\delta \mathbf{Vs} = \mathbf{s} \qquad (8).$$

Elements of the matrix of formula (8) are expanded, and row and column swapping is performed to obtain:

$$\begin{bmatrix} r_{\frac{N_c}{2}} & \cdots & r_2 & r_1 & r_0 & r_{N_c-1} & r_{N_c-2} & \cdots & r_{N_c-\frac{N_c}{2}+1} \\ r_{\frac{N_c}{2}+1} & \cdots & r_3 & \boxed{r_2 \quad \boxed{r_1} \quad r_0 \quad r_{N_c-1}} & \cdots & r_{N_c-\frac{N_c}{2}+2} \\ \vdots & \cdots & \vdots & \vdots & \vdots & \vdots & \vdots & \cdots & \vdots \\ r_{\frac{N_c}{2}-2} & \cdots & r_0 & \boxed{r_{N_c-1} \quad \boxed{r_{N_c-2}} \quad r_{N_c-3} \quad r_{N_c-4}} & \cdots & r_{N_c-\frac{N_c}{2}-1} \\ r_{\frac{N_c}{2}-1} & \cdots & r_1 & r_0 & r_{N_c-1} & r_{N_c-2} & r_{N_c-3} & \cdots & r_{N_c-\frac{N_c}{2}} \end{bmatrix} \begin{bmatrix} \delta_{N_c-\frac{N_c}{2}} \\ \vdots \\ \delta_{N_c-2} \\ \delta_{N_c-1} \\ \delta_0 \\ \delta_1 \\ \delta_2 \\ \vdots \\ \delta_{\frac{N_c}{2}-1} \end{bmatrix} = \mathbf{s} \qquad (9).$$

Because the impact of the ICI coefficient $\delta_{\pm i}$ on performance decreases as i increases, in actual estimation, only some coefficients that have large impact on performance need to be estimated, for example, coefficients corresponding to $(\ldots \delta_{N_c-2}$ to $\delta_2)$ in the right brackets. Herein, the length is $2u + 1$, $I_B$ rows in which a pilot sequence is located in the matrix $r$ are correspondingly extracted, with corresponding serial numbers of $I_1, \ldots, I_B$, for example, signals corresponding to the left brackets (where a quantity of columns in the left brackets is equal to a quantity of elements in the right brackets, and signals in the middle of the left brackets (that is, $r1, \ldots, r_{Nc-2}$) are pilot signals). Therefore, the following formula may be obtained:

$$\begin{bmatrix} r_{l_1+u} & \cdots & r_{l_1} & \cdots & r_{l_1-u} \\ r_{l_2+u} & \cdots & r_{l_2} & \cdots & r_{l_2-u} \\ \vdots & \cdots & \vdots & \cdots & \vdots \\ r_{l_{B-1}+u} & \cdots & r_{l_{B-1}} & \cdots & r_{l_{B-1}-u} \\ r_{l_B+u} & \cdots & r_{l_B} & \cdots & r_{l_B-u} \end{bmatrix} \begin{bmatrix} \delta_{N_c-u} \\ \vdots \\ \delta_0 \\ \vdots \\ \delta_u \end{bmatrix} = \begin{bmatrix} s_{l_1} \\ s_{l_2} \\ \vdots \\ s_{l_{B-1}} \\ s_{l_B} \end{bmatrix} \qquad (10),$$

where $s_{l_1}, s_{l_2}, \ldots, s_{l_B}$ represents a PTRS sending sequence. The ICI coefficient is calculated by using a least square (least square, LS) algorithm:

$$\widehat{\boldsymbol{\delta}} = (r^H r)^{-1} r^{\mathbf{H}} \mathbf{s}_{l_B} = [\delta_{-u}, \cdots, \delta_0, \cdots, \delta_u]^T \qquad (11).$$

After the ICI coefficient is estimated, the received signal $r$ in frequency domain is directly multiplied by $V_{\delta}$ to compensate for the phase noise.

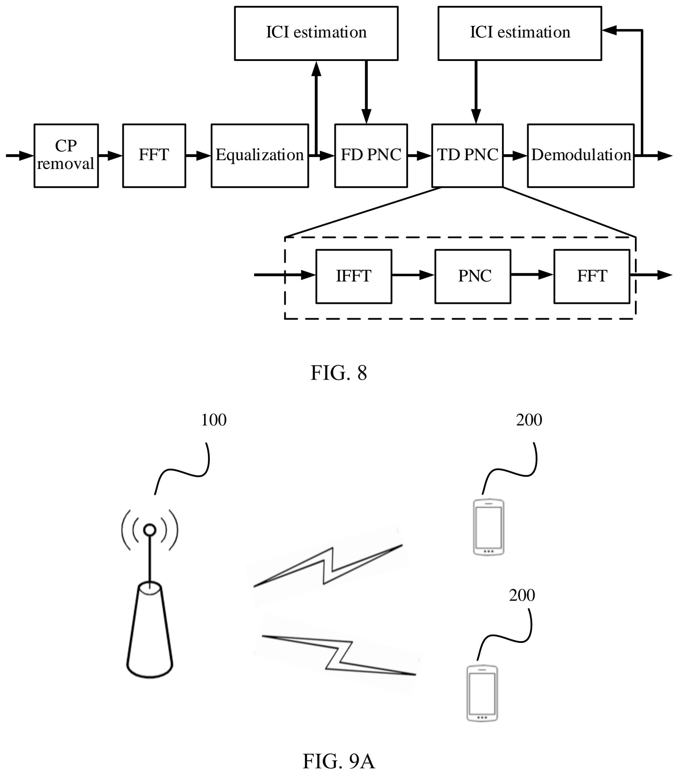

Manner 2: For a higher-order modulation signal, as shown in FIG. 8, demodulated data is used as a pilot signal to re-estimate an ICI coefficient, and then time-domain phase noise compensation is performed. With each iteration, impact of residual phase noise is reduced, and demodulated data is more accurate. However, when iterative processing is used for phase noise compensation, fast Fourier transform (fast fourier transform, FFT), inverse fast Fourier transform (inverse fast fourier transform, IFFT), demodulation, phase noise estimation, and compensation processing need to be performed in each iteration, which greatly increases processing overheads of the terminal. In addition, a processing delay of the iterative phase noise compensation algorithm cannot be ignored, which depends on a processing capability of the terminal.

Based on this, an embodiment of this application provides a symbol processing method to resolve the problem. The following describes, based on the foregoing content, the solutions provided in this application.

As shown in FIG. 9A, FIG. 9A is a diagram of an architecture of a communication system according to an embodiment of this application. As shown in FIG. 9A, the communication system includes a sending device 100 and one or more receiving devices 200. The sending device 100 and the receiving device 200 may communicate with each other.

For example, the sending device 100 may send data to the receiving device 200. Alternatively, the sending device 100 may indicate, to the receiving device 200, whether to perform time-domain inter-symbol transformation processing.

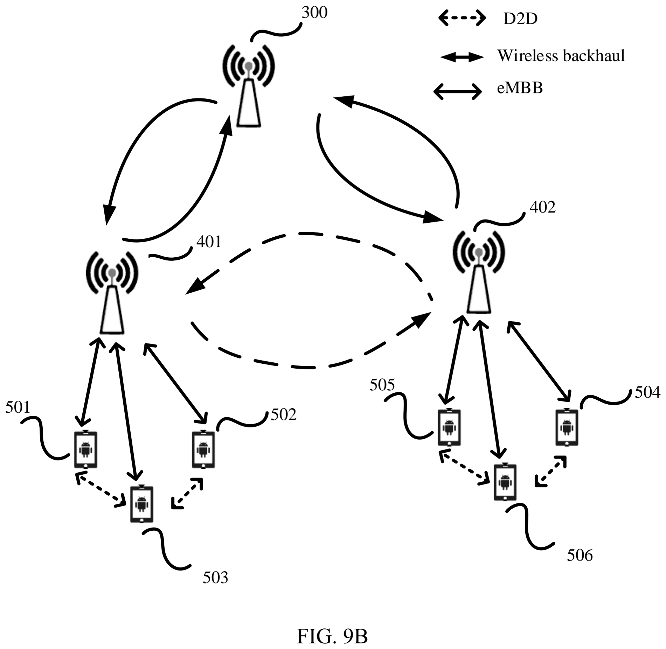

As shown in FIG. 9B, a communication method provided in embodiments of this application is applicable to a wireless communication system, and the wireless communication system may include a sending device 100 and a receiving device 200.

In one example, the communication system provided in this application is applicable to a wireless backhaul scenario (indicated by solid arrows) or a wireless to the x (Wireless to the x, WTTx) scenario (indicated by solid arrow). In this scenario, in FIG. 9A, the sending device 100 may be any network device in FIG. 9B (for example, a network device 401 or a network device 402 shown in FIG. 9B), and the receiving device 200 may be another network device in FIG. 9B (for example, a network device 300 in FIG. 9B).

Alternatively, the sending device 100 may be the network device 300 in FIG. 9B, and the receiving device 200 may be the network device 401 and/or the network device 402.

Alternatively, the sending device 100 may be one of the network device 401 and the network device 402 shown in FIG. 9B, and the receiving device 200 may be the other of the network device 401 and the network device 402 shown in FIG. 9B.

In another example, the communication system provided in this application is applicable to enhanced mobile broadband (Enhanced Mobile Broadband, eMBB) (indicated by solid lines with non-solid arrows in the figure). For example, in FIG. 9A, the sending device 100 may be the network device 401 or the network device 402 in FIG. 9B, and the receiving device 200 may be a terminal in FIG. 9B (for example, a terminal 501, a terminal 502, a terminal 503, a terminal 504, a terminal 505, or a terminal 506 in FIG. 9B). Specifically, when the sending device 100 is the network device 401 in FIG. 9B, the receiving device 200 may be one or more of the terminal 501, the terminal 502, and the terminal 503. When the sending device 100 is the network device 402 in FIG. 9B, the receiving device 200 may be one or more of the terminal 504, the terminal 505, and the terminal 506.

In still another example, the communication system provided in this application is applicable to device to device (device to device, D2D) (indicated by dashed lines with non-solid arrows in the figure). In FIG. 9A, the sending device 100 may be any terminal in FIG. 9B, and the receiving device 200 may be another terminal in FIG. 9B. For example, the sending device 100 may be the terminal 501, and the receiving device may be the terminal 503. Alternatively, the sending device 100 may be the terminal 503, and the receiving device may be the terminal 501. Alternatively, the sending device 100 may be the terminal 502, and the receiving device may be the terminal 503. Alternatively, the sending device 100 may be the terminal 503, and the receiving device may be the terminal 502.

For another example, the sending device 100 may be the terminal 505, and the receiving device may be the terminal 506. Alternatively, the sending device 100 may be the terminal 506, and the receiving device may be the terminal 505. Alternatively, the sending device 100 may be the terminal 506, and the receiving device may be the terminal 504. Alternatively, the sending device 100 may be the terminal 504, and the receiving device may be the terminal 506.

This embodiment of this application is mainly a solution provided for a problem that in a scenario with severe high-frequency phase noise, high-order and high-code-rate performance is severely degraded due to the phase noise. Therefore, this embodiment of this application is applicable to the following scenarios, including but not limited to backhaul, wireless to the x, enhanced mobile broadband, device to device, high-frequency, high-order, and high-code-rate scenarios. Based on an objective of phase noise suppression of an ultra-high-order modulation signal, this application is applicable to a scenario with a strong coverage capability and low transmit-end energy consumption, such as enhanced mobile broadband (enhanced mobile broadband, eMBB) and massive machine-type communications (massive Machine-Type Communications, mMTC). This application is not limited to a transmission waveform, and is applicable to a CP-OFDM (Cyclic Prefix-Orthogonal Frequency Division Multiplexing, cyclic prefix-orthogonal frequency division multiplexing) or a discrete fourier transform spreading orthogonal frequency division multiplexing (DFT-spread-OFDM, DFT-s-OFDM) system.

The technical solutions provided in embodiments of this application are applicable to a universal mobile telecommunications system (universal mobile telecommunications system, UMTS); are applicable to a 4th generation mobile communication technology (the 4th generation, 4G) system, for example, a long term evolution (long term evolution, LTE) system, an LTE frequency division duplex (frequency division duplex, FDD) system, or an LTE time division duplex (time division duplex, TDD) system; are applicable to a 5G system, for example, an NR system, an NG-RAN (Next Generation Radio Access Network, next generation radio access network) system, a public land mobile network (public land mobile network, PLMN) system, a non-public network (Non-Public Network, NPN), a stand-alone non-public network (Stand-alone Non-Public Network, SNPN), or a public network integrated non-public network (Public Network Integrated Non-Public Network, PNI-NPN); or are applicable to a 5.5G system, a next generation mobile communication system (for example, 6G), a future evolved communication system, or another similar communication system. This is not specifically limited.

The technical solutions provided in embodiments of this application are applicable to a high-frequency scenario (for example, above 6G). This is not specifically limited. The technical solutions provided in embodiments of this application are applicable to an MBS scenario or an SDT scenario, are applicable to a device-to-device (device-to-device, D2D) scenario, for example, an NR-D2D scenario, or are applicable to a vehicle-to-everything (vehicle-to-everything, V2X) scenario, for example, an NR-V2X scenario. For example, the technical solutions are applicable to an internet of vehicles, for example V2X or vehicle-to-vehicle (vehicle-to-vehicle, V2V), or are applicable to intelligent driving, advanced driver assistance systems, connected and intelligent vehicles, or other fields.

The terminal in embodiments of this application may be a user equipment (user equipment, UE), an access terminal, a subscriber unit, a subscriber station, a mobile station, a remote station, a remote terminal, a mobile device, a user terminal, a terminal device, a wireless communication device, a user agent, or a user apparatus. The terminal may alternatively be a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a terminal in a form of a handheld device, a wearable device, a computing device, a portable device, a vehicle-mounted device, or the like, a smartphone, smart glasses, a terminal device in a 5G network, a terminal in a future evolved public land mobile network (public land mobile network, PLMN), or the like. This is not limited in embodiments of this application.

In addition, the terminal may be deployed on land, including an indoor device, an outdoor device, a handheld device, or a vehicle-mounted device; the terminal may be deployed on water (for example, on a ship); or the terminal may be deployed in the air (for example, on an airplane, a balloon, or a satellite). The terminal may be specifically a mobile phone (mobile phone), a tablet computer (pad), a computer with wireless transceiver functions, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal may alternatively be a communication chip having a communication module, a vehicle having a communication function, a vehicle-mounted device (for example, a vehicle-mounted communication apparatus or a vehicle-mounted communication chip), or the like.

When a network device is an access network device, the network device may be further connected to a core network (core network, CN) device. The access network device is a device that has a function of providing network access, for example, a radio access network (radio access network, RAN) or a base station. The network device may specifically include a base station (base station, BS) (for example, a RAN base station), or include a base station, a radio resource management device configured to control the base station, and the like. The network device may also include a relay station (relay device), an access point, a base station in a future 5G network, a base station in a future evolved PLMN network, an NR base station, or the like. The network device may be a wearable device or a vehicle-mounted device. Alternatively, the network device may be a communication chip having a communication module.

For example, the network device includes but is not limited to: a next generation NodeB (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, C-RAN) system, a base station controller (base station controller, BSC), a home base station (for example, a home evolved NodeB or a home NodeB, HNB), a baseband unit (baseband unit, BBU), a transmission reception point (transmission reception point, TRP), a transmission point (transmission point, TP), a mobile switching center, a base transceiver station (base transceiver station, BTS) in a global system for mobile communications (global system for mobile communications, GSM) or code division multiple access (code division multiple access, CDMA) network, a NodeB (NodeB, NB) in wideband code division multiple access (wideband code division multiple access, WCDMA), an evolved (evolved) NB (eNB or eNodeB) in LTE, a base station in a future 5G network, an access network device in a future evolved PLMN network, a wearable device, or a vehicle-mounted device.

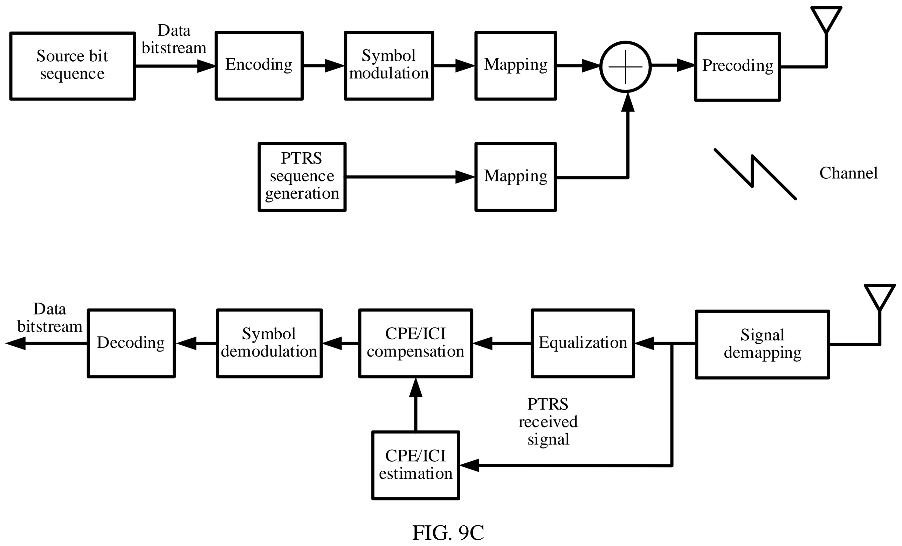

FIG. 9C is a diagram of functional modules of a communication system according to an embodiment of this application.

When a waveform is DFT-s-OFDM, the functional modules of the communication system provided in this embodiment of this application are shown in FIG. 9C. Operations of a sending device include source bit generation, encoding, QAM modulation, PTRS generation, mapping/sorting (refers to mapping of a QAM data symbol and a QAM symbol of a PTRS before DFT), DFT, and RE mapping (where a DFT-s-OFDM symbol is mapped to a designated frequency-domain resource). Operations of a receiving device include signal demapping, channel equalization (including channel estimation), CPE/ICI compensation, CPE/ICI estimation, symbol demodulation, decoding, and the like.

For example, the signal demapping may refer to separating a PTRS from a received signal for the CPE/ICI estimation.

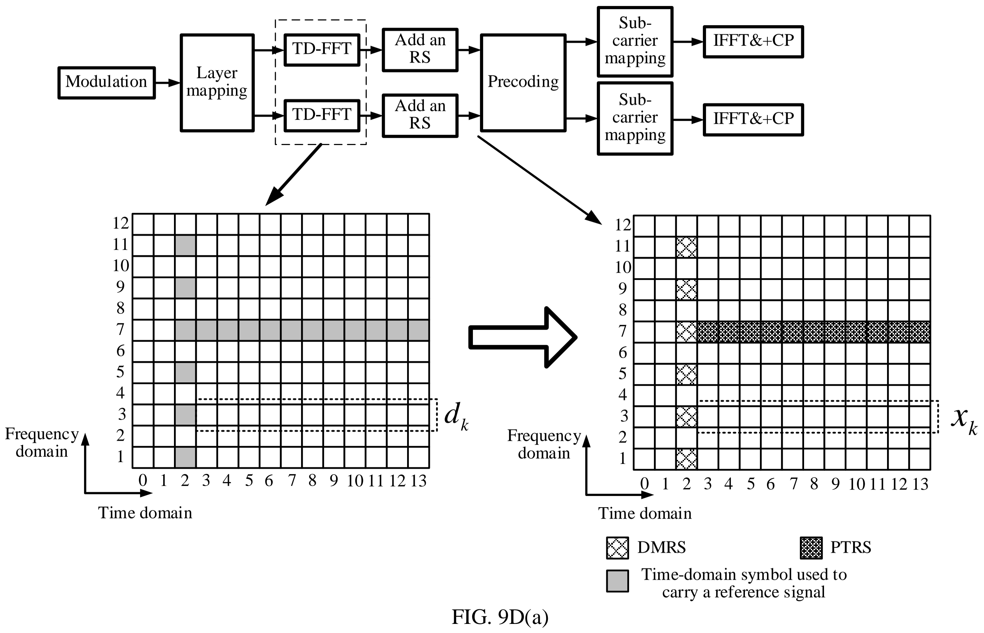

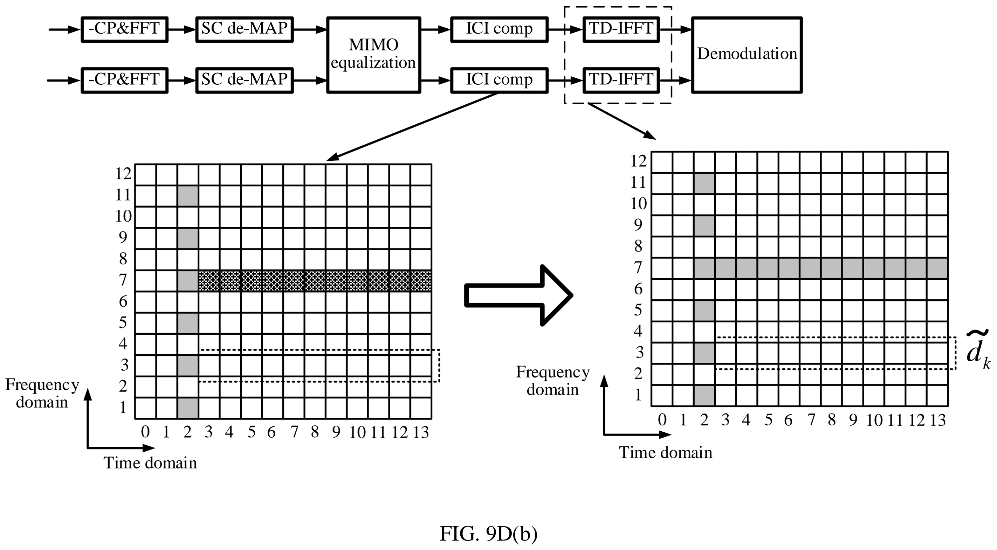

As shown in FIG. 9D(a) and FIG. 9D(b), an example in which a sending device 100 is a base station and a receiving device 200 is a terminal is used in FIG. 9D(a) and FIG. 9D(b) to describe a principle of a signal processing method. Before mapping a reference signal (for example, a DMRS or a PTRS), the base station first performs processing such as modulation and layer mapping on the signal, and then performs time-domain DFT/IDFT transformation processing (for example, FFT and IFFT are usually used) on sub-carriers that carry PDSCH data. As shown in FIG. 9D(a), $d_k$ represents 11 sub-carriers at a same frequency-domain position, the sub-carriers at the same position are filled after time-domain FFT (that is, TD-FFT) transformation, and filled sub-carriers are denoted as $x_k$. Then, the base station adds a pilot signal (for example, adds a PTRS or a DMRS) to a sub-carrier that is used to carry a pilot signal, as shown in FIG. 9D(a). After the reference signal is added, the base station may perform subsequent processing, such as precoding, sub-carrier mapping (SC MAP), and IFFT (OFDM transformation).

The sub-carrier mapping (SC MAP) refers to placing a frequency-domain sub-carrier onto a designated transmission bandwidth.

After using a baseline PNC algorithm, the terminal performs IDFT inverse transformation with a same rule on the sub-carrier based on an indication of the base station to obtain $\tilde{d}_k$, and finally performs data demodulation processing. Specifically, the terminal removes cyclic prefix (Cyclic Prefix, CP) and performs FFT processing, sub-carrier demapping (SC de-MAP), MIMI equalization processing, and the like on a received signal, then performs ICI estimation (as shown in FIG. 9D(a)), performs time-domain inverse FFT transform processing (that is, TD-IFFT), and finally performs demodulation processing.

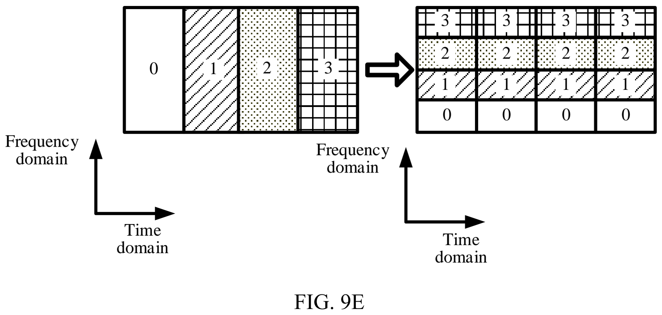

FIG. 9E is a diagram of a smoothing processing effect of this solution. EVMs caused by residual phase noise of a time-domain symbol 0 to a time-domain symbol 3 are inconsistent. After IDFT transformation, an EVM level of a sub-carrier on each symbol is equivalent to an average value across all time-domain symbols, thereby smoothing inter-symbol SINR fluctuation caused by the phase noise.

In this embodiment of this application, a specific structure of an execution entity of a symbol processing method is not specially limited in this embodiment of this application, provided that the execution entity can perform communication according to the symbol processing method in this embodiment of this application by running a program that records code of the symbol processing method in this embodiment of this application. For example, the execution entity of the symbol processing method provided in this embodiment of this application may be a functional module that can invoke a program and execute the program and that is in a sending device, or may be a symbol processing apparatus, for example, a chip, used in a sending device. This is not limited in this application.

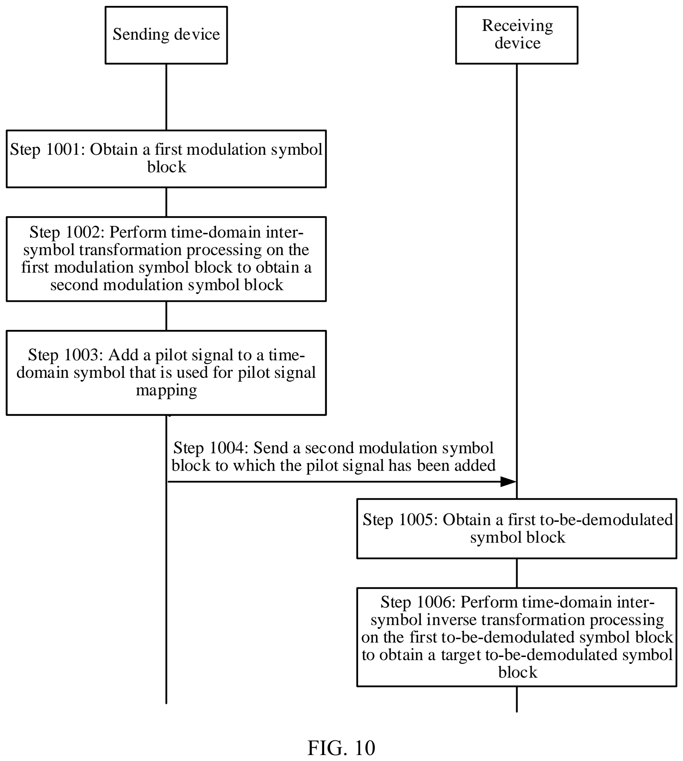

As shown in FIG. 10, FIG. 10 is an interaction diagram of a symbol processing method according to an embodiment of this application. The signal processing method may include the following steps.

Step 1001: A sending device obtains a first modulation symbol block.

For example, a time-domain resource of the first modulation symbol block includes M time-domain symbols. A frequency-domain resource of the first modulation symbol block includes N sub-carriers. The first modulation symbol block includes M×N modulation symbols, where M is greater than or equal to 2, and N is greater than or equal to 1.

In an example, the M time-domain symbols may belong to a same slot, or may belong to different slots. For example, as shown in FIG. 9D(a) and FIG. 9D(b), an example in which the M time-domain symbols include 11 time-domain symbols (a time-domain symbol 3 to a time-domain symbol 13) is used. The 11 time-domain symbols belong to a same slot, for example, a slot 1. For example, the time-domain symbol may be an OFDM symbol.

In an example, M in this embodiment of this application may be 12 or 14. This is not limited in this embodiment of this application. In an NCP (normal cyclic prefix) scenario, one slot may include 14 time-domain symbols, and other ECP (extended cyclic prefix) scenarios in which one slot includes 12 time-domain symbols are not excluded. This is uniformly described herein, and details are not described again in the following. The following uses an example in which one slot

includes 14 time-domain symbols.

In an example, one RB usually includes X time-domain symbols in one slot. In this case, the first modulation symbol block may be a part or all of the time-domain symbols in the RB. An example in which the RB includes 14 time-domain symbols in one slot and includes one sub-carrier in frequency domain is used. Assuming that the first modulation symbol block is some of the time-domain symbols in the RB, for example, M=11 and N=1, the first modulation symbol block includes 11 modulation symbols in total. X is greater than or equal to M.

An example in which M=11 and N=12 is used. As shown in FIG. 9D(a) and FIG. 9D(b), the RB corresponding to the first modulation symbol block includes 14 time-domain symbols in one slot, and includes 12 sub-carriers in frequency domain, that is, 168 OFDM symbols. In this case, the first modulation symbol block includes 132 modulation symbols.

In an example, optionally, a sub-carrier corresponding to some of the M time-domain symbols is used to carry a pilot signal, and the sub-carrier corresponding to some of the time-domain symbols is used to carry a signal or data on a PDSCH or a PDCCH. For example, as shown in FIG. 9D(a) and FIG. 9D(b), an example in which the time-domain resource of the first modulation symbol block includes 12 time-domain symbols, that is, a time-domain symbol 2 to a time-domain symbol 13, and the frequency-domain resource of the first modulation symbol block includes 12 sub-carriers (that is, a sub-carrier 1 to a sub-carrier 12) is used. The sub-carrier 1, the sub-carrier 3, the sub-carrier 5, the sub-carrier 7, the sub-carrier 9, and the sub-carrier 11 corresponding to the time-domain symbol 2 are used to carry a DMRS. In other words, six sub-carriers corresponding to the time-domain symbol 2 are reserved pilot signal positions, which are subsequently used to add a pilot signal. The sub-carrier 7 corresponding to the time-domain symbol 3 to the time-domain symbol 13 is used to carry a PTRS. As shown in FIG. 9D(a) and FIG. 9D(b), in the sub-carriers corresponding to the M time-domain symbols corresponding to the first modulation symbol block, a sub-carrier corresponding to a time-domain symbol other than the time-domain symbols that respectively carry the PTRS and the DMRS may be used to carry a signal or data on a PDSCH or a PDCCH, or may not carry any data or signal. For example, as shown in FIG. 9D(a) and FIG. 9D(b), an example in which the time-domain resource of the first modulation symbol block includes 14 time-domain symbols (a time-domain symbol 0 to a time-domain symbol 13) is used. In this case, a sub-carrier 1 to a sub-carrier 12 corresponding to the time-domain symbol 1 and the time-domain symbol 2 are neither used to carry data nor used to carry a pilot signal.

In an example, a sub-carrier corresponding to at least one of the M time-domain symbols may be used to carry both a signal or data on a PDSCH or a PDCCH and a pilot signal.

For example, the sending device may be a network device, for example, a base station.

For example, with reference to FIG. 9D(a) and FIG. 9D(b), the sending device may obtain the first modulation symbol block after performing layer mapping.

For example, as shown in FIG. 9D(a) and FIG. 9D(b), an example in which the RB includes 14 time-domain symbols in one slot and 12 sub-carriers is used. In this case, the first modulation symbol block may be one RB, or the first modulation symbol block may be some of time-domain symbols in one RB. For example, the time-domain resource of the first modulation symbol block may include a time-domain symbol 1 to a time-domain symbol 7 in the RB shown in FIG. 9D(a) and FIG. 9D(b), and the frequency-domain resource may be a sub-carrier 1 to a sub-carrier 12 in the RB shown in FIG. 9D(a) and FIG. 9D(b). Alternatively, the time-domain resource of the first modulation symbol block may include a time-domain symbol 1 to a time-domain symbol 7 in the RB shown in FIG. 9D(a) and FIG. 9D(b), and the frequency-domain resource of the first modulation symbol block may be a sub-carrier 3 in the RB shown in FIG. 9D(a) and FIG. 9D(b). This is not limited in this embodiment of this application.

Step 1002: The sending device performs time-domain inter-symbol transformation processing on the first modulation symbol block to obtain a second modulation symbol block.

A time-domain resource of the second modulation symbol block includes M time-domain symbols. A frequency-domain resource of the second modulation symbol block includes N sub-carriers. The second modulation symbol block includes M×N modulation symbols.

The performing time-domain inter-symbol transformation processing on the first modulation symbol block may be understood as: performing, by using a first transformation matrix, processing on the M time-domain symbols included in the first modulation symbol block. Specifically, the sending device may perform, by using the first transformation matrix, processing on time-domain symbols that are used to carry data or PDSCH or PDCCH in the M time-domain symbols. When at least one of the M time-domain symbols is used to carry a DMRS or a PTRS, the sending device does not perform time-domain inter-symbol transformation processing on the at least one time-domain symbol.

In an example, the first transformation matrix may be a DFT transformation matrix, an IDFT transformation matrix, an FFT matrix, an IFFT matrix, a symmetric matrix formed by an orthogonal cover code (orthogonal cover code, OCC), or a permutation matrix. First transformation matrices used to perform time-domain inter-symbol transformation processing on different time-domain symbols may be the same or may be different. For content of the permutation matrix, refer to descriptions in the following embodiments. Details are not described herein again.

Optionally, after step 1002, the method provided in this embodiment of this application may further include the following step.

Step 1003: After obtaining the second modulation symbol block, the sending device adds a pilot signal to a time-domain symbol that is used for pilot signal mapping and that corresponds to the second modulation symbol block, to obtain a modulation symbol block to which the pilot signal has been added.

In an example, the pilot signal may be a DMRS, or may be a PTRS.

For example, as shown in FIG. 9D(a) and FIG. 9D(b), it may be learned from FIG. 9D(a) that a slot in which an RB corresponding to the second modulation symbol block is located includes the time-domain symbol 0 to the time-domain symbol 13. Because the sub-carrier 1, the sub-carrier 3, the sub-carrier 5, the sub-carrier 7, the sub-carrier 9, and the sub-carrier 11 corresponding to the time-domain symbol 2 are used to carry the DMRS, and the sub-carrier 7 corresponding to the time-domain symbol 3 to the time-domain symbol 13 is used to carry the PTRS, it may be learned, with reference to FIG. 9D(a), that the sending device may add the DMRS to the sub-carrier 1, the sub-carrier 3, the sub-carrier 5, the sub-carrier 7, the sub-carrier 9, and the sub-carrier 11 corresponding to the time-domain symbol 2, and add the PTRS to the sub-carrier 7 corresponding to the time-domain symbol 3 to the time-domain symbol 13.

It may be understood that, in this embodiment of this application, before performing time-domain inter-symbol transformation processing on time-domain symbols, the sending device may alternatively first add a pilot signal to a time-domain symbol used to carry a pilot signal, and then perform time-domain inter-symbol transformation processing on the time-domain symbols used to carry data.

In a possible embodiment of this application, after step 1003, the method provided in this embodiment of this application may further include the following step.

Step 1004: The sending device sends the modulation symbol block to which the pilot signal has been added.

For example, the sending device may send, to the receiving device, the modulation symbol block to which the pilot signal has been added.

For example, as shown in FIG. 9D(a), when sending the modulation symbol block to which the pilot signal has been added, the sending device may perform processing such as precoding->OFDM transformation->upsampling->DAC on the modulation symbol block to which the pilot signal has been added.

It may be understood that, after the sending device sends the modulation symbol block to which the pilot signal has been added, the receiving device receives a to-be-demodulated symbol block to which the pilot signal has been added.

Step 1005: The receiving device obtains a first to-be-demodulated symbol block.

For example, a time-domain resource of the first to-be-demodulated symbol block includes M time-domain symbols, and a frequency-domain resource of the first to-be-demodulated symbol block includes N sub-carriers. The first to-be-demodulated symbol block includes M×N demodulation symbols.

For example, the receiving device may receive, from the sending device, the to-be-demodulated symbol block to which the pilot signal has been added. Then, the receiving device performs CPE/ICI coefficient estimation and phase noise suppression, to obtain the first to-be-demodulated symbol block. Specifically, after receiving the to-be-demodulated symbol block to which the pilot signal has been added, the sending device performs channel estimation by using a DMRS, and performs phase noise estimation by using a PTRS.

Specifically, in an example, with reference FIG. 9D(b), after receiving the to-be-demodulated symbol block to which the pilot signal has been added, the receiving device first performs signal demapping (mainly referring to separating a data signal, an RS signal, and the like from received signals), equalization (including channel estimation), CPE/ICI coefficient estimation, and phase noise suppression, to obtain the first to-be-demodulated symbol block. A solution for the phase noise suppression may be based on the descriptions in the foregoing embodiments, and details are not described herein again.

Step 1006: The receiving device performs time-domain inter-symbol inverse transformation processing on the first to-be-demodulated symbol block to obtain a target to-be-demodulated symbol block.

For example, a time-domain resource of the target to-be-demodulated symbol block includes M time-domain symbols, a frequency-domain resource of the target to-be-demodulated symbol block includes N sub-carriers, and the target to-be-demodulated symbol block includes M×N demodulation symbols.

The time-domain inter-symbol inverse transformation processing may be understood as: performing, by using a second transformation matrix, transformation processing on two or more of M time-domain symbols included in a time-domain resource of any to-be-demodulated symbol block (for example, the first to-be-demodulated symbol block, or a fourth to-be-demodulated symbol block described below). For example, the transformation processing is performed, by using a second transformation matrix, on two or more time-domain symbols that correspond to a sub-carrier used to carry data and that are in the M time-domain symbols included in the time-domain resource of the first to-be-demodulated symbol block. The second transformation matrix is an inverse of the first transformation matrix used by the sending device to perform time-domain inter-symbol transformation processing on the first modulation symbol block. That is, the second transformation matrix is an inverse transformation matrix of the first transformation matrix. The second transformation matrix includes one or more of a discrete Fourier transform DFT matrix, an inverse discrete Fourier transform IDFT matrix, an OCC matrix, or a permutation matrix. The second transformation matrix is the inverse transformation matrix of the first transformation matrix.

For example, as shown in FIG. 9D(a) and FIG. 9D(b), the first transformation matrix used by the sending device to perform time-domain inter-symbol transformation processing on the first modulation symbol block is a fast Fourier transform FFT matrix. In this case, the second transformation matrix is an inverse fast Fourier transform IFFT matrix. It may be understood that FFT is a type of DFT transformation, and IFFT is a type of IDFT transformation.

It may be understood that because the second transformation matrix is the inverse transformation matrix of the first transformation matrix, as shown in FIG. 9D(a), if the sending device performs, by using the first transformation matrix (for example, an FFT transform matrix), time-domain inter-symbol transformation processing on data $d_k$ carried on 11 sub-carriers 3 corresponding to the time-domain symbol 3 to the time-domain symbol 13, so that the data carried on the 11 sub-carriers 3 changes to $x_k$, as shown in FIG. 9D(b), the receiving device may perform, by using the second transformation matrix (for example, an IFFT transform matrix) that is the inverse of the first transformation matrix, time-domain inter-symbol inverse transformation processing on the data carried on the 11 sub-carriers 3 corresponding to the time-domain symbol 3 to the time-domain symbol 13, to obtain data $\tilde{d}_k$ carried on the 11 sub-carriers 3. It may be understood that the 11 sub-carriers 3 have a same frequency domain position.

Optionally, after obtaining the target to-be-demodulated symbol block, the receiving device may perform operations such as demodulation and decoding.

In this embodiment of this application, the sending device adopts an over-the-air phase noise compensation solution based on time-domain inter-symbol transformation processing with a modulation symbol block as a granularity. This helps mitigate fluctuation in inter-symbol phase noise power, and improves a compensation effect for ICI. This solution does not change an existing pilot structure and a phase noise compensation processing procedure, and can smooth inter-symbol phase noise power fluctuation and improve signal demodulation performance. This avoids increasing processing overheads and avoids resource waste of a receiving device (for example, a terminal).

In a possible embodiment of this application, before step 1002, the method provided in this embodiment of this application may further include:

The sending device determines whether to perform time-domain inter-symbol transformation processing on the first modulation symbol block.

In a possible implementation, the sending device may determine, based on a protocol specification or preconfigured information, whether to perform time-domain inter-symbol transformation processing on the first modulation symbol block.

It may be understood that the first modulation symbol block may be any one of one or more modulation symbol blocks included in a resource block corresponding to a to-be-sent signal of the sending device. Certainly, that the sending device determines whether to perform time-domain inter-symbol transformation processing on the first modulation symbol block may also be understood as: The sending device determines whether to perform time-domain inter-symbol transformation processing on the resource block corresponding to the to-be-sent signal. Certainly, there may be one or more resource blocks corresponding to the to-be-sent signal.

The following uses the first modulation symbol block as an example to describe how the sending device determines whether to perform time-domain inter-symbol transformation processing on the first modulation symbol block.

For example, the protocol specification or the preconfigured information indicates that time-domain inter-symbol transformation processing needs to be performed on the first modulation symbol block. In this case, the sending device may determine to perform time-domain inter-symbol transformation processing on the first modulation symbol block.

For example, the protocol specification or the preconfigured information indicates that time-domain inter-symbol transformation processing does not need to be performed on the first modulation symbol block. In this case, the sending device may determine that time-domain inter-symbol transformation processing does not need to be performed on the first modulation symbol block.

Certainly, in another possible implementation, in this embodiment of this application, the sending device may alternatively negotiate with the receiving device on whether to perform time-domain inter-symbol transformation processing.

When a signal modulation order is low, because inter-symbol phase noise power fluctuation is minor, time-domain inter-symbol transformation processing usually does not need to be performed. Therefore, in yet another possible implementation, the sending device may determine, based on an index value of a modulation and coding scheme corresponding to the first modulation symbol block, whether to perform time-domain inter-symbol transformation processing on the first modulation symbol block.

For example, as shown in Table 2, the sending device determines, when the index value of the modulation and coding scheme $MCS$ is greater than or equal to an index threshold $MCS_{TD}$, to perform time-domain inter-symbol transformation processing on the first modulation symbol block.

For example, the sending device determines, when the index value of the modulation and coding scheme $MCS$ is less than the index threshold $MCS_{TD}$, not to perform time-domain inter-symbol transformation processing on the first modulation symbol block.

In an example, the sending device has a table shown in Table 2.

Table 2

| MCS index | Transformation state |
|---|---|
| $MCS < MCS_{TD}$ | OFF |
| $MCS_{TD} \leq MCS$ | ON |

It may be understood that, when determining that $MCS < MCS_{TD}$, the sending device may determine that a state of time-domain inter-symbol transformation processing is a first state, where the first state, that is, [OFF], indicates that the time-domain inter-symbol transformation processing does not need to be performed. When determining that $MCS_{TD} \leq MCS$, the sending device may determine that the state of time-domain inter-symbol transformation processing is a second state, where the second state, that is, [ON], indicates that time-domain inter-symbol transformation processing needs to be performed.

When the sending device determines that time-domain inter-symbol transformation processing does not need to be performed on the first modulation symbol block, the sending device may add a pilot signal to a time-domain symbol that is used to carry a pilot signal in the first modulation symbol block, perform processing such as precoding->OFDM transformation->upsampling->DAC on the first modulation symbol block to which the pilot signal has been added, and send the first modulation symbol block. Correspondingly, when the sending device does not perform time-domain inter-symbol transformation processing on the first modulation symbol block, the receiving device does not perform time-domain inter-symbol inverse transformation processing when the receiving device receives the first to-be-demodulated symbol block.

Optionally, when the sending device determines that time-domain inter-symbol transformation processing does not need to be performed on the first modulation symbol block the sending device may send sixth indication information to the receiving device, to indicate, to the receiving device, that the sending device does not perform time-domain inter-symbol transformation processing on the first modulation symbol block. In this way, the receiving device does not perform time-domain inter-symbol inverse transformation processing on the received first to-be-demodulated symbol block. For example, the sixth indication information indicates that the state of time-domain inter-symbol transformation processing is the first state.

Certainly, in addition to that the sending device indicates, to the receiving device based on the sixth indication information, that the sending device does not perform time-domain inter-symbol transformation processing on the first modulation symbol block, the receiving device may alternatively determine, based on the protocol specification, the preconfigured information, or the index value of the modulation and coding scheme configured by the sending device, that the sending device does not perform time-domain inter-symbol transformation processing on the first modulation symbol block. For example, as shown in Table 2, when determining that $MCS < MCS_{TD}$, the receiving device may determine that the state of time-domain inter-symbol transformation processing is the first state, where the first state indicates that the receiving device does not need to perform time-domain inter-symbol inverse transformation processing.

It may be understood that, when the receiving device and the sending device respectively determine, based on the protocol specification, the preconfigured information, or the index value of $MCS$, that time-domain inter-symbol transformation processing does not need to be performed, the sending device may skip an action of sending the sixth indication information to the receiving device.

Time-domain inter-symbol transformation processing and time-domain inter-symbol inverse transformation processing need to be performed on a plurality of time-domain symbols. During actual processing, a delay generated is proportional to a symbol length. In a low-latency communication scenario, a shorter symbol length for transformation is usually expected. Therefore, piecewise processing may be performed on time-domain sub-carriers for PDSCH. For example, time-domain inter-symbol transformation processing may be performed, by using a symbol set as a unit, on time-domain symbols included in one or more RBs. In other words, time-domain inter-symbol transformation processing is performed on at least two time-domain symbols in one symbol set. When one RB corresponds to one first modulation symbol block, the sending device may consider M time-domain symbols in one first modulation symbol block as belonging to one symbol set, to perform time-domain inter-symbol transformation processing on the first modulation symbol block. Correspondingly, the receiving device may consider the first to-be-demodulated symbol block as one symbol set, to perform time-domain inter-symbol inverse transformation processing. However, when one RB includes one first modulation symbol block, and a length of one modulation symbol block is long, a delay generated during actual processing of time-domain inter-symbol processing performed by the sending device is usually high. Therefore, in an actual process, time-domain symbols in one RB, excluding time-domain symbols corresponding to sub-carriers that carry a DMRS and PDCCH respectively, may be partitioned into a plurality of modulation symbol blocks. Alternatively, when there are a plurality of RBs, each RB is considered as one modulation symbol block, and then, each modulation symbol block is considered as one symbol set, to perform piecewise set processing, thereby reducing a processing delay.

Therefore, in a possible embodiment of this application, the method provided in this embodiment of this application may further include: The sending device obtains one or more third modulation symbol blocks. A time-domain resource of the third modulation symbol block includes Y time-domain symbols. A frequency-domain resource of the third modulation symbol block includes Q sub-carriers. The third modulation symbol block includes Y×Q modulation symbols, where Y is greater than or equal to 2, and Q is greater than or equal to 1. The sending device performs time-domain inter-symbol transformation processing on each of the third modulation symbol blocks to obtain one or more fourth modulation symbol blocks. A time-domain resource of the fourth modulation symbol block includes Y time-domain symbols, and a frequency-domain resource of the fourth modulation symbol block includes Q sub-carriers. The fourth modulation symbol block includes Y×Q modulation symbols. Correspondingly, the receiving device may receive one or more fourth to-be-demodulated symbol blocks from the sending device, and then the receiving device performs time-domain inter-symbol inverse transformation processing on the received one or more fourth to-be-demodulated symbol blocks to obtain a fourth target to-be-demodulated symbol block corresponding to the one or more fourth to-be-demodulated symbol blocks.

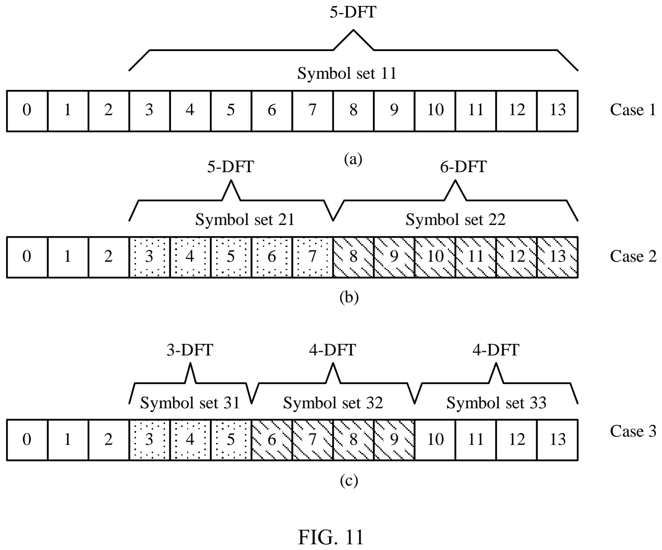

In an example, when one RB corresponds to one modulation symbol block (that is, the first modulation symbol block), a quantity of third modulation symbol blocks is 0. When one RB corresponds to a plurality of modulation symbol blocks, that is, the first modulation symbol block and the one or more third modulation symbol blocks, for example, one first modulation symbol block and one third modulation symbol block, as shown in (b) in FIG. 11, M may be equal to 5, and Y may be equal to 6. For example, when one RB corresponds to one first modulation symbol block and two third modulation symbol blocks, as shown in (c) in FIG. 11, M may be equal to 3, and Y may be equal to 4.

It may be understood that, if a to-be-sent signal corresponds to a plurality of RBs, and each RB corresponds to one modulation symbol block, that is, the first modulation symbol block corresponds to one RB, the third modulation symbol block also corresponds to one RB.

For a process in which the receiving device performs time-domain inter-symbol inverse transformation processing on the received one or more fourth to-be-demodulated symbol blocks to obtain the fourth target to-be-demodulated symbol block corresponding to the one or more fourth to-be-demodulated symbol blocks, refer to the specific implementation of step 1006. Details are not described herein again.

For a process in which the sending device obtains the third modulation symbol block and performs time-domain inter-symbol transformation processing on the third modulation symbol block, refer to the descriptions of step 1001 and step 1002. Details are not described herein again.

It may be understood that Q may be equal to N, and certainly, Q may not be equal to N. For example, when the first modulation symbol block and the third modulation symbol block correspond to a same RB, Q and N may be equal. When the first modulation symbol block and the third modulation symbol block correspond to different RBs, Q and N may not be equal.

In this embodiment of this application, the one or more third modulation symbol blocks and the first modulation symbol block may belong to a same RB. For example, as shown in FIG. 11, an example in which one RB includes 14 time-domain symbols in one slot (that is, a time-domain symbol 0 to a time-domain symbol 13) and one sub-carrier in frequency domain is used. If one RB includes two modulation symbol blocks, as shown in (b) in FIG. 11, the first modulation symbol block may correspond to a symbol set 21 (including the time-domain symbol 3 to the time-domain symbol 7), and the third modulation symbol block may correspond to a modulation symbol block 22 (including the time-domain symbol 8 to the time-domain symbol 13). For example, if one RB includes three modulation symbol blocks, as shown in (c) in FIG. 11, the first modulation symbol block may correspond to a symbol set 31 (including the time-domain symbol 3 to the time-domain symbol 5). The other two third modulation symbol blocks may respectively correspond to a symbol set 32 (including the time-domain symbol 6 to the time-domain symbol 9) and a modulation symbol block 33 (including the time-domain symbol 10 to the time-domain symbol 13).

Whether the sending device divides one RB into one modulation symbol block or a plurality of modulation symbol blocks may be determined by the sending device, or may be determined by the sending device according to a protocol specification.

Certainly, the sending device may alternatively map the to-be-sent signal to one resource block. If the one resource block includes K (where K is an integer greater than or equal to 1) RBs, each RB may be considered as one modulation symbol block.

In an example, that the sending device determines a quantity of time-domain symbols included in a time-domain resource of any modulation symbol block (for example, the first modulation symbol block) may be implemented in the following manners.

Manner 1: The sending device determines the quantity of, that is, M, time-domain symbols of the time-domain resource of the first modulation symbol block based on a requirement.

For example, in FIG. 11, as shown in (a) in FIG. 11, the sending device may partition 11 time-domain symbols, that is, the time-domain symbol 3 to the time-domain symbol 10, of the 14 time-domain symbols included in the slot of the one RB into one modulation symbol block (that is, a symbol set 11). Alternatively, as shown in (b) in FIG. 11, the sending device may partition the time-domain symbol 3 to the time-domain symbol 7 into one modulation symbol block (that is, the symbol set 21), and then partition the time-domain symbol 8 to the time-domain symbol 13 into another modulation symbol block (that is, the symbol set 22). Alternatively, as shown in (c) in FIG. 11, the sending device may partition the time-domain symbol 3 to the time-domain symbol 5 into one modulation symbol block (that is, the symbol set 31), then partition the time-domain symbol 6 to the time-domain symbol 9 into another modulation symbol block (that is, the symbol set 32), and partition the time-domain symbol 10 to the time-domain symbol 13 into another modulation symbol block (that is, the symbol set 33).

Manner 2: The sending device determines, based on a protocol-agreed maximum quantity $L_{max}$ of time-domain symbols in a modulation symbol block/symbol set and/or a protocol-agreed minimum quantity $L_{min}$ of time-domain symbols in a symbol set (modulation symbol block), the quantity of time-domain symbols included in the time-domain resource of the first modulation symbol block/third modulation symbol block.

When the maximum quantity $L_{max}$ of time-domain symbols in one modulation symbol block and/or the minimum quantity $L_{min}$ of time-domain symbols in one modulation symbol block is protocol-agreed, the sending device may select an appropriate length of the modulation symbol block, that is, a quantity of time-domain symbols included in a time-domain resource of the modulation symbol block.

For example, if the protocol specifies that one modulation symbol block includes a maximum of 11 time-domain symbols in time domain, the sending device may perform time-domain symbol partitioning based on any one of the cases shown in (a) to (c) in FIG. 11, to obtain one or more modulation symbol blocks.

For example, the protocol specifies that the maximum quantity of time-domain symbols in one modulation symbol block is five, and the minimum quantity of time-domain symbols in one modulation symbol block is three. In this case, the sending device may perform time-domain symbol partitioning based on the case shown in (b) in FIG. 11, to obtain two modulation symbol blocks.

For example, the protocol specifies that the minimum quantity of time-domain symbols in one modulation symbol block is three. In this case, the sending device may perform time-domain symbol partitioning based on the cases shown in (a) to (c) in FIG. 11, to obtain three modulation symbol blocks.

The maximum quantity $L_{max}$ of time-domain symbols is related to a maximum processing delay, and the minimum quantity $L_{min}$ of time-domain symbols is related to a worst smoothing effect.

Certainly, optionally, the protocol further specifies a maximum quantity of modulation symbol blocks corresponding to one RB. In this case, the sending device may further determine, based on the maximum quantity of modulation symbol blocks corresponding to one RB that is specified in the protocol and with reference to the maximum quantity of time-domain symbols/the minimum quantity of time-domain symbols of any modulation symbol block, a quantity of modulation symbol blocks corresponding to one RB.

For example, the protocol specifies that one RB includes a maximum of one modulation symbol block. In this case, the sending device may perform time-domain symbol partitioning based on the case shown in (a) in FIG. 11, that is, partition the time-domain symbol 3 to the time-domain symbol 13 in one RB into one modulation symbol block, that is, the first modulation symbol block.

Manner 3: The sending device determines, based on a protocol-agreed quantity of time-domain symbols included in a time-domain resource of a modulation symbol block, the quantity of time-domain symbols included in the time-domain resource of the first modulation symbol block or the third modulation symbol block.

It should be noted that, when one RB corresponds to one first modulation symbol block, it indicates that the M time-domain symbols corresponding to the first modulation symbol block all belong to one symbol set.

It should be noted that numbers of time-domain symbols that belong to a same modulation symbol block may be consecutive or inconsecutive. For example, as shown in (b) in FIG. 11, the time-domain symbol 3 to the time-domain symbol 7 belong to the symbol set 21 and correspond to the first modulation symbol block, and the time-domain symbol 8 to the time-domain symbol 13 belong to the symbol set 22 and correspond to the third modulation symbol block.

In a scenario in which only one symbol set is obtained through partitioning, a capability of smoothing phase noise power is strong, but a processing delay and a buffer are large and complexity is high. In a scenario of a plurality of symbol sets, a processing delay and a buffer are reduced, but a capability of smoothing phase noise is poorer and DFT is invoked for an excessive quantity of times.

Manner 4: The sending device determines the first modulation symbol block and/or the one or more third modulation symbol blocks based on one or more formats of modulation symbol blocks predefined in a protocol. For example, the format of the modulation symbol block predefined in the protocol is a format shown in (a) in FIG. 11. In this case, the sending device may use, as the M time-domain symbols of the first modulation symbol block, 11 time-domain symbols other than a time-domain symbol corresponding to a sub-carrier that carries a DMRS signal and a time-domain symbol corresponding to a sub-carrier that does not carry data or carries PDCCH in the 14 time-domain symbols corresponding to one RB. The format of the modulation symbol block predefined in the protocol is a format shown in (b) in FIG. 11. In this case, the sending device may divide one RB into two modulation symbol blocks shown in (b) in FIG. 11.

When the sending device determines one or more modulation symbol blocks corresponding to one RB, the sending device may perform time-domain inter-symbol transformation processing on a plurality of time-domain symbols in each modulation symbol block by using a modulation symbol block as a granularity.

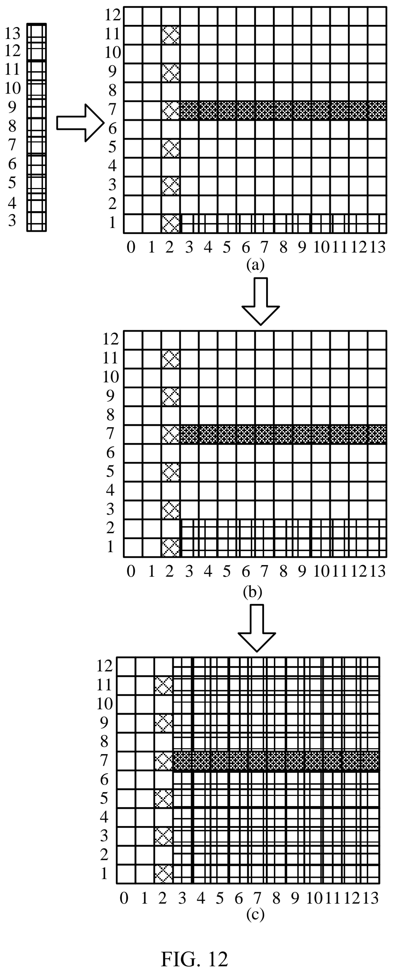

For example, as shown in (a) in FIG. 12, with reference to (a) in FIG. 11, an example in which the first modulation symbol block includes 11 time-domain symbols and 12 sub-carriers is used. Assuming that the 11 time-domain symbols, that is, a time-domain symbol 3 to a time-domain symbol 13, in the first modulation symbol block are used to carry data/PDCCH/PDSCH, as shown in (a) in FIG. 12, the sending device may first perform time-domain inter-symbol transformation processing on the time-domain symbol 3 to the time-domain symbol 13 corresponding to a sub-carrier 1. Then, as shown in (b) in FIG. 12, the sending device performs time-domain inter-symbol transformation processing on the time-domain symbol 3 to the time-domain symbol 13 corresponding to a sub-carrier 2, until time-domain inter-symbol transformation processing is performed on the time-domain symbol 3 to the time-domain symbol 13 corresponding to a last sub-carrier 12, as shown in (c) in FIG. 12. In this case, optionally, the sending device may further indicate, to the receiving device, that time-domain inter-symbol transformation processing is performed on the first modulation symbol block in ascending order of the numbers of the sub-carriers. In this way, when performing time-domain inter-symbol inverse transformation processing, the receiving device can determine to perform time-domain inter-symbol inverse transformation processing in ascending order of numbers of sub-carriers. To be specific, the receiving device first performs time-domain inter-symbol inverse transformation processing on the 11 time-domain symbols corresponding to the sub-carrier 1, then performs time-domain inter-symbol inverse transformation processing on the 11 time-domain symbols corresponding to the sub-carrier 2, and so forth, until time-domain inter-symbol inverse transformation processing is performed on the 11 time-domain symbols corresponding to all sub-carriers. It may be understood that because the sending device does not perform time-domain inter-symbol transformation processing on the 11 time-domain symbols corresponding to a sub-carrier 7, the receiving device does not perform time-domain inter-symbol inverse transformation processing on 11 time-domain symbols corresponding to a sub-carrier 7.

It may be understood that because the sub-carrier 7 corresponding to the time-domain symbol 3 to the time-domain symbol 13 is used to carry a PTRS, the sending device may not perform time-domain inter-symbol transformation processing on the sub-carrier 7 corresponding to the time-domain symbol 3 to the time-domain symbol 13.

It may be understood that, in the solution shown in FIG. 12, when performing time-domain inter-symbol transformation processing, the sending device sequentially performs time-domain inter-symbol transformation processing in ascending order of the numbers of the sub-carriers (for example, the sub-carrier 1 → the sub-carrier 12). Certainly, in an actual process, the sending device may alternatively perform time-domain inter-symbol transformation processing in descending order of the numbers of the sub-carriers (for example, the sub-carrier 12 → the sub-carrier 1). To be specific, the sending device first performs time-domain inter-symbol transformation processing on the time-domain symbol 3 to the time-domain symbol 13 corresponding to the sub-carrier 12, then performs time-domain inter-symbol transformation processing on the time-domain symbol 3 to the time-domain symbol 13 corresponding to a sub-carrier 11, and so forth, until time-domain inter-symbol transformation processing is performed on the time-domain symbol 3 to the time-domain symbol 13 corresponding to the sub-carrier 1. In this case, optionally, the sending device may further indicate, to the receiving device, that time-domain inter-symbol transformation processing is performed on the first modulation symbol block in descending order of the numbers of the sub-carriers. In this way, when performing time-domain inter-symbol inverse transformation processing, the receiving device can determine to perform time-domain inter-symbol inverse transformation processing in descending order of the numbers of the sub-carriers.

It may be understood that, when the receiving device and the sending device jointly negotiate or a protocol specifies that processing is performed on a same modulation symbol block in descending order or ascending order of numbers of sub-carriers, the sending device may alternatively omit a process of indicating a sequence to the receiving device.

It may be understood that, when performing time-domain inter-symbol transformation processing, the sending device may alternatively first perform time-domain inter-symbol transformation processing on time-domain symbols corresponding to an even-numbered sub-carrier, and then perform time-domain inter-symbol transformation processing on time-domain symbols corresponding to an odd-numbered sub-carrier. For example, the sending device may first perform time-domain inter-symbol transformation processing on the time-domain symbol 3 to the time-domain symbol 13 corresponding to the sub-carrier 1, then perform time-domain inter-symbol transformation processing on the time-domain symbol 3 to the time-domain symbol 13 corresponding to the sub-carrier 3, then perform time-domain inter-symbol transformation processing on the time-domain symbol 3 to the time-domain symbol 13 corresponding to the sub-carrier 5, and so forth, and finally perform time-domain inter-symbol transformation processing on the time-domain symbol 3 to the time-domain symbol 13 corresponding to the sub-carrier 11. After processing the odd-numbered sub-carrier, the sending device may perform time-domain inter-symbol transformation processing on the time-domain symbol 3 to the time-domain symbol 13 corresponding to the sub-carrier 2, then perform time-domain inter-symbol transformation processing on the time-domain symbol 3 to the time-domain symbol 13 corresponding to the sub-carrier 4, then perform time-domain inter-symbol transformation processing on the time-domain symbol 3 to the time-domain symbol 13 corresponding to the sub-carrier 6, and so forth, and finally perform time-domain inter-symbol transformation processing on the time-domain symbol 3 to the time-domain symbol 13 corresponding to the sub-carrier 12. It may be understood that, in this case, the sending device may indicate, to the receiving device, that time-domain inter-symbol transformation processing is first performed, in ascending order of the numbers of the sub-carriers, on the time-domain symbols corresponding to the even-numbered sub-carrier, and time-domain inter-symbol transformation processing is then performed, in ascending order of the numbers of the sub-carriers, on the time-domain symbols corresponding to the odd-numbered sub-carrier.

It should be noted that the sending device may perform time-domain inter-symbol transformation processing on the time-domain symbols in any sequence. To make it convenient for the receiving device to perform time-domain inter-symbol inverse transformation processing, the sending device may further notify the receiving device of the sequence in which the sending device performs time-domain inter-symbol transformation processing. For example, if time-domain inter-symbol transformation processing is performed in ascending order of the numbers of the sub-carriers, it is indicated, to the receiving device, that time-domain inter-symbol transformation processing is performed in ascending order of the numbers of the sub-carriers. In this way, when receiving a to-be-demodulated symbol block, the receiving device can know that time-domain inter-symbol inverse transformation processing is performed in ascending order of numbers of sub-carriers. For example, the receiving device first performs time-domain inter-symbol inverse transformation processing on the time-domain symbol 3 to the time-domain symbol 13 corresponding to the sub-carrier 1, then performs time-domain inter-symbol inverse transformation processing on the time-domain symbol 3 to the time-domain symbol 13 corresponding to the sub-carrier 6, and so forth, and finally performs time-domain inter-symbol inverse transformation processing on the time-domain symbol 3 to the time-domain symbol 13 corresponding to the sub-carrier 12.

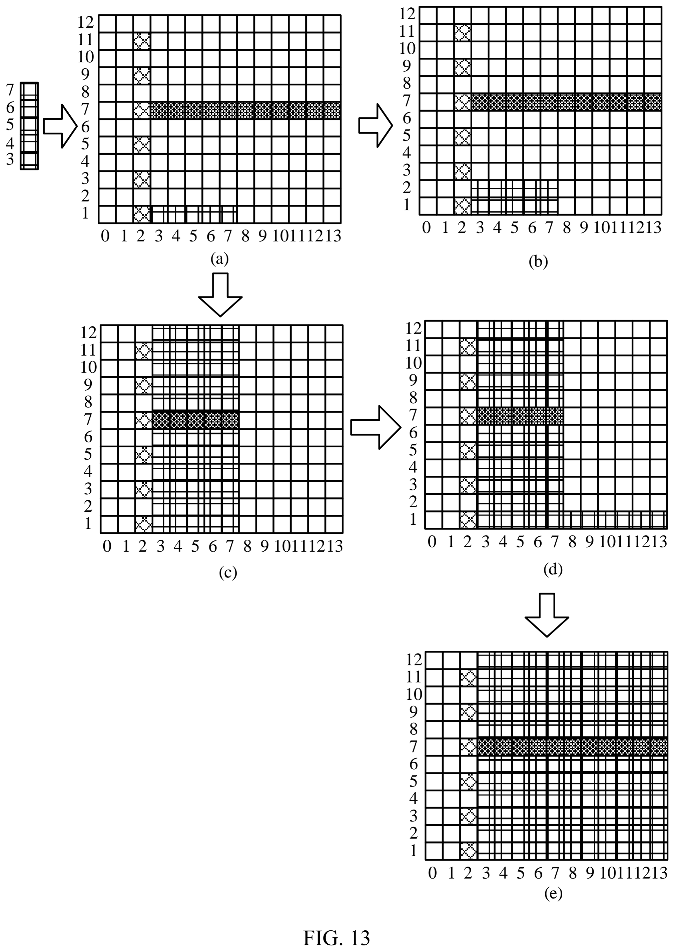

For example, as shown in (a) in FIG. 13, with reference to (b) in FIG. 11, it is assumed that the sending device determines to partition a time-domain symbol 3 to a time-domain symbol 13 in one RB into two modulation symbol blocks, in other words, the symbol set 21 corresponds to the first modulation symbol block and the symbol set 22 corresponds to the third modulation symbol block. The quantity of time-domain symbols included in the time-domain resource of the first modulation symbol block is five, that is, the time-domain symbol 3 to the time-domain symbol 7. The quantity of time-domain symbols included in the time-domain resource of the third modulation symbol block is six, that is, the time-domain symbol 8 to the time-domain symbol 13. An example in which the sending device performs time-domain inter-symbol transformation processing in ascending order of numbers of sub-carriers is still used. For example, the sending device may first perform time-domain inter-symbol transformation processing on the first modulation symbol block, and then perform time-domain inter-symbol transformation processing on the third modulation symbol block. Specifically, as shown in (a) in FIG. 13, the sending device first performs time-domain inter-symbol transformation processing on the time-domain symbol 3 to the time-domain symbol 7 corresponding to a sub-carrier 1 of the first modulation symbol block, as shown in (b) in FIG. 13, the sending device may then perform time-domain inter-symbol transformation processing on the time-domain symbol 3 to the time-domain symbol 7 corresponding to a sub-carrier 2 of the first modulation symbol block, then, perform time-domain inter-symbol transformation processing on the time-domain symbol 3 to the time-domain symbol 7 corresponding to a sub-carrier 3 of the first modulation symbol block, and so forth, until time-domain inter-symbol transformation processing is performed on the time-domain symbol 3 to the time-domain symbol 7 corresponding to a sub-carrier 12 of the first modulation symbol block, as shown in (c) in FIG. 13.

As shown in (d) in FIG. 13, the sending device may perform time-domain inter-symbol transformation processing on the time-domain symbol 8 to the time-domain symbol 13 corresponding to a sub-carrier 1 of the third modulation symbol block. Then, the sending device performs time-domain inter-symbol transformation processing on the time-domain symbol 8 to the time-domain symbol 13 corresponding to a sub-carrier 2 of the third modulation symbol block. Then, the sending device performs time-domain inter-symbol transformation processing on the time-domain symbol 8 to the time-domain symbol 13 corresponding to a sub-carrier 3 of the third modulation symbol block, and so forth, until time-domain inter-symbol transformation processing is performed on the time-domain symbol 8 to the time-domain symbol 13 corresponding to a sub-carrier 12 of the third modulation symbol block, as shown in (e) in FIG. 13.

Certainly, in the solution shown in FIG. 13, the sending device may alternatively first perform time-domain inter-symbol transformation processing on the time-domain symbols in the third modulation symbol block, and then perform time-domain inter-symbol transformation processing on the time-domain symbols in the first modulation symbol block.

It may be understood that, when one RB includes a plurality of modulation symbol blocks, the sending device may further indicate, to the receiving device, a sequence for sequentially performing time-domain inter-symbol transformation processing on the modulation symbol blocks. Certainly, the sending device may alternatively perform time-domain inter-symbol transformation processing on the plurality of modulation symbol blocks in parallel. In other words, when performing time-domain inter-symbol transformation processing on the first modulation symbol block, the sending device also performs time-domain inter-symbol transformation processing on the third modulation symbol block.

Specifically, the sending device may perform, by using a first transformation matrix corresponding to each modulation symbol block, time-domain inter-symbol transformation processing on time-domain symbols in the modulation symbol block. Correspondingly, the receiving device may perform, by using a second transformation matrix corresponding to any to-be-demodulated symbol block, time-domain inter-symbol inverse transformation processing on time-domain symbols in the any to-be-demodulated symbol block.

For example, a first transformation matrix corresponding to the first modulation symbol block is an FFT matrix. In this case, the sending device may perform time-domain inter-symbol transformation processing on the time-domain symbols in the first modulation symbol block by using the FFT matrix. A first transformation matrix corresponding to the third modulation symbol block is an IFFT matrix. In this case, the sending device may perform time-domain inter-symbol transformation processing on the time-domain symbols in the third modulation symbol block by using the IFFT matrix. Assuming that time-domain symbols corresponding to a same sub-carrier at the sending device are $d_s$ with a dimension of $L_s \times 1$, and a first transformation matrix used by the sending device is $F_s$, a transformed signal is $x_s = F_s d_s$, a second transformation matrix, that is, an inverse transformation matrix, used by the receiving device is $F_s^{-1}$, and after inverse transformation processing, $\tilde{d}_s = F_s^{-1} x_s = F_s^{-1} F_s d_s$.

In an example, the first transformation matrix is protocol-agreed or configured by default, or the first transformation matrix is determined based on a quantity of time-domain symbols included in a time-domain resource of each modulation symbol block, or the first transformation matrix is determined based on a quantity of sub-carriers included in a frequency-domain resource of each modulation symbol block. Correspondingly, the second transformation matrix is protocol-agreed or configured by default, or the second transformation matrix is determined based on a quantity of time-domain symbols included in a time-domain resource of each to-be-demodulated symbol block, or the second transformation matrix is determined based on a quantity of sub-carriers included in a frequency-domain resource of each to-be-demodulated symbol block.

The following describes how the sending device determines a first transformation matrix used to perform time-domain inter-symbol transformation processing on time-domain symbols in each modulation symbol block.

A transformation matrix used to perform time-domain inter-symbol transformation processing on time-domain symbols in any modulation symbol block is protocol-agreed or configured by default. Alternatively, a transformation matrix used to perform time-domain inter-symbol transformation processing on time-domain symbols in any modulation symbol block is determined based on a quantity of time-domain symbols in the any modulation symbol block.

In an implementation, when a quantity of time-domain symbols of a modulation symbol block $p_s$ is an integer power of 2, by default, a first transformation matrix $F_s$ is a symmetric matrix formed by an orthogonal cover code (orthogonal cover code, OCC). In another case, the first transformation matrix $F_s$ is a/an DFT/IDFT matrix by default.

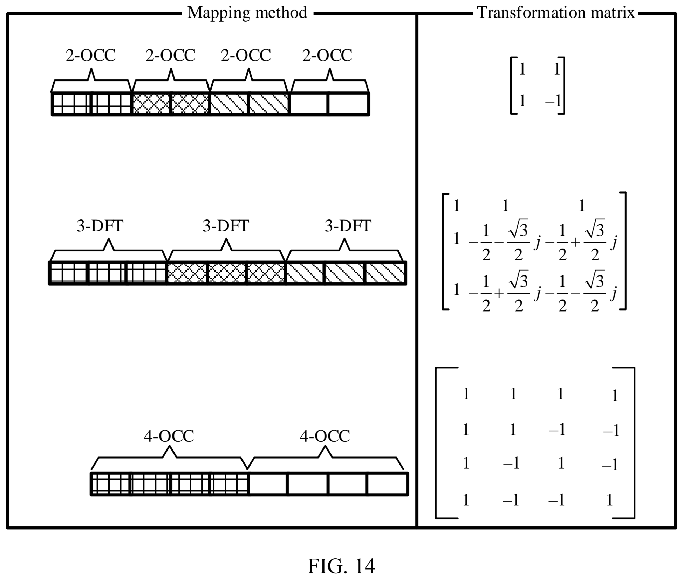

Specifically, as shown in FIG. 14, when a quantity of time-domain symbols in one modulation symbol block is equal to two or four, $F_s$ is a symmetric matrix formed by 1 or -1, and a corresponding second transformation matrix (that is, an inverse transformation matrix) at the receiving device is $F_s^{-1} = \frac{1}{L_s} F_s$.

When a length of the modulation symbol block (that is, the quantity of time-domain symbols included in a time-domain resource of the modulation symbol block in time domain) is equal to three, the first transformation matrix $F_s$ is a DFT transformation matrix, where each element $[F_s]_{mn} = e^{-j2\pi \frac{mn}{L_s}}$, and correspondingly, the inverse transformation matrix at the receiving device is $F_s^{-1} = \frac{1}{L_s} F_s^{\mathrm{H}}$, where $(\cdot)^{\mathrm{H}}$ represents a conjugate transpose.

To make it convenient for the receiving device to determine whether time-domain inter-symbol inverse transformation processing needs to be performed on a modulation symbol block sent by the sending device, the sending device in this embodiment of this application may indicate, to the receiving device, whether to perform time-domain inter-symbol transformation processing. For example, the sending device may send first indication information to the receiving device, and correspondingly, the receiving device may receive the first indication information.

In an example, the first indication information indicates that the sending device performs time-domain inter-symbol transformation processing, or indicates the receiving device to perform time-domain inter-symbol inverse transformation processing.

For example, the first indication information is a second indicator. For example, the second indicator indicates that the state of time-domain inter-symbol transformation processing is the second state. In this way, the receiving device can determine, based on the first indication information, to perform time-domain inter-symbol inverse transformation processing on the modulation symbol block sent by the sending device.

In an example, the sending device may indicate an ON/OFF state of time-domain inter-symbol transformation to the receiving device in an explicit manner by using signaling such as downlink control information (downlink control information, DCI)/radio resource control (radio resource control, RRC). For example, the signaling such as downlink control information DCI/RRC may include the first indication information.

In an example, the first indication information may be sent before step 1001, or the first indication information may be sent in a process in which the sending device sends, to the receiving device, the second modulation symbol block to which the pilot signal has been added, or the sending device may send the first indication information after sending the second modulation symbol block to which the pilot signal has been added. This is not limited in this embodiment of this application.

Correspondingly, the receiving device may determine, based on the first indication information, that the sending device has performed time-domain inter-symbol transformation processing.

Certainly, for the receiving device, the receiving device may further determine, in the following manner, that the sending device has performed time-domain inter-symbol transformation processing, thereby determining that the time-domain inter-symbol inverse transformation processing needs to be performed.

For example, the receiving device determines, based on the index value of the MCS configured by the sending device, whether the sending device has performed time-domain inter-symbol transformation processing.

For a specific implementation of how the receiving device determines, based on the index value of the MCS configured by the sending device, whether the sending device has performed time-domain inter-symbol transformation processing, refer to the descriptions in Table 2. Details are not described herein again.

It may be understood that, in this embodiment of this application, a process in which the sending device indicates, by using the first indication information/the sixth indication information, whether the sending device performs time-domain inter-symbol transformation processing may be referred to as an explicit indication manner. A manner in which the receiving device determines, by using the index value of the MCS, the protocol specification, or the preconfigured information, whether the receiving device performs time-domain inter-symbol transformation processing is referred to as an implicit indication manner. In the case in which the sending device provides the explicit indication, a priority of the explicit indication is higher than a priority of the implicit indication. In other words, for the receiving device, whether the sending device has performed time-domain inter-symbol transformation processing is determined based on the first indication information or the sixth indication information.

In a possible embodiment of this application, when performing time-domain inter-symbol inverse transformation processing, to make it convenient for the receiving device to perform time-domain inter-symbol inverse transformation processing by using an inverse transformation matrix (for example, a second transformation matrix) that is an inverse of the first transformation matrix,

in an example, the first indication information further indicates a length of each modulation symbol block in one or more modulation symbol blocks (including the first modulation symbol block) and/or a first transformation matrix corresponding to each modulation symbol block. Alternatively, the first indication information indicates a second transformation matrix corresponding to each modulation symbol block. In this way, the receiving device does not need to determine the second transformation matrix based on the first transformation matrix corresponding to each modulation symbol block.

Correspondingly, the receiving device determines, based on the first indication information, the M time-domain symbols included in the time-domain resource of the first to-be-demodulated symbol block; and/or the receiving device determines, based on the first indication information, the second transformation matrix corresponding to the first to-be-demodulated symbol block, where the second transformation matrix is the inverse transformation matrix of the first transformation matrix used to perform time-domain inter-symbol transformation processing on the first modulation symbol block. The receiving device performs, by using the second transformation matrix, time-domain inter-symbol inverse transformation processing on the M time-domain symbols included in the time-domain resource of the first to-be-demodulated symbol block, to obtain the target to-be-demodulated symbol block.

It may be understood that, when the sending device does not indicate the second transformation matrix by using the first indication information, the receiving device may determine, based on a quantity of time-domain symbols corresponding to each to-be-demodulated symbol block, a second transformation matrix for the to-be-demodulated symbol block.

The receiving device may alternatively determine, based on the first indication information, to perform time-domain inter-symbol inverse transformation processing and/or determine a length of each to-be-demodulated symbol block (including the first to-be-demodulated symbol block) and/or a first transformation matrix corresponding to each to-be-demodulated symbol block. Then, the receiving device determines, based on the first transformation matrix corresponding to the first modulation symbol block indicated by the first indication information, the second transformation matrix corresponding to the first to-be-demodulated symbol block, where the second transformation matrix is the inverse transformation matrix of the first transformation matrix. The receiving device performs, by using the second transformation matrix, the time-domain inter-symbol inverse transformation processing on the M time-domain symbols included in the time-domain resource of the first to-be-demodulated symbol block, to obtain the target to-be-demodulated symbol block.

In this embodiment of this application, the sending device may perform time-domain inter-symbol transformation processing on one or more modulation symbol blocks, to obtain a second modulation symbol block corresponding to each modulation symbol block. Quantities of time-domain symbols included in time-domain resources of modulation symbol blocks may be the same or may be different. For example, the one or more modulation symbol blocks include at least the first modulation symbol block.

When there are 14 time-domain symbols in one slot, if one RB includes one modulation symbol block, and an example in which M=11 and N is greater than or equal to one is used, it may be considered that the sending device performs time-domain inter-symbol transformation processing on one modulation symbol block, that is, the first modulation symbol block. In this case, it may also be considered that 11 time-domain symbols corresponding to the first modulation symbol block belong to one symbol set.

When there are 14 time-domain symbols in one slot, if there are 11 time-domain symbols on which time-domain inter-symbol transformation processing needs to be performed, if M is less than 11 and N is greater than or equal to one, the sending device may perform time-domain inter-symbol transformation processing on a plurality of modulation symbol blocks, for example, the first modulation symbol block and one or more third modulation symbol blocks. In this case, it may be considered that time-domain symbols in each of the plurality of modulation symbol blocks belong to one symbol set. For example, as shown in (b) in FIG. 11, it may be considered that the M time-domain symbols included in the first modulation symbol block are the time-domain symbol 3 to the time-domain symbol 7. The Y time-domain symbols included in the third modulation symbol block include the time-domain symbol 8 to the time-domain symbol 13. It may also be considered that the M time-domain symbols included in the first modulation symbol block are the time-domain symbol 3 to the time-domain symbol 7, which belong to the symbol set 21. The Y time-domain symbols included in the third modulation symbol block include the time-domain symbol 8 to the time-domain symbol 13, which belong to the symbol set 22. For example, as shown in (c) in FIG. 11, an example in which M=3 and Y=4 is used. It may be considered that the sending device performs time-domain inter-symbol transformation processing on three modulation symbol blocks. For example, the sending device performs time-domain inter-symbol transformation processing on three time-domain symbols (that is, the time-domain symbol 3 to the time-domain symbol 5) included in the first modulation symbol block. The sending device performs time-domain inter-symbol transformation processing on four time-domain symbols (that is, the time-domain symbol 6 to the time-domain symbol 9) included in the third modulation symbol block. The sending device performs time-domain inter-symbol transformation processing on four time-domain symbols (that is, the time-domain symbol 10 to the time-domain symbol 13) included in another third modulation symbol block. It may also be considered that three time-domain symbols (that is, the time-domain symbol 3 to the time-domain symbol 5) included in the first modulation symbol block belong to the symbol set 31. Four time-domain symbols (that is, the time-domain symbol 6 to the time-domain symbol 9) included in the third modulation symbol block belong to the symbol set 32. Four time-domain symbols (that is, the time-domain symbol 10 to the time-domain symbol 13) included in another third modulation symbol block belong to the symbol set 33.

It should be noted that, in FIG. 11, an example in which lengths of a plurality of third modulation symbol blocks are the same is used. During specific implementation, the lengths of the plurality of third modulation symbol blocks may alternatively be different. This is not limited in this embodiment of this application.

Correspondingly, in an example, step 1006 in this embodiment of this application may be implemented in the following manner:

The sending device receives the first indication information.

The receiving device determines, based on the first indication information, the M time-domain symbols included in the time-domain resource of the first to-be-demodulated symbol block; and/or the sending device determines, based on the first transformation matrix corresponding to the first modulation symbol block indicated by the first indication information, the second transformation matrix corresponding to the first to-be-demodulated symbol block. The second transformation matrix is the inverse transformation matrix of the first transformation matrix. The receiving device performs time-domain inter-symbol inverse transformation processing on the first to-be-demodulated symbol block by using the second transformation matrix, to obtain the target to-be-demodulated symbol block. Specifically, the receiving device performs, by using the second transformation matrix, time-domain inter-symbol inverse transformation processing on the M time-domain symbols included in the time-domain resource of the first to-be-demodulated symbol block, to obtain the target to-be-demodulated symbol block.

It may be understood that, when the sending device determines, based on Table 2, that or a protocol specifies that time-domain inter-symbol inverse transformation processing needs to be performed, and the quantity of time-domain symbols included in the time-domain resource of each modulation symbol block is determined by the protocol or the receiving device and the sending device by default, the first indication information may alternatively be omitted. That is, the sending device may indicate, by using the first indication information, the second transformation matrix corresponding to the first to-be-demodulated symbol block. Certainly, the sending device may alternatively use information other than the first indication information, for example, second indication information, to indicate, to the receiving device, the quantity of time-domain symbols included in the time-domain resource of any modulation symbol block, and use third indication information to indicate, to the receiving device, a first transformation matrix corresponding to the any modulation symbol block.

The first indication information and the second indication information/the third indication information may be carried in a same message, or may be carried in different messages. This is not limited in this embodiment of this application.

In a possible embodiment of this application, the method provided in this embodiment of this application may further include:

The sending device sends the second indication information and/or the third indication information to the receiving device. Correspondingly, the receiving device receives the second indication information and/or the third indication information from the sending device.

For example, the second indication information indicates a quantity of time-domain symbols included in a time-domain resource of each modulation symbol block in one or more modulation symbol blocks, or the second indication information indicates a start time-domain symbol and/or an end time-domain symbol of a time-domain resource of each modulation symbol block, or the second indication information indicates start data and/or end data of a frequency-domain resource of each modulation symbol block.

For example, the second indication information may indicate a quantity of time-domain symbols included in a time-domain resource of each modulation symbol block in the first modulation symbol block and the one or more third modulation symbol blocks, or the second indication information indicates a start time-domain symbol and/or an end time-domain symbol of a time-domain resource of each modulation symbol block in the first modulation symbol block and the one or more third modulation symbol blocks, or the second indication information indicates start data and/or end data of a frequency-domain resource of each modulation symbol block in the first modulation symbol block and the one or more third modulation symbol blocks.

For example, the third indication information is used by the receiving device to determine a second transformation matrix used to perform time-domain inter-symbol inverse transformation processing on the first to-be-demodulated symbol block and/or one or more third to-be-demodulated symbol blocks.

Specifically, the third indication information may indicate information about the first transformation matrix corresponding to each modulation symbol block. For example, the third indication information may indicate a first transformation matrix corresponding to any modulation symbol block, or indicate an index/number of the first transformation matrix corresponding to each modulation symbol block, so that the receiving device determines, from one or more transformation matrices based on the index/number of the first transformation matrix, the specific first transformation matrix corresponding to each modulation symbol block.

The third indication information is used by the receiving device to determine the second transformation matrix used to perform time-domain inter-symbol inverse transformation processing on each modulation symbol block.

In an implementation, the sending device indicates a length $L_s$ of each modulation symbol block by using the second indication information. For example, as shown in (a) in FIG. 11, $[L_0] = [11]$, as shown in (b) in FIG. 11, $[L_0, L_1] = [5, 6]$, and as shown in (c) in FIG. 11, $[L_0, L_1, L_2] = [3, 4, 4]$.

It may be understood that, in this embodiment of this application, the length of one modulation symbol block is used to reflect a quantity of time-domain symbols included in a time-domain resource of the modulation symbol block. For example, the time-domain resource of the first modulation symbol block includes the M time-domain symbols. In this case, a length of the first modulation symbol block is M.

In another implementation, the sending device indicates the start time-domain symbol $I_s$ and/or the end time-domain symbol $J_s$ of each modulation symbol block by using the second indication information, in a form similar to a bitmap. For example, the second indication information includes L bits. L is less than or equal to M. The L bits include one or more first bits, and a remaining bit is a second bit. The first bit represents a start symbol/an end symbol of each modulation symbol block. A quantity of first bits indicates a quantity of modulation symbol blocks.

As shown in (a) in FIG. 11, the second indication information is [10000000000]. In this way, the receiving device can determine, based on [10000000000], that the first to-be-demodulated symbol block corresponds to one symbol set, and time-domain inter-symbol inverse transformation processing needs to be performed on 11 time-domain symbols in the first to-be-demodulated symbol block.

As shown in (b) in FIG. 11, the second indication information is [10000100000]. In this way, the receiving device can determine, based on [10000100000], that time-domain inter-symbol inverse transformation processing needs to be performed on two to-be-demodulated symbol blocks, for example, the first to-be-demodulated symbol block and one third to-be-demodulated symbol block. In addition, a time-domain symbol 3 to a time-domain symbol 8 belong to one to-be-demodulated symbol block, that is, the first to-be-demodulated symbol block, and a time-domain symbol 9 to a time-domain symbol 13 belong to one to-be-demodulated symbol block, that is, the third to-be-demodulated symbol block.

As shown in (c) in FIG. 11, the second indication information is [10010001000]. In this way, the receiving device can determine, based on [10010001000], that time-domain inter-symbol inverse transformation processing needs to be performed on three to-be-demodulated symbol blocks, for example, the first to-be-demodulated symbol block and two third to-be-demodulated symbol blocks. In addition, a time-domain symbol 3 to a time-domain symbol 5 belong to one to-be-demodulated symbol block, that is, the first to-be-demodulated symbol block, a time-domain symbol 6 to a time-domain symbol 9 belong to one to-be-demodulated symbol block, that is, one third to-be-demodulated symbol block, and a time-domain symbol 10 to a time-domain symbol 13 belong to one to-be-demodulated symbol block, that is, one third to-be-demodulated symbol block.

That is, a position of a start symbol of each to-be-demodulated symbol block is indicated by '1', and a quantity of '1' is a quantity of to-be-demodulated symbol blocks. Certainly, a position of an end symbol may alternatively be indicated. Alternatively, both the position of the start symbol and the position of the end symbol may be indicated. This is not limited herein.

For example, the sending device may send the second indication information to the receiving device, but does not send the third indication information. Alternatively, the sending device sends both the second indication information and the third indication information to the receiving device. Alternatively, the sending device sends the third indication information to the receiving device, but does not send the second indication information.

For example, the second indication information and the third indication information may be carried in different messages or signaling and sent by the sending device to the receiving device, or the third indication information and the second indication information may be carried in a same message and sent by the sending device to the receiving device.

The following describes how the third indication information indicates a transformation matrix for time-domain symbols.

In addition to performing DFT/IDFT processing on the time-domain symbols, the sending device may further perform orthogonal transformation on the time-domain symbols to smooth phase noise power. Therefore, the sending device can specify a specific form of the transformation matrix. Assuming that time-domain symbols corresponding to a same sub-carrier at the sending device are $d_s$, with a dimension of $L_s \times 1$, and a first transformation matrix used by the sending device is $F_s$, a transformed signal is $x_s = F_s d_s$, a second transformation matrix, that is, an inverse transformation matrix, used by the receiving device is $F_s^{-1}$, and after the receiving device performs time-domain inter-symbol inverse transformation processing on the time-domain symbols corresponding to the sub-carrier, $\tilde{d}_s = F_s^{-1} x_s = F_s^{-1} F_s d_s$.

In an implementation, when a quantity of time-domain symbols of one modulation symbol block $p_s$ is an integer power of 2, by default, a first transformation matrix $F_s$ is a symmetric matrix formed by an orthogonal cover code (orthogonal cover code, OCC). In another case, the first transformation matrix $F_s$ is a/an DFT/IDFT matrix by default.

Specifically, as shown in FIG. 14, when a length of the modulation symbol block is equal to two or four, $F_s$ is a symmetric matrix formed by 1 or -1, and a corresponding second transformation matrix (that is, an inverse transformation matrix) at the receiving device is $F_s^{-1} = \dfrac{1}{L_s} F_s$. When a length of the modulation symbol block is equal to three, $F_s$ is a DFT transformation matrix, where each element $[F_s]_{mn} = e^{-j2\pi \frac{mn}{L_s}}$, and correspondingly, the inverse transformation matrix is $F_s^{-1} = \dfrac{1}{L_s} F_s^{H}$, where $(\cdot)^{H}$ represents a conjugate transpose. Optionally, a protocol predefines or a base station indicates a transformation matrix set $\phi$, and the transformation matrix set $\phi$ includes one or more transformation matrices. $\phi$ includes transformation matrices $F_s$ corresponding to lengths of different modulation symbol blocks. When the sending device indicates a rule for a modulation symbol block, the receiving device may directly obtain the second transformation matrix from $\phi$ based on the length of each to-be-demodulated symbol block.

In an example, each transformation matrix in the transformation matrix set corresponds to a length of one modulation symbol block/a quantity of time-domain symbols in the modulation symbol block. For example, lengths of modulation symbol blocks corresponding to different transformation matrices are different, or lengths of modulation symbol blocks corresponding to some transformation matrices in one or more transformation matrices are the same.

For example, as shown in (c) in FIG. 11, a plurality of modulation symbol blocks determined by the sending device include the first modulation symbol block (that is, the symbol set 31), the third modulation symbol block (that is, the symbol set 32), and the another third modulation symbol block (that is, the symbol set 33). A quantity of symbols in the symbol set 31 is three. In this case, the first transformation matrix corresponding to the first modulation symbol block may be a DFT transformation matrix, as shown in FIG. 14. Quantities of symbols in the symbol set 32 and the symbol set 33 are both four. In this case, the first transformation matrix corresponding to the third modulation symbol block may be a symmetric matrix formed by 1 or -1, as shown in FIG. 14.

Specifically, when the receiving device has the transformation matrix set $\phi$, if the sending device sends the second indication information to the receiving device, the receiving device may determine, based on a length of each modulation symbol block/the quantity of time-domain symbols in each modulation symbol block that is indicated by the second indication information, the first transformation matrix or the second transformation matrix corresponding to the modulation symbol block. When the receiving device determines the first transformation matrix corresponding to each modulation symbol block, the receiving device may determine, based on the first transformation matrix corresponding to any modulation symbol block, a second transformation matrix corresponding to a to-be-demodulated symbol block corresponding to the any modulation symbol block, to perform, by using a second transformation matrix corresponding to each to-be-demodulated symbol block, time-domain inter-symbol inverse transformation processing on time-domain symbols in the to-be-demodulated symbol block.

In another implementation, the sending device may directly indicate, by using the third indication information, the first transformation matrix corresponding to each to-be-demodulated symbol block. As shown in Table 3 below, when the third indication information is A, it indicates that a transformation matrix of a modulation symbol block is a DFT matrix; when the third indication information is B, a total quantity of modulation symbol blocks is one, and a transformation type is F_k1; when the third indication information is C, a total quantity of modulation symbol blocks is two, and a transformation type is F_(k2-1), F_(k2-2); and other cases are deduced by analogy.

Table 3

| Indication information | Transformation type | Piecewise size $S$ |
|---|---|---|
| A | DFT | all |
| B | $[F_{k1}]$ | 1 |
| C | $[F_{k2\text{-}1}, F_{k2\text{-}2}]$ | 2 |
| ... | ... | ... |

In a possible implementation of this application, the M time-domain symbols include a first time-domain symbol. The first time-domain symbol is used to carry a pilot signal. In this case, the sending device performs time-domain inter-symbol transformation processing on time-domain symbols other than the first time-domain symbol in the M time-domain symbols. Correspondingly, the receiving device performs time-domain inter-symbol inverse transformation processing on time-domain symbols other than the first time-domain symbol in the M time-domain symbols corresponding to the first to-be-demodulated symbol block.

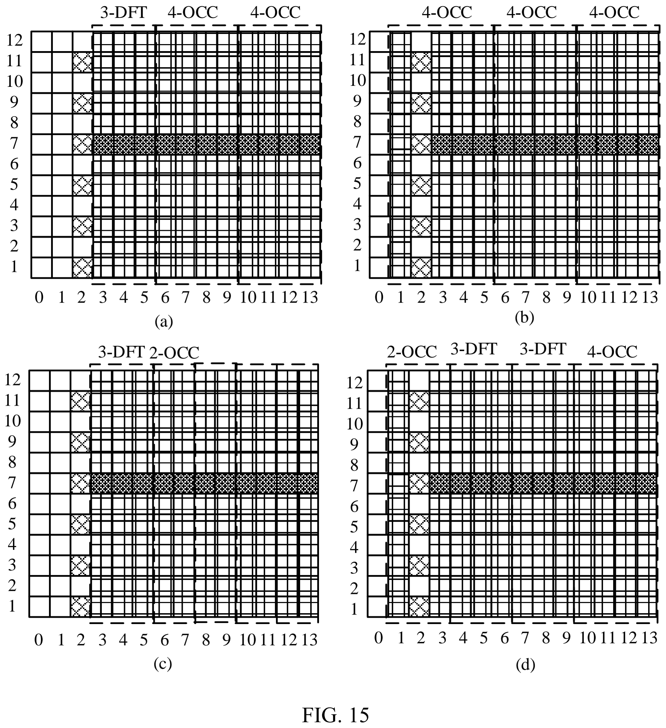

For example, with reference to FIG. 15, as shown in (b) and (d) in FIG. 15, a time-domain symbol 1 corresponding to a sub-carrier 1 to a sub-carrier 12 carries data or a signal on a PDSCH or a PDCCH, and the sub-carrier 1, the sub-carrier 3, the sub-carrier 5, the sub-carrier 7, the sub-carrier 9, and the sub-carrier 11 corresponding to a time-domain symbol 2 carry a DMRS. This may also be understood as: A time-domain symbol (the time-domain symbol 1) before the DMRS carries data or a signal on a PDSCH or a PDCCH. In (b) in FIG. 15, because the time-domain symbol 1 to a time-domain symbol 5 belong to a same symbol set, the sending device may perform 4-OCC time-domain inter-symbol transformation processing across the DMRS. For example, the sending device performs time-domain inter-symbol transformation processing on the time-domain symbol 1, the time-domain symbol 3, the time-domain symbol 4, and the time-domain symbol 5 by using an OCC. The receiving device performs time-domain inter-symbol inverse transformation processing on a time-domain symbol 1, a time-domain symbol 3, a time-domain symbol 4, and a time-domain symbol 5 by using an inverse transformation matrix corresponding to the OCC.

In (d) in FIG. 15, the time-domain symbol 1 to a time-domain symbol 3 belong to a same modulation symbol block. In this case, the sending device may perform 2-OCC time-domain inter-symbol transformation processing across the DMRS. Correspondingly, the receiving device may also perform time-domain inter-symbol inverse transformation processing by using an inverse transformation matrix corresponding to the OCC across the DMRS. For example, the sending device performs time-domain inter-symbol transformation processing on the time-domain symbol 1 and the time-domain symbol 3 by using an OCC. The receiving device performs time-domain inter-symbol inverse transformation processing on a time-domain symbol 1 and a time-domain symbol 3 by using an inverse transformation matrix corresponding to the OCC.

For example, in (b) in FIG. 15, the sending device may perform 4-OCC time-domain inter-symbol transformation processing on the time-domain symbol 1 and the time-domain symbol 3 to the time-domain symbol 5 that correspond to the sub-carrier 1; and then, perform 4-OCC time-domain inter-symbol transformation processing on the time-domain symbol 1 and the time-domain symbol 3 to the time-domain symbol 5 that correspond to the sub-carrier 2, until 4-OCC time-domain inter-symbol transformation processing is performed on the time-domain symbol 1 and the time-domain symbol 3 to the time-domain symbol 5 that correspond to the sub-carrier 12. Correspondingly, the receiving device may perform 4-OCC time-domain inter-symbol inverse transformation processing on the time-domain symbol 1, the time-domain symbol 3 to the time-domain symbol 5 that correspond to a sub-carrier 1; and then, perform 4-OCC time-domain inter-symbol inverse transformation processing on the time-domain symbol 1 and the time-domain symbol 3 to the time-domain symbol 5 that correspond to a sub-carrier 2, until OCC time-domain inter-symbol inverse transformation processing is performed on the time-domain symbol 1 and the time-domain symbol 3 to the time-domain symbol 5 that correspond to a sub-carrier 12.

When a time-domain symbol (the time-domain symbol 1) before the DMRS does not carry data or a signal on a PDSCH or a PDCCH, as shown in (a) and (c) in FIG. 15, the sending device may perform DFT-based time-domain inter-symbol transformation processing on consecutive time-domain symbols 3 to 5, and the receiving device may perform IDFT-based time-domain inter-symbol inverse transformation processing on consecutive time-domain symbols 3 to 5.

In a possible implementation of this application, the M time-domain symbols include the first time-domain symbol, and the first time-domain symbol is used to carry the pilot signal and is further used to carry a data signal or a PDSCH signal. In this case, the sending device performs time-domain inter-symbol transformation processing on the M time-domain symbols.

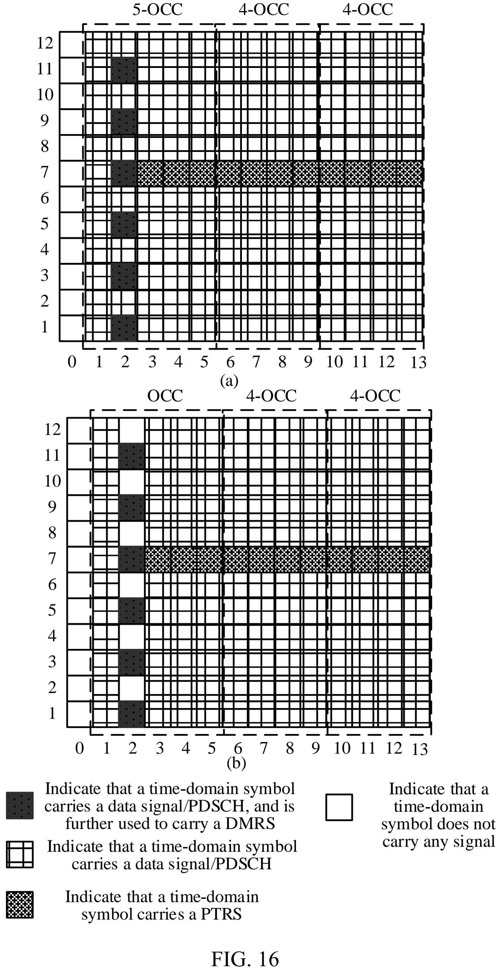

For example, as shown in FIG. 16, a time-domain symbol 1 corresponding to a sub-carrier 1 to a sub-carrier 12 carries data or a signal on a PDSCH or a PDCCH. An example in which the first time-domain symbol includes a time-domain symbol 2 corresponding to the sub-carrier 1, the sub-carrier 3, the sub-carrier 5, the sub-carrier 7, the sub-carrier 9, and the sub-carrier 11 is used. The sub-carrier 1, the sub-carrier 3, the sub-carrier 5, the sub-carrier 7, the sub-carrier 9, and the sub-carrier 11 corresponding to the time-domain symbol 2 carry data or a signal on a PDSCH or a PDCCH, and are further used to carry a DMRS. In this case, as shown in (a) in FIG. 16, the sending device may perform time-domain inter-symbol transformation processing on the time-domain symbol 1 to a time-domain symbol 13 corresponding to the sub-carrier 1 to the sub-carrier 12. For example, the sending device may perform time-domain inter-symbol transformation processing on five time-domain symbols in the time-domain symbol 1 to the time-domain symbol 5 by using an OCC. The sending device may perform time-domain inter-symbol transformation processing on four time-domain symbols in the time-domain symbol 6 to the time-domain symbol 9 by using an OCC. The sending device may perform time-domain inter-symbol transformation processing on four time-domain symbols in the time-domain symbol 10 to the time-domain symbol 13 by using an OCC.

In addition, optionally, as shown in (b) in FIG. 16, a difference between (b) in FIG. 16 and (a) in FIG. 16 lies in that: The time-domain symbol 2 corresponding to the sub-carrier 2, the sub-carrier 4, the sub-carrier 6, the sub-carrier 8, the sub-carrier 10, and the sub-carrier 12 does not carry data or a signal on a PDSCH or a PDCCH, but the time-domain symbol 2 corresponding to the sub-carrier 1, the sub-carrier 3, the sub-carrier 5, the sub-carrier 7, the sub-carrier 9, and the sub-carrier 11 not only carries data or a signal on a PDSCH or a PDCCH, but also carries a DMRS. In this case, the sending device may perform, by using an OCC, time-domain inter-symbol transformation processing on consecutive five time-domain symbols in the time-domain symbol 1 to the time-domain symbol 5 corresponding to the sub-carrier 1; and perform, by using an OCC, time-domain inter-symbol transformation processing on four time-domain symbols in the time-domain symbol 1 and the time-domain symbol 3 to the time-domain symbol 5 that correspond to the sub-carrier 2.

In a possible embodiment of this application, before that the sending device performs time-domain inter-symbol transformation processing on the first modulation symbol block to obtain the second modulation symbol block, the method provided in this embodiment of this application further includes:

The sending device performs resource mapping on each modulation symbol block according to a resource mapping rule. In other words, data mapping is performed on a time-domain symbol that is used to carry data or a signal on a PDSCH or a PDCCH in each modulation symbol block.

For example, the resource mapping rule indicate a sequence for performing resource mapping on a plurality of time-domain symbols.

In an example, before that the sending device performs resource mapping on each modulation symbol block according to the resource mapping rule, the method provided in this embodiment of this application may further include: The sending device may further determine the resource mapping rule.

For example, the sending device determines the resource mapping rule based on a protocol specification or capability information of the receiving device.

In an example, the resource mapping rule is first performing resource mapping on a plurality of time-domain symbols in a same modulation symbol block according to one of a first mapping rule and a second mapping rule, and then performing resource mapping on the plurality of time-domain symbols in the same modulation symbol block according to the other of the second mapping rule and the first mapping rule. For example, the resource mapping rule is first performing resource mapping on the first modulation symbol block according to one of the first mapping rule and the second mapping rule, and then performing resource mapping on the first modulation symbol block according to the other of the second mapping rule and the first mapping rule.

For example, the first mapping rule is performing resource mapping on the time-domain symbols according to a symbol sequence of the plurality of time-domain symbols in the modulation symbol block in time domain. The second mapping rule is performing resource mapping on the time-domain symbols according to a numbering sequence of sub-carriers in frequency domain.

Correspondingly, the receiving device may perform time-domain inter-symbol inverse transformation processing on a same to-be-demodulated symbol block according to the resource mapping rule. For example, if the sending device first performs resource mapping on the time-domain symbols according to the symbol sequence of the plurality of time-domain symbols in the modulation symbol block in time domain, and then performs resource mapping on the time-domain symbols according to the numbering sequence of the sub-carriers in frequency domain, when performing time-domain inter-symbol inverse transformation processing, the receiving device performs time-domain inter-symbol inverse transformation processing according to a symbol sequence of a plurality of time-domain symbols in a to-be-demodulated symbol block in time domain by using a second transformation matrix, and then, performs, in frequency domain according to a numbering sequence of sub-carriers, time-domain inter-symbol inverse transformation processing on the time-domain symbols corresponding to the sub-carriers.

Manner 1: Resource mapping is performed according to the numbering sequence of the sub-carriers and the sequence of the time-domain symbols.

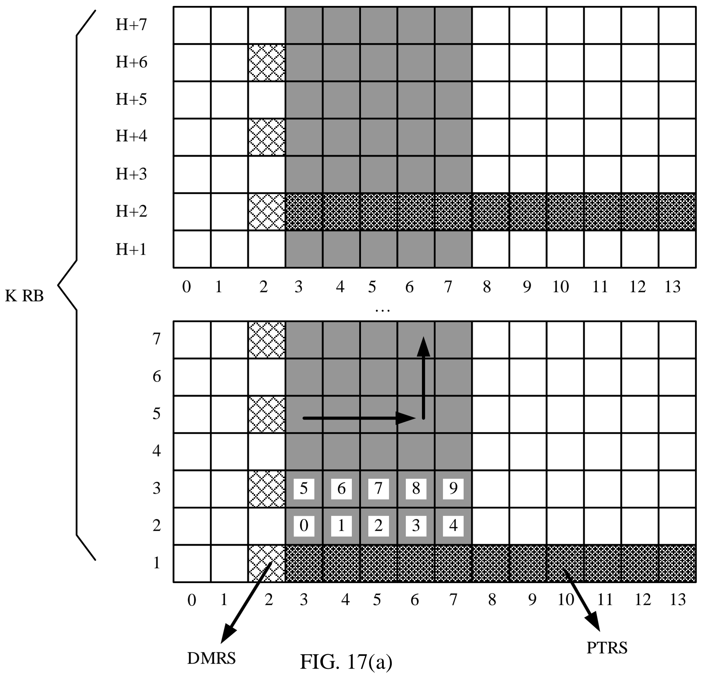

This manner may be implemented by the sending device according to a rule of first mapping a time-domain resource and then mapping a frequency-domain resource. As shown in FIG. 17(a), an example in which a resource block corresponding to a to-be-sent signal includes K RBs is used, and a normal cyclic prefix scenario in which one slot includes 14 time-domain symbols is used as an example. Each RB, excluding time-domain symbols that carry PDCCH and a DMRS respectively, is divided into two modulation symbol blocks, such as a modulation symbol block 1 and a modulation symbol block 2. M time-domain symbols included in a time-domain resource of the modulation symbol block 1 are a time-domain symbol 3 to a time-domain symbol 7. Y time-domain symbols included in a time-domain resource of the modulation symbol block 2 are a time-domain symbol 8 to a time-domain symbol 13. For the modulation symbol block 1, the sending device may first perform resource mapping on a sub-carrier corresponding to five time-domain symbols in the modulation symbol block 1 according to a symbol sequence of the time-domain symbols in the modulation symbol block 1, then perform resource mapping on a sub-carrier corresponding to other five time-domain symbols in the modulation symbol block 1 according to sequence numbers of frequency-domain sub-carriers, and so forth, until mapping on all sub-carriers is completed. For example, the sending device may first perform resource mapping on a sub-carrier 2 corresponding to the time-domain symbol 3 to the time-domain symbol 7, then perform resource mapping on a sub-carrier 3 corresponding to the time-domain symbol 3 to the time-domain symbol 7, then perform resource mapping on a sub-carrier 4 corresponding to the time-domain symbol 3 to the time-domain symbol 7, and so forth, until mapping on all sub-carriers of the modulation symbol block 1 is completed. Then, the sending device may perform resource mapping on the modulation symbol block 2 according to a same rule. Certainly, resource mapping rules corresponding to the modulation symbol block 2 and the modulation symbol block 1 may alternatively be different. For example, resource mapping corresponding to the modulation symbol block 1 is implemented according to a rule of first mapping a time-domain resource and then mapping a frequency-domain resource, and resource mapping corresponding to the modulation symbol block 2 is implemented according to a rule of first mapping a frequency-domain resource and then mapping a time-domain resource.

The following uses the modulation symbol block 1 as an example to describe a mapping method implemented according to the rule of first mapping a frequency-domain resource and then mapping a time-domain resource.

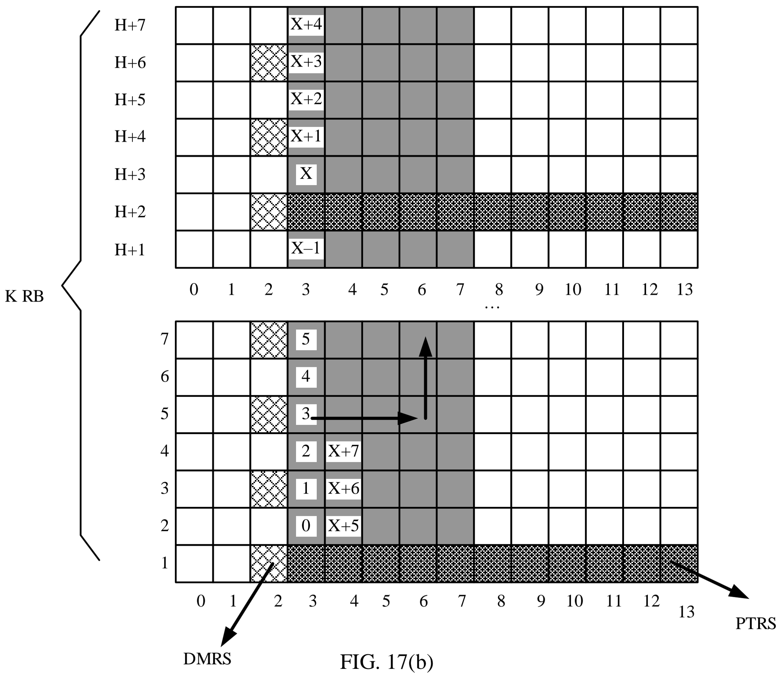

As shown in FIG. 17(b), the sending device may first perform resource mapping on all X+5 sub-carriers (a sequence number of 0 to a sequence number of X+4) corresponding to the time-domain symbol 3 in the modulation symbol block 1, and then the sending device performs mapping on all X+5 sub-carriers corresponding to the time-domain symbol 4, until mapping on all time-domain symbols is completed.

In an implementation, resource mapping may be performed on all sub-carriers (excluding a sub-carrier corresponding to a time-domain symbol that is used to carry a PTRS) in each modulation symbol block, or resource mapping may be performed on only all sub-carriers (for example, 0 to X-1) between two PTRSs. In addition, a quantity of DFT/IDFT points and a PTRS frequency density for each modulation symbol block are jointly determined by a quantity of sub-carriers and a length of a modulation symbol block.

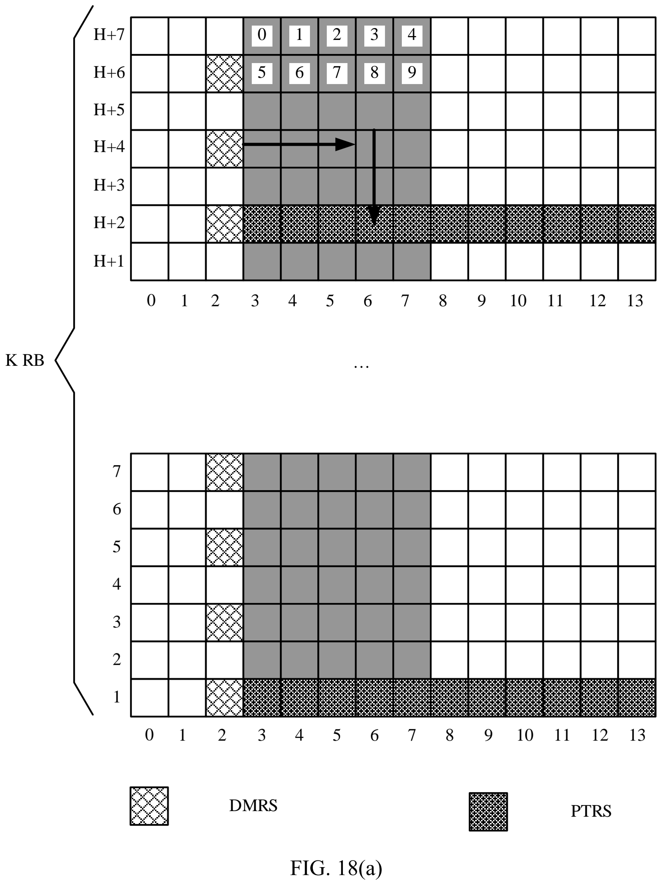

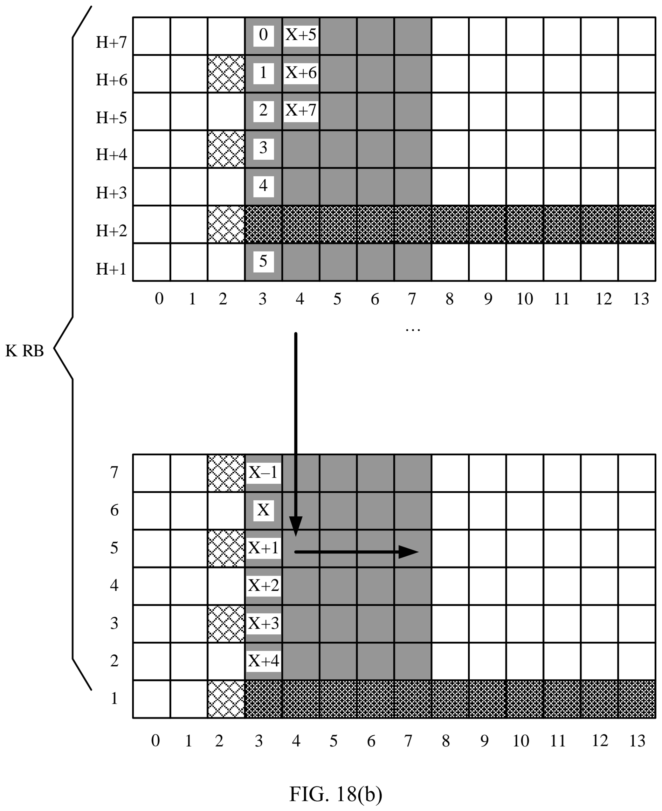

In another implementation, DFT/IDFT transformation may be performed according to a mapping rule following descending order of sequence numbers of sub-carriers. As shown in (a) in FIG. 18(a) and FIG. 18(b), the sending device may perform mapping on a modulation symbol block 1 by first performing mapping in time domain and then performing mapping in frequency domain, following descending order of sequence numbers of sub-carriers. For example, resource mapping is performed on a sub-carrier 15 corresponding to a time-domain symbol 3 to a time-domain symbol 7 in the modulation symbol block 1, then resource mapping is performed on a sub-carrier 14 corresponding to the time-domain symbol 3 to the time-domain symbol 7 in the modulation symbol block 1, and so forth, and finally resource mapping is performed on a sub-carrier 2 corresponding to the time-domain symbol 3 to the time-domain symbol 7 in the modulation symbol block 1, until mapping on all sub-carriers corresponding to the time-domain symbol 3 to the time-domain symbol 7 in the modulation symbol block 1 is completed.

As shown in (b) in FIG. 18(a) and FIG. 18(b), the sending device may perform mapping on a modulation symbol block 1 by first performing mapping in frequency domain and then performing mapping in time domain, following descending order of sequence numbers of sub-carriers. For example, resource mapping is performed on X+5 sub-carriers corresponding to a time-domain symbol 3 in the modulation symbol block 1 in a sequence of a sub-carrier 15 $\rightarrow$ a sub-carrier 2, then resource mapping is performed on X+5 sub-carriers corresponding to a time-domain symbol 4 in the modulation symbol block 1 in the sequence of the sub-carrier 15 $\rightarrow$ the sub-carrier 2, and so forth, and finally, resource mapping is performed on X+5 sub-carriers corresponding to a time-domain symbol 7 in the modulation symbol block 1 in the sequence of the sub-carrier 15 $\rightarrow$ the sub-carrier 2, until mapping on all sub-carriers corresponding to the time-domain symbol 3 to the time-domain symbol 7 in the modulation symbol block 1 is completed.

In another implementation, DFT/IDFT transformation may be performed according to a mapping rule following descending order of sequence numbers of time-domain symbols.

Manner 2: Concatenation is performed in a curvilinear method.

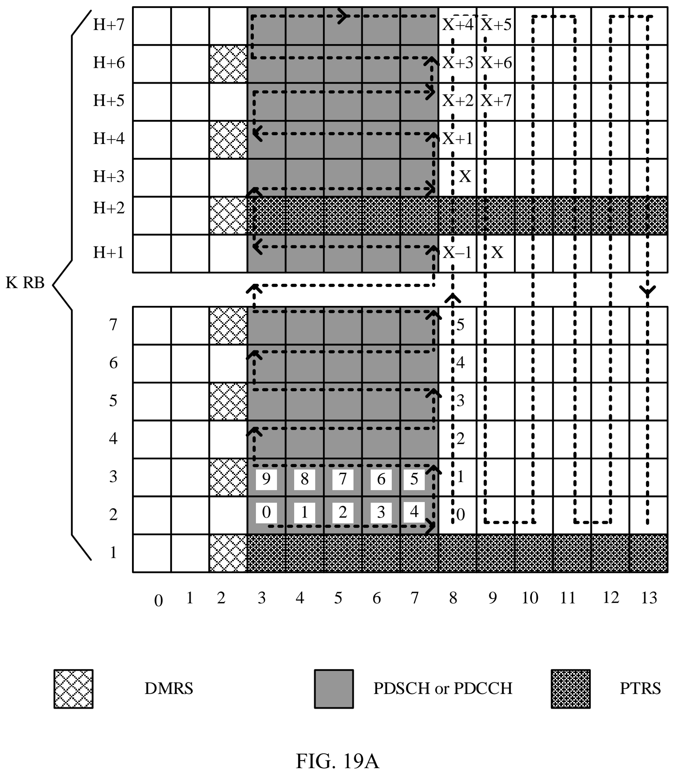

This manner may be implemented according to a rule of performing S-shaped mapping (that is, a line 1 in FIG. 19A) on a time-domain resource and performing sequential mapping (that is, a line 2 in FIG. 19A) on a frequency-domain resource, as shown by a modulation symbol block 1 in FIG. 19A. For example, as shown in FIG. 19A, the sending device may first perform, in ascending order of time-domain symbols, that is, (a sequence number of 0 to a sequence number of 4), resource mapping on a sub-carrier 2 corresponding to a time-domain symbol 3 to a time-domain symbol 7. Then, the sending device performs, in descending order of time-domain symbols, that is, (a sequence number of 5 to a sequence number of 9), resource mapping on a sub-carrier 3 corresponding to the time-domain symbol 7 to the time-domain symbol 3. Then, the sending device performs resource mapping on a sub-carrier 4 in ascending order of time-domain symbols (that is, the time-domain symbol 3 → the time-domain symbol 7). Next, the sending device performs resource mapping on a sub-carrier 5 in descending order of time-domain symbols ((that is, the time-domain symbol 7 → the time-domain symbol 3), and so forth, until data mapping is performed on all time-domain symbols in the modulation symbol block 1.

As shown in FIG. 19A, this manner may alternatively by implemented by the sending device according to a rule of performing S-shaped mapping on a frequency-domain resource and performing sequential mapping on a time-domain resource, as shown by a line 2 in FIG. 19A. The sending device may perform mapping on a time-domain symbol in a modulation symbol block 2 according to a numbering sequence of sub-carriers. For example, the sending device performs, according to a sequence of a sub-carrier 2 → a sub-carrier H+1 and a sub-carrier H+3 → a sub-carrier H+7, resource mapping on X+5 sub-carriers corresponding to a time-domain symbol 8, following ascending order of numbers of the sub-carriers. Then, the sending device performs, in descending order of the numbers of the sub-carriers, mapping on X+5 sub-carriers (that is, the sub-carrier H+7 → the sub-carrier H+3 and the sub-carrier H+1 → the sub-carrier 2) corresponding to a time-domain symbol 9. Next, the sending device performs, according to the sequence of the sub-carrier 2 → the sub-carrier H+1 and the sub-carrier H+3 → the sub-carrier H+7, resource mapping on X+5 sub-carriers corresponding to a time-domain symbol 10, following ascending order of the sub-carriers. Then, the sending device performs, in descending order of the sub-carriers, mapping on X+5 sub-carriers (that is, the sub-carrier H+7 → the sub-carrier H+3 and the sub-carrier H+1 → the sub-carrier 2) corresponding to a time-domain symbol 11, and so forth, thereby performing mapping on the time-domain symbol in the modulation symbol block 2 according to a sequence in a frequency-domain resource.

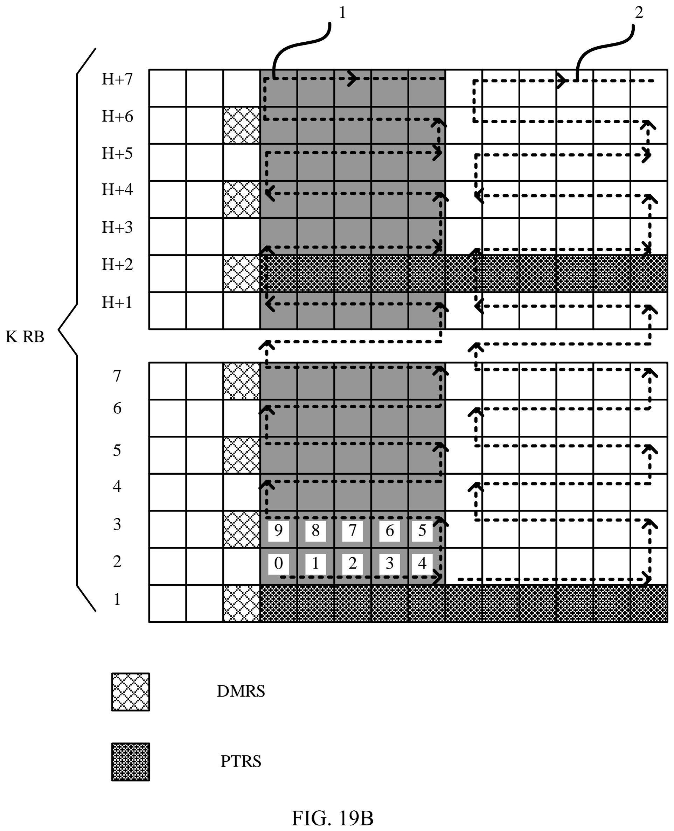

As shown in FIG. 19B, the sending device may alternatively perform mapping on a time-domain symbol in a modulation symbol block 1 according to a method shown by a line 1 in FIG. 19B, and perform mapping on a time-domain symbol in a modulation symbol block 2 according to a method shown by a line 2 in FIG. 19B. A difference between FIG. 19B and FIG. 19A lies in that: In FIG. 19B, S-shaped mapping is performed on a time-domain resource of the modulation symbol block 2. The sending device may first perform, in ascending order of time-domain symbols (that is, a time-domain symbol 8 → a time-domain symbol 12), resource mapping on a sub-carrier 2 corresponding to the time-domain symbol 8 to the time-domain symbol 12. Then, the sending device performs, in descending order of time-domain symbols (the time-domain symbol 12 → the time-domain symbol 8), resource mapping on a sub-carrier 3 corresponding to the time-domain symbol 12 to the time-domain symbol 8. Then, the sending device performs resource mapping on a sub-carrier 4 in ascending order of time-domain symbols (that is, the time-domain symbol 8 → the time-domain symbol 12). Next, the sending device performs resource mapping on a sub-carrier 5 in descending order of time-domain symbols (that is, the time-domain symbol 12 → the time-domain symbol 8), and so forth, until data mapping is performed on all time-domain symbols in the modulation symbol block 2.

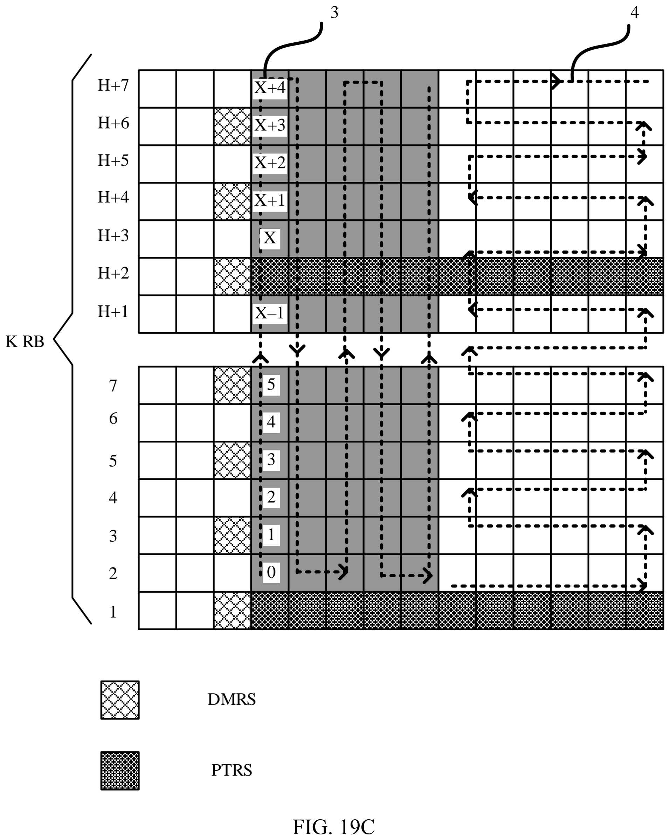

As shown in FIG. 19C, the sending device may alternatively implement this manner by first performing, according to a method shown in FIG. 19C, mapping on a time-domain symbol in a modulation symbol block 1 according to a rule of performing S-shaped mapping on a frequency-domain resource and performing sequential mapping on a time-domain resource (that is, a line 3 in FIG. 19C), and then, performing mapping on a time-domain symbol in a modulation symbol block 2 according to a rule of performing S-shaped mapping on a time-domain resource (that is, a line 4 in FIG. 19C).

This manner, like the manner 1, allows to perform mapping across a PTRS, or only perform mapping on data between sub-carriers corresponding to time-domain symbols that carry the PTRS.

Regardless of which manner is used, the sending device needs to indicate a specific resource mapping rule to the receiving device, thereby unifying a processing manner of the sending device with that of the receiving device.

In an optional manner, indication is performed according to a method shown in a table. In addition, the receiving device may further report processing capability information of the receiving device, and the sending device selects a proper mapping rule based on the information.

Table 4 Mapping rule indication

| Indication information | Concatenation order | Concatenation type |
|---|---|---|
| 0000 | Time-domain ascending order→frequency-domain ascending order | Sequential |
| 0001 | Time-domain ascending order→frequency-domain descending order | |
| 0010 | Time-domain descending order→frequency-domain ascending order | |
| 0011 | Time-domain descending order→frequency-domain descending order | |
| 0100 | Frequency-domain ascending order→time-domain ascending order | |
| 0101 | Frequency-domain descending order→time-domain ascending order | |
| 0110 | Frequency-domain ascending order→time-domain descending order | |

(continued)

| Indication information | Concatenation order | Concatenation type |
|---|---|---|
| 0111 | Frequency-domain descending order→time-domain descending order | |
| 1000 | Time-domain ascending order→frequency-domain ascending order | Curvilinear |
| 1001 | Time-domain ascending order→frequency-domain descending order | |
| 1010 | Time-domain descending order-frequency-domain ascending order | |
| 1011 | Time-domain descending order→frequency-domain descending order | |
| 1100 | Frequency-domain ascending order→time-domain ascending order | |
| 1101 | Frequency-domain descending order→time-domain ascending order | |
| 1110 | Frequency-domain ascending order-time-domain descending order | |
| 1111 | Frequency-domain descending order→time-domain descending order | |

It should be noted that, when the sending device indicates the resource mapping rule to the receiving device, the receiving device performs time-domain inter-symbol inverse transformation processing according to a resource mapping rule indicated by the receiving device when performing time-domain inter-symbol inverse transformation processing.

For example, with reference to FIG. 18(a), a resource mapping rule is first performing mapping in time domain and then performing mapping in frequency domain, following ascending order of numbers of sub-carriers. In this case, when performing time-domain inter-symbol inverse transformation processing, the receiving device first performs time-domain inter-symbol inverse transformation processing on a sub-carrier 2 corresponding to a time-domain symbol 3 to a time-domain symbol 7. Then, the receiving device performs time-domain inter-symbol inverse transformation processing on a sub-carrier 3 corresponding to the time-domain symbol 3 to the time-domain symbol 7, and so forth, until time-domain inter-symbol inverse transformation processing is performed on all time-domain symbols in a to-be-demodulated symbol block corresponding to the modulation symbol block 1.

Sub-carriers in a same modulation symbol block are mapped simultaneously, and then, time-domain inter-symbol transformation processing is performed by using a first transformation matrix. In this case, a quantity of transformation points may be greater than a quantity of OFDM symbols (per modulation symbol block). After this processing, processing delays and buffer sizes of the receiving device and the sending device can be significantly reduced, thereby improving feasibility of an algorithm.

In a possible embodiment of this application, the sending device may use a same first transformation matrix or different first transformation matrices for time-domain symbols in different modulation symbol blocks. For example, as shown in (a) in FIG. 15, a time-domain symbol 3 to a time-domain symbol 5 belong to a modulation symbol block A, and the sending device may perform time-domain inter-symbol transformation processing on the modulation symbol block A by using a DFT transformation matrix. A time-domain symbol 6 to a time-domain symbol 9 belong to a modulation symbol block B, and the sending device may perform time-domain inter-symbol transformation processing on the modulation symbol block B by using an OCC transformation matrix.

For example, as shown in (c) in FIG. 15, a time-domain symbol 2 to a time-domain symbol 13 are partitioned into three modulation symbol blocks. To be specific, the time-domain symbol 2 to the time-domain symbol 5 belong to one modulation symbol block, the time-domain symbol 6 to the time-domain symbol 9 belong to one modulation symbol block, and the time-domain symbol 10 to the time-domain symbol 13 belong to one modulation symbol block. The sending device may perform time-domain inter-symbol transformation processing on the three modulation symbol blocks by using an OCC transformation matrix respectively.

In a possible embodiment of this application, the sending device performs, by using a same first transformation matrix, time-domain inter-symbol transformation processing on time-domain symbols corresponding to different sub-carriers in a same modulation symbol block. Correspondingly, for the receiving device, the receiving device may perform, by using a same second transformation matrix, time-domain inter-symbol inverse transformation processing on time-domain symbols corresponding to different sub-carriers in a same to-be-demodulated symbol block.

In a possible implementation of this application, the method provided in this embodiment of this application further includes: The sending device sends sixth indication information. The sixth indication information indicates that time-domain inter-symbol transformation processing is performed, by using a same first transformation matrix, on time-domain symbols corresponding to different sub-carriers included in a frequency-domain resource of a same modulation symbol block. Correspondingly, the receiving device may determine, based on the sixth indication information, to perform, by using a same second transformation matrix, time-domain inter-symbol inverse transformation processing on time-domain symbols corresponding to different sub-carriers included in a frequency-domain resource of any received to-be-demodulated symbol block.

For example, the sixth indication information may indicate that the same first transformation matrix corresponds to the different sub-carriers in the same modulation symbol block. In this way, it is convenient for the receiving device to determine, based on the sixth indication information, to perform, by using the same second transformation matrix, time-domain inter-symbol inverse transformation processing on the time-domain symbols corresponding to the different sub-carriers included in the frequency-domain resource of the any to-be-demodulated symbol block.

The first modulation symbol block is used as an example. As shown in (a) in FIG. 15, the first modulation symbol block includes N sub-carriers including a sub-carrier 1 to a sub-carrier 12, and a time-domain symbol 3 to a time-domain symbol 5. The sending device may indicate, by using the sixth indication information, that a first transformation matrix corresponding to the sub-carrier 1 to the sub-carrier 12 included in the first modulation symbol block is a DFT matrix. The third modulation symbol block is used as an example. As shown in (a) in FIG. 15, the first modulation symbol block includes N sub-carriers including a sub-carrier 1 to a sub-carrier 12, and a time-domain symbol 6 to a time-domain symbol 9. The sending device may indicate, by using the sixth indication information, that a first transformation matrix corresponding to the sub-carrier 1 to the sub-carrier 12 included in the third modulation symbol block is an OCC matrix.

For example, as shown in (a) in FIG. 15, the time-domain symbol 3 to the time-domain symbol 5 belong to the first modulation symbol block, and the sending device may perform, by using the DFT matrix, time-domain inter-symbol transformation processing on the time-domain symbol 3 to the time-domain symbol 5 corresponding to the sub-carrier 1 to the sub-carrier 12. Correspondingly, for the receiving device, the receiving device performs, by using a second transformation matrix that is an inverse of the DFT transformation matrix, time-domain inter-symbol inverse transformation processing on a time-domain symbol 3 to a time-domain symbol 5 corresponding to a sub-carrier 1 to a sub-carrier 12.

In a possible embodiment of this application, the sending device performs, by using different first transformation matrices, time-domain inter-symbol transformation processing on time-domain symbols corresponding to different sub-carriers in a same modulation symbol block. Correspondingly, the receiving device performs, by using different second transformation matrices, time-domain inter-symbol inverse transformation processing on time-domain symbols corresponding to different sub-carriers in a same to-be-demodulated symbol block.

Specifically, the sending device may send fifth indication information to the receiving device, to indicate that time-domain inter-symbol transformation processing is performed, by using the different first transformation matrices, on the time-domain symbols corresponding to the different sub-carriers in the same modulation symbol block.

For example, the sending device indicates, by using the fifth indication information, a first transformation matrix corresponding to each of the N sub-carriers, where first transformation matrices corresponding to at least two sub-carriers are different. Certainly, some sub-carriers may alternatively correspond to a same first transformation matrix. In this way, the receiving device can determine, by using the first transformation matrix corresponding to each sub-carrier, whether some sub-carriers correspond to different first transformation matrices.

For example, the N sub-carriers include a first sub-carrier and a second sub-carrier, and a first transformation matrix used by the sending device to perform time-domain inter-symbol transformation processing on time-domain symbols corresponding to the first sub-carrier and a first transformation matrix used by the sending device to perform time-domain inter-symbol transformation processing on time-domain symbols corresponding to the second sub-carrier are different.

For example, the first transformation matrix corresponding to the first sub-carrier and the first transformation matrix corresponding to the second sub-carrier are in a mutual transpose relationship.

For example, the first transformation matrix corresponding to the first sub-carrier is a transformation matrix used by the sending device to perform time-domain inter-symbol transformation processing on the time-domain symbols corresponding to the first sub-carrier. The first transformation matrix corresponding to the second sub-carrier is a transformation matrix used by the sending device to perform time-domain inter-symbol transformation processing on the time-domain symbols corresponding to the second sub-carrier.

For example, the first transformation matrix may alternatively be a permutation matrix. For example, the first transformation matrix is a matrix of N rows × N columns formed by a first element and a second element. In addition, any row or any column of the first transformation matrix includes one first element. For example, the first element may be 1, and the second element may be 0.

In an example, the first transformation matrix is a permutation matrix formed by only '0, 1' elements, and one '1' exists in any row or any column in the permutation matrix. Such processing aims to permute data carried in different time-domain symbols corresponding to a same frequency-domain sub-carrier, so that data of one code block is sent on different OFDM symbols.

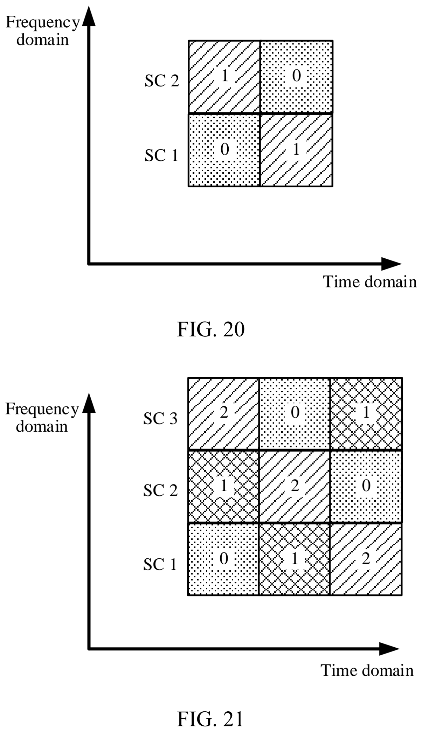

As shown in FIG. 20, labels '0' and '1' are original positions of time-domain symbols, and a first transformation matrix corresponding to a frequency-domain sub-carrier 1 (for example, SC 1) is $F_1 = \begin{bmatrix} 1 & 0 \\ 0 & 1 \end{bmatrix}$. A first transformation

matrix corresponding to a frequency-domain sub-carrier 2 (SC 2) is: $F_2 = \begin{bmatrix} 0 & 1 \\ 1 & 0 \end{bmatrix}$. The sending device performs time-domain inter-symbol transformation processing on time-domain symbols corresponding to the frequency-domain sub-carrier 1 by using $F_1 = \begin{bmatrix} 1 & 0 \\ 0 & 1 \end{bmatrix}$, and performs time-domain inter-symbol transformation processing on time-domain symbols corresponding to the frequency-domain sub-carrier 2 by using $F_2 = \begin{bmatrix} 0 & 1 \\ 1 & 0 \end{bmatrix}$. Therefore, data of a same code block (an identical pattern) is uniformly distributed on different time-domain symbols, thereby achieving an interleaving effect. In addition, an inverse transformation matrix of each frequency-domain sub-carrier at the receiving device is identical to a forward transformation matrix of the frequency-domain sub-carrier. Modulation signals of a same code block are sent on different time-domain symbols, and the receiving device performs deinterleaving, thereby helping reduce consecutive bit errors caused by a burst error.

In an implementation, when a quantity of interleaved time-domain symbols is greater than two, a compact interleaving transformation matrix may be designed, so that first transformation matrices corresponding to different frequency-domain sub-carriers are mutual inverse transformation matrices of each other.

As shown in FIG. 21, first transformation matrices corresponding to SC 2 and SC 3 are respectively:

$F_1 = \begin{bmatrix} 0 & 1 & 0 \\ 0 & 0 & 1 \\ 1 & 0 & 0 \end{bmatrix}$, and $F_2 = \begin{bmatrix} 0 & 0 & 1 \\ 1 & 0 & 0 \\ 0 & 1 & 0 \end{bmatrix}$, and the two first transformation matrices are in a mutual transpose relationship.

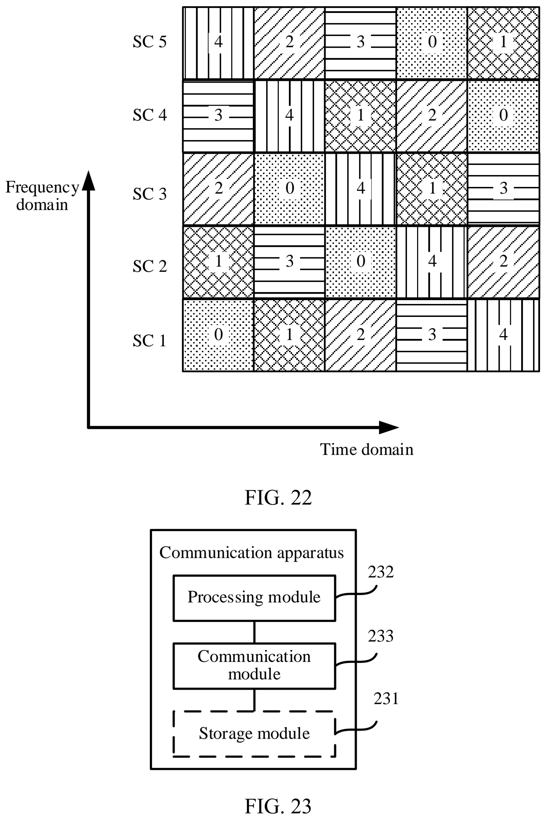

Similarly, as shown in FIG. 22, when a quantity of interleaved time-domain symbols is five, first transformation matrices corresponding to SC 2 and SC 3 are in a mutual transpose relationship. First transformation matrices respectively corresponding to SC 4 and SC 5 are also in a mutual transpose relationship, that is:

$$F_2 = \begin{bmatrix} 0 & 1 & 0 & 0 & 0 \\ 0 & 0 & 0 & 1 & 0 \\ 1 & 0 & 0 & 0 & 0 \\ 0 & 0 & 0 & 0 & 1 \\ 0 & 0 & 1 & 0 & 0 \end{bmatrix} = F_3^T$$

$$F_4 = \begin{bmatrix} 0 & 0 & 0 & 1 & 0 \\ 0 & 0 & 0 & 0 & 1 \\ 0 & 1 & 0 & 0 & 0 \\ 0 & 0 & 1 & 0 & 0 \\ 1 & 0 & 0 & 0 & 0 \end{bmatrix} = F_5^T.$$

As shown in FIG. 22, FIG. 22 is a diagram of four-symbol permutation after processing by using the foregoing matrix.

An advantage of such compact interleaving is that the sending device needs to indicate fewer types of permutation matrices, thereby reducing resource overheads and ensuring an effect of smoothing inter-symbol phase noise.

It should be noted that, when the first transformation matrix is a permutation matrix, the sending device may indicate the permutation matrix to the receiving device by using the third indication information. In this way, the receiving device can determine a transposed matrix of the permutation matrix by using the permutation matrix, and perform time-domain inter-symbol inverse transformation processing by using the transposed matrix of the permutation matrix. Certainly, the sending device may alternatively indicate the transposed matrix of the permutation matrix to the receiving device by using the third indication information.

The foregoing mainly describes the solutions in embodiments of this application from a perspective of interaction between network elements. It may be understood that to achieve the foregoing functions, various network elements, such as the sending device, the receiving device, and the like, include corresponding structures and/or software modules for executing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional unit division may be performed on the sending device and the receiving device based on the examples of the method. For example, functional units may be divided based on corresponding functions, or two or more functions may be integrated into one processing unit. The integrated unit may be implemented in a form of hardware, or may be implemented in a form of a software functional unit. It should be noted that, in embodiments of this application, division into the units is an example, and is merely logical function division. During actual implementation, another division manner may be used.

The foregoing describes the methods in embodiments of this application with reference to FIG. 10 to FIG. 22. The following describes a communication apparatus that is provided in embodiments of this application and that performs the foregoing methods. A person skilled in the art may understand that the method and the apparatus may be mutually combined and referenced. The communication apparatus provided in embodiments of this application may perform the steps performed by the sending device and the receiving device in the foregoing analysis method.

When an integrated unit is used, FIG. 23 shows a communication apparatus in the foregoing embodiment. The communication apparatus may include a communication module 233 and a processing module 232.

In an optional implementation, the communication apparatus may further include a storage module 231, configured to store program code and data of the communication apparatus.

In an example, the communication apparatus is a sending device, or is a chip used in a sending device. In this case, the communication module 233 is configured to support the communication apparatus in communicating with an external network element (for example, a receiving device). For example, the communication module 233 is configured to perform a signal receiving and sending operation of the sending device in the foregoing method embodiment. The processing module 232 is configured to perform a signal processing operation of the sending device in the foregoing method embodiment.

For example, the communication module 233 is configured to perform a receiving action performed by the sending device in step 1004 in FIG. 10. The processing module 232 is configured to support the communication apparatus in performing the actions performed by the sending device in step 1001 to step 1003 in FIG. 10.

Optionally, the communication module 233 is further configured to perform the step of sending the first indication information/the second indication information/the third indication information/the fourth indication information/the fifth indication information to the receiving device.

In another example, the communication apparatus is a receiving device, or a chip used in a receiving device. In this case, the communication module 233 is configured to support the communication apparatus in communicating with an external network element (for example, a sending device). For example, the communication module 233 is configured to perform a signal receiving and sending operation of the receiving device in the foregoing method embodiment. The processing module 232 is configured to perform a signal processing operation of the receiving device in the foregoing method embodiment.

For example, the processing module 232 is configured to perform step 1006 in FIG. 10 in the foregoing embodiment. The communication module 233 is configured to perform the receiving action performed by the receiving device in step 1004 in FIG. 10 in the foregoing embodiment.

In a possible implementation of this application, the communication module 233 is configured to perform an action of receiving the second indication information/the third indication information/the first indication information/the fifth indication information/the fourth indication information in the foregoing embodiment.

It should be noted that the communication module 233 shown in FIG. 23 may alternatively be replaced with a communication unit, and the processing module 232 may alternatively be replaced with a processing unit. The storage module 231 may alternatively be replaced with a storage unit. The processing unit is configured to control and manage actions of the communication apparatus. For example, the processing unit is configured to perform an information/data processing step performed by the communication apparatus. The communication unit is configured to support the communication apparatus in performing an information/data sending or receiving step.

In a possible implementation, the communication unit may include a receiving unit and a sending unit. The receiving unit is configured to receive a signal, and the sending unit is configured to send a signal.

The processing module 232 may be a processor or controller. For example, the processing module may be a central processing unit, a general-purpose processor, a digital signal processor, an application-specific integrated circuit, a field programmable gate array or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The communication module may be a transceiver, a transceiver circuit, a communication interface, or the like. The storage module may be a memory.

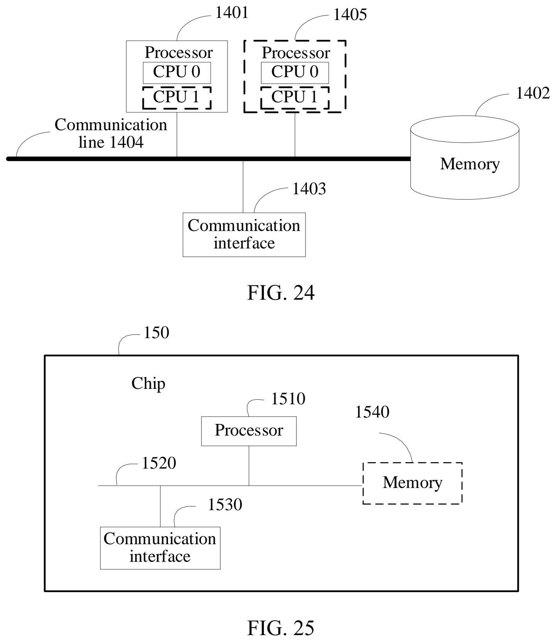

When the processing module 232 is a processor 1401 or a processor 1405, the communication module 233 is a communication interface 1403, and the storage module 231 is a memory 1402, the communication apparatus in this application may be a communication device shown in FIG. 24.

FIG. 24 is a diagram of a hardware structure of the communication device according to an embodiment of this application. For structures of the sending device and the receiving device in embodiments of this application, refer to the diagram of the structure of the communication device shown in FIG. 24. The communication device includes the processor 1401, a communication line 1404, and at least one communication interface (where the communication interface 1403 is used as an example in FIG. 24 for description).

The processor 1401 may be a general-purpose central processing unit (central processing unit, CPU), a microprocessor, an application-specific integrated circuit (application-specific integrated circuit, ASIC), or one or more integrated circuits for controlling program execution of the solutions of this application.

The communication line 1404 may include a path for transferring information between the foregoing components.

The communication interface 1403 is configured to exchange information with another apparatus by using, for example, any type of apparatus such as a transceiver, and is configured to communicate with another device or a communication network, for example, an Ethernet, a radio access network (radio access network, RAN), or a wireless local area network (wireless local area network, WLAN).

Optionally, the communication device may further include the memory 1402.

The memory 1402 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the communication line 1404. The memory may alternatively be integrated with the processor.

The memory 1402 is configured to store computer-executable instructions for executing the solutions of this application, and the processor 1401 controls execution of the computer-executable instructions. The processor 1401 is configured to execute the computer-executable instructions stored in the memory 1402, to implement the symbol processing method provided in the following embodiments of this application.

Optionally, the computer-executable instructions in embodiments of this application may also be referred to as application program code. This is not specifically limited in embodiments of this application.

During specific implementation, in an embodiment, the processor 1401 may include one or more CPUs, for example, a CPU 0 and a CPU 1 in FIG. 24.

During specific implementation, in an embodiment, the communication device may include a plurality of processors, for example, the processor 1401 and the processor 1405 in FIG. 24. Each of the processors may be a single-core (single-CPU) processor, or may be a multi-core (multi-CPU) processor. The processor herein may be one or more devices, circuits, and/or processing cores configured to process data (for example, computer program instructions).

FIG. 25 is a diagram of a structure of a chip 150 according to an embodiment of this application. The chip 150 includes one, two, or more processors 1510 and a communication interface 1530.

Optionally, the chip 150 further includes a memory 1540. The memory 1540 may include a read-only memory and a random access memory, and provide operation instructions and data for the processor 1510. A part of the memory 1540 may further include a non-volatile random access memory (non-volatile random access memory, NVRAM).

In some implementations, the memory 1540 stores the following elements: an executable module or a data structure, a subset thereof, or an extended set thereof.

In this embodiment of this application, the operation instructions stored in the memory 1540 (where the operation instructions may be stored in an operating system) are invoked to perform corresponding operations.

In a possible implementation, structures of chips used by a sending device and a receiving device are similar, and different apparatuses may use different chips to implement respective functions.

The processor 1510 controls a processing operation of either a sending device or a receiving device. The processor 1510 may also be referred to as a central processing unit (central processing unit, CPU).

The memory 1540 may include a read-only memory and a random access memory, and provide instructions and data for the processor 1510. A part of the memory 1540 may further include an NVRAM. For example, in an application, the memory 1540, the communication interface 1530, and the memory 1540 are coupled together through a bus system 1520. The bus system 1520 may further include a power bus, a control bus, a status signal bus, and the like in addition to a data bus. However, for clarity of description, various buses are marked as the bus system 1520 in FIG. 25.

The methods disclosed in embodiments of this application are applicable to the processor 1510, or may be implemented by the processor 1510. The processor 1510 may be an integrated circuit chip having a signal processing capability. In an implementation process, the steps in the foregoing methods may be implemented by an integrated logic circuit of hardware in the processor 1510 or by instructions in a form of software. The processor 1510 may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly implemented by a hardware decoding processor, or may be implemented by a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 1540. The processor 1510 reads information from the memory 1540, and implements the steps of the foregoing methods through hardware of the processor 1510.

In a possible implementation, the communication interface 1530 is configured to perform receiving and sending steps of the sending device and the receiving device in the embodiment shown in FIG. 10. The processor 1510 is configured to perform processing steps of the sending device and the receiving device in the embodiment shown in FIG. 10.

The communication module may be a communication interface of the apparatus, and is configured to receive a signal from another apparatus. For example, when the apparatus is implemented as a chip, the communication module is a communication interface of the chip that is configured to receive a signal from or send a signal to another chip or apparatus.

According to one aspect, a computer-readable storage medium is provided. The computer-readable storage medium stores instructions. When the instructions are run, a function performed by the sending device in the embodiment shown in FIG. 10 is implemented.

According to one aspect, a computer-readable storage medium is provided. The computer-readable storage medium stores instructions. When the instructions are run, a function performed by the receiving device in the embodiment shown in FIG. 10 is implemented.

According to another aspect, a computer program product including instructions is provided. The computer program product includes the instructions. When the instructions are run, a function performed by the sending device in the embodiment shown in FIG. 10 is implemented.

According to one aspect, a computer program product including instructions is provided. The computer program product includes the instructions. When the instructions are run, a function performed by the receiving device in the embodiment shown in FIG. 10 is implemented.

According to one aspect, a chip is provided. The chip is used in a sending device. The chip includes at least one processor and a communication interface. The communication interface is coupled to the at least one processor. The processor is configured to run instructions, to implement a function performed by the sending device in any embodiment shown in FIG. 10.

According to another aspect, an embodiment of this application provides a chip. The chip is used in a receiving device. The chip includes at least one processor and a communication interface. The communication interface is coupled to the at least one processor. The processor is configured to run instructions, to implement a function performed by the receiving device in the embodiment shown in FIG. 10.

An embodiment of this application provides a communication system. The communication system includes a receiving device and a sending device. The receiving device is configured to perform a function performed by the receiving device in any embodiment shown in FIG. 10. The sending device is configured to perform a function performed by the sending device in any embodiment shown in FIG. 10.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from one computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by a computer, or may be a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

Although this application is described with reference to embodiments, a person skilled in the art may understand and implement other variations of the disclosed embodiments by viewing the accompanying drawings, the disclosed content, and the appended claims in the process of implementing this application for which protection is sought. In the claims, "comprising" (comprising) does not exclude another component or another step, and "a" or "one" does not exclude a case of multiple. A single processor or another unit may implement several functions described in the claims. Some measures are recorded in dependent claims that are different from each other, but this does not mean that these measures cannot be combined to produce a better effect.

Although this application is described with reference to the specific features and embodiments thereof, it is clear that various modifications and combinations may be made to the features and embodiments without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalents.

**Claims**

1.  A symbol processing method, comprising:

    obtaining a first modulation symbol block, wherein a time-domain resource of the first modulation symbol block comprises M time-domain symbols, a frequency-domain resource of the first modulation symbol block comprises N sub-carriers, and the first modulation symbol block comprises M×N modulation symbols, wherein M is greater than or equal to 2, and N is greater than or equal to 1; and
    performing time-domain inter-symbol transformation processing on the first modulation symbol block to obtain a second modulation symbol block, wherein a time-domain resource of the second modulation symbol block comprises the M time-domain symbols, a frequency-domain resource of the second modulation symbol block comprises the N sub-carriers, and the second modulation symbol block comprises M*N modulation symbols.

2.  The method according to claim 1, wherein before the performing time-domain inter-symbol transformation processing on the first modulation symbol block to obtain the second modulation symbol block, the method further comprises: determining whether to perform the time-domain inter-symbol transformation processing on the first modulation symbol block.

3.  The method according to claim 2, wherein the determining whether to perform the time-domain inter-symbol transformation processing on the first modulation symbol block comprises: determining, based on an index value of a modulation and coding scheme corresponding to the first modulation symbol block, whether to perform the time-domain inter-symbol transformation processing on the first modulation symbol block.

4.  The method according to claim 3, wherein the determining, based on the index value of the modulation and coding scheme corresponding to the first modulation symbol block, whether to perform the time-domain inter-symbol transformation processing on the first modulation symbol block comprises:

    determining, when the index value of the modulation and coding scheme is greater than or equal to an index threshold, to perform the time-domain inter-symbol transformation processing on the first modulation symbol block; and
    determining, when the index value of the modulation and coding scheme is less than the index threshold, not to perform the time-domain inter-symbol transformation processing on the first modulation symbol block.

5.  The method according to any one of claims 1 to 4, wherein the method further comprises:

    obtaining one or more third modulation symbol blocks, wherein a time-domain resource of the third modulation symbol block comprises Y time-domain symbols, a frequency-domain resource of the third modulation symbol block comprises Q sub-carriers, and the third modulation symbol block comprises Y×Q modulation symbols, wherein Y is greater than or equal to 2, and Q is greater than or equal to 1; and

performing the time-domain inter-symbol transformation processing on each of the third modulation symbol blocks to obtain one or more fourth modulation symbol blocks, wherein a time-domain resource of the fourth modulation symbol block comprises the Y time-domain symbols, a frequency-domain resource of the fourth modulation symbol block comprises the Q sub-carriers, and the fourth modulation symbol block comprises $Y \times Q$ modulation symbols.

6. The method according to any one of claims 1 to 5, wherein the method further comprises:

determining, based on protocol-agreed maximum and minimum quantities of time-domain symbols comprised in a time-domain resource of a modulation symbol block, a quantity of time-domain symbols comprised in the time-domain resource of the first modulation symbol block or the third modulation symbol block; and/or

determining, based on a protocol-agreed quantity of time-domain symbols comprised in a time-domain resource of a modulation symbol block, a quantity of time-domain symbols comprised in the time-domain resource of the first modulation symbol block or the third modulation symbol block.

7. The method according to any one of claims 1 to 6, wherein the time-domain inter-symbol transformation processing is performed on the first modulation symbol block by using a first transformation matrix, and the first transformation matrix is protocol-agreed or configured by default, or the first transformation matrix is determined based on the quantity of time-domain symbols comprised in the time-domain resource of the first modulation symbol block, or the first transformation matrix is determined based on a quantity of sub-carriers comprised in the frequency-domain resource of the first modulation symbol block.

8. The method according to any one of claims 1 to 7, wherein the method further comprises:
sending first indication information, wherein the first indication information is used by a receiving device to determine that a sending device performs the time-domain inter-symbol transformation processing on the first modulation symbol block.

9. The method according to claim 8, wherein the first indication information further indicates a length of the time-domain resource of the first modulation symbol block and/or the first transformation matrix used to perform the time-domain inter-symbol transformation processing on the first modulation symbol block.

10. The method according to any one of claims 1 to 8, wherein the method further comprises:

sending second indication information and/or third indication information, wherein the second indication information indicates the quantity of time-domain symbols comprised in the time-domain resource of the first modulation symbol block, or the second indication information indicates a start time-domain symbol and/or an end time-domain symbol of the time-domain resource of the first modulation symbol block, or the second indication information indicates start data and/or end data of the frequency-domain resource of the first modulation symbol block; and

the third indication information is used by the receiving device to determine an inverse transformation matrix used to perform time-domain inter-symbol inverse transformation processing.

11. The method according to any one of claims 1 to 10, wherein the method further comprises:
configuring one or more transformation matrices for the receiving device, wherein each of the one or more transformation matrices corresponds to a length of a time-domain resource of one modulation symbol block.

12. The method according to any one of claims 1 to 11, wherein the M time-domain symbols comprised in the time-domain resource of the first modulation symbol block comprise a first time-domain symbol, and when the first time-domain symbol is used to carry a pilot signal, the time-domain inter-symbol transformation processing is performed on time-domain symbols other than the first time-domain symbol in the M time-domain symbols comprised in the time-domain resource of the first modulation symbol block; or

when the first time-domain symbol carries data and is further used to carry the pilot signal, the time-domain inter-symbol transformation processing is performed on the M time-domain symbols comprised in the time-domain resource of the first modulation symbol block.

13. The method according to any one of claims 1 to 12, wherein before the performing time-domain inter-symbol transformation processing on the first modulation symbol block to obtain the second modulation symbol block, the method further comprises:

> determining a resource mapping rule for the first modulation symbol block; and
> performing, according to the resource mapping rule, resource mapping on a time-domain symbol used to carry data.

14. The method according to claim 13, wherein the resource mapping rule is first performing resource mapping on the first modulation symbol block according to one of a first mapping rule and a second mapping rule, and then performing resource mapping on the first modulation symbol block according to the other of the second mapping rule and the first mapping rule;

> the first mapping rule is performing resource mapping on the time-domain symbols according to a sequence of the M time-domain symbols in time domain; and
> the second mapping rule is performing resource mapping on the time-domain symbols corresponding to the sub-carriers according to a numbering sequence of the N sub-carriers in frequency domain.

15. The method according to claim 13 or 14, wherein the resource mapping rule is performing resource mapping on the first modulation symbol block according to a third mapping rule in frequency domain, and performing resource mapping on the first modulation symbol block according to a fourth mapping rule in time domain; and
the third mapping rule is cyclic mapping, and the fourth mapping rule is sequential mapping, or the third mapping rule is sequential mapping, and the fourth mapping rule is cyclic mapping.

16. The method according to any one of claims 13 to 15, wherein the method further comprises:
sending fourth indication information, wherein the fourth indication information indicates the resource mapping rule.

17. The method according to any one of claims 1 to 16, wherein the time-domain inter-symbol transformation processing is performed, by using a same first transformation matrix, on the time-domain symbols corresponding to the N sub-carriers.

18. The method according to any one of claims 1 to 16, wherein
the time-domain inter-symbol transformation processing is performed, by using different first transformation matrices, on the time-domain symbols corresponding to the N sub-carriers comprised in the first modulation symbol block.

19. The method according to claim 18, wherein the N sub-carriers comprise a first sub-carrier and a second sub-carrier, and a first transformation matrix used to perform the time-domain inter-symbol transformation processing on the plurality of time-domain symbols corresponding to the first sub-carrier and a first transformation matrix used to perform the time-domain inter-symbol transformation processing on a plurality of time-domain symbols corresponding to the second sub-carrier are in a mutual transpose relationship.

20. The method according to claim 18 or 19, wherein the method further comprises:
sending fifth indication information, wherein the fifth indication information indicates that the time-domain inter-symbol transformation processing is performed, by using different first transformation matrices, on the M time-domain symbols corresponding to the different sub-carriers comprised in the frequency-domain resource of the same modulation symbol block.

21. The method according to any one of claims 1 to 20, wherein the time-domain inter-symbol transformation processing is performing preprocessing on two or more time-domain symbols within a same modulation symbol block by using a first transformation matrix, wherein the first transformation matrix comprises one or more of a discrete Fourier transform DFT matrix, an inverse discrete Fourier transform IDFT matrix, an OCC matrix, and a permutation matrix.

22. A symbol processing method, comprising:

> obtaining a first to-be-demodulated symbol block, wherein a time-domain resource of the first to-be-demodulated symbol block comprises M time-domain symbols, a frequency-domain resource of the first to-be-demodulated symbol block comprises N sub-carriers, the first to-be-demodulated symbol block comprises $M \times N$ demodulation symbols, and time-domain inter-symbol transformation processing is performed on time-domain symbols that carry data in the M time-domain symbols, wherein M is greater than or equal to 2, and N is greater than or equal to 1; and

performing time-domain inter-symbol inverse transformation processing on the first to-be-demodulated symbol block to obtain a target to-be-demodulated symbol block, wherein a time-domain resource of the target to-be-demodulated symbol block comprises M time-domain symbols, a frequency-domain resource of the target to-be-demodulated symbol block comprises N sub-carriers, and the target to-be-demodulated symbol block comprises M×N demodulation symbols.

23. The method according to claim 22, wherein before the performing time-domain inter-symbol inverse transformation processing on the first to-be-demodulated symbol block to obtain the target to-be-demodulated symbol block, the method further comprises:
determining whether to perform the time-domain inter-symbol inverse transformation processing on the first to-be-demodulated symbol block; wherein correspondingly, performing time-domain inter-symbol inverse transformation processing on the first to-be-demodulated symbol block to obtain the target to-be-demodulated symbol block comprises:
performing, when determining to perform time-domain inter-symbol inverse transformation processing on the first to-be-demodulated symbol block, the time-domain inter-symbol inverse transformation processing on the first to-be-demodulated symbol block to obtain the target to-be-demodulated symbol block.

24. The method according to claim 23, wherein the determining whether to perform the time-domain inter-symbol inverse transformation processing on the first to-be-demodulated symbol block comprises:
determining, based on an index value of a modulation and coding scheme corresponding to the first to-be-demodulated symbol block, whether to perform the time-domain inter-symbol inverse transformation processing on the first to-be-demodulated symbol block.

25. The method according to claim 24, wherein the determining, based on the index value of the modulation and coding scheme corresponding to the first to-be-demodulated symbol block, whether to perform the time-domain inter-symbol inverse transformation processing on the first to-be-demodulated symbol block comprises:

determining, when the index value of the modulation and coding scheme is greater than or equal to an index threshold, to perform the time-domain inter-symbol inverse transformation processing on the first to-be-demodulated symbol block; and
determining, when the index value of the modulation and coding scheme is less than the index threshold, not to perform the time-domain inter-symbol inverse transformation processing on the first to-be-demodulated symbol block.

26. The method according to any one of claims 22 to 25, wherein before the performing time-domain inter-symbol inverse transformation processing on the first to-be-demodulated symbol block to obtain the target to-be-demodulated symbol block, the method further comprises:

receiving first indication information, wherein the first indication information indicates that a sending device performs the time-domain inter-symbol transformation processing on a first modulation symbol block corresponding to the first to-be-demodulated symbol block; and
determining, based on the first indication information, to perform the time-domain inter-symbol inverse transformation processing on the first to-be-demodulated symbol block.

27. The method according to claim 26, wherein the first indication information further indicates a length of a time-domain resource of the first modulation symbol block and/or is used to determine a second transformation matrix used to perform time-domain inter-symbol inverse transformation processing on the first to-be-demodulated symbol block; and correspondingly, performing time-domain inter-symbol inverse transformation processing on the first to-be-demodulated symbol block to obtain the target to-be-demodulated symbol block comprises:

determining, based on the first indication information, the M time-domain symbols comprised in the time-domain resource of the first to-be-demodulated symbol block; and/or
determining, based on the first indication information, a second transformation matrix corresponding to the first to-be-demodulated symbol block, wherein the second transformation matrix is an inverse transformation matrix of a first transformation matrix used by the sending device to perform the time-domain inter-symbol transformation processing on the first modulation symbol block; and
performing, by using the second transformation matrix, the time-domain inter-symbol inverse transformation processing on the M time-domain symbols comprised in the time-domain resource of the first to-be-demodulated symbol block, to obtain the target to-be-demodulated symbol block.

28. The method according to any one of claims 22 to 26, wherein the first to-be-demodulated symbol block corresponds to the first modulation symbol block, and the method further comprises:

receiving second indication information and/or third indication information, wherein the second indication information indicates a quantity of time-domain symbols comprised in a time-domain resource of the first modulation symbol block, or the second indication information indicates a start time-domain symbol and/or an end time-domain symbol of a time-domain resource of the first modulation symbol block, or the second indication information indicates start data and/or end data of a frequency-domain resource of the first modulation symbol block; and
the third indication information indicates a first transformation matrix corresponding to the first modulation symbol block;
determining, based on the second indication information, the M time-domain symbols comprised in the time-domain resource of the first to-be-demodulated symbol block;
determining, based on the third indication information, a second transformation matrix corresponding to the first to-be-demodulated symbol block, wherein the second transformation matrix is an inverse transformation matrix of the first transformation matrix; and
performing, by using the second transformation matrix, the time-domain inter-symbol inverse transformation processing on the M time-domain symbols comprised in the time-domain resource of the first to-be-demodulated symbol block, to obtain the target to-be-demodulated symbol block.

29. The method according to claim 28, wherein when the second indication information is received, the method further comprises:

determining, based on the second indication information, the M time-domain symbols comprised in the time-domain resource of the first to-be-demodulated symbol block;
determining, from one or more transformation matrices based on the M time-domain symbols comprised in the time-domain resource of the first to-be-demodulated symbol block, the second transformation matrix corresponding to the first to-be-demodulated symbol block, wherein each transformation matrix corresponds to a length of one time-domain resource; and
performing the time-domain inter-symbol inverse transformation processing on the first to-be-demodulated symbol block by using the second transformation matrix corresponding to the first to-be-demodulated symbol block, to obtain the target to-be-demodulated symbol block.

30. The method according to any one of claims 22 to 29, wherein the M time-domain symbols comprised in the time-domain resource of the first to-be-demodulated symbol block comprise a first time-domain symbol, and when the first time-domain symbol is used to carry a pilot signal, the time-domain inter-symbol inverse transformation processing is performed on time-domain symbols other than the first time-domain symbol in the M time-domain symbols of the first to-be-demodulated symbol block; or
when the first time-domain symbol carries data and is further used to carry the pilot signal, the time-domain inter-symbol inverse transformation processing is performed on the M time-domain symbols comprised in the time-domain resource of the first to-be-demodulated symbol block.

31. The method according to any one of claims 22 to 30, wherein before the performing time-domain inter-symbol inverse transformation processing on the first to-be-demodulated symbol block to obtain the target to-be-demodulated symbol block, the method further comprises:

determining a resource mapping rule used by the sending device to perform resource mapping on the first modulation symbol block corresponding to the first to-be-demodulated symbol block; wherein correspondingly, performing time-domain inter-symbol inverse transformation processing on the first to-be-demodulated symbol block to obtain the target to-be-demodulated symbol block comprises:
performing time-domain inter-symbol inverse transformation processing on the first to-be-demodulated symbol block according to a resource mapping sequence indicated by the resource mapping rule, to obtain the target to-be-demodulated symbol block.

32. The method according to claim 31, wherein the determining the resource mapping rule used by the sending device to perform resource mapping on the first modulation symbol block corresponding to the first to-be-demodulated symbol block comprises:

receiving fourth indication information from the sending device, wherein the fourth indication information indicates the resource mapping rule; and
determining the resource mapping rule based on the fourth indication information.

33. The method according to any one of claims 22 to 32, wherein the time-domain inter-symbol inverse transformation processing is performed, by using the same second transformation matrix, on the time-domain symbols corresponding to the N different sub-carriers comprised in the first to-be-demodulated symbol block.

34. The method according to any one of claims 22 to 32, wherein
the time-domain inter-symbol inverse transformation processing is performed, by using different second transformation matrices, on the time-domain symbols corresponding to the N different sub-carriers comprised in the first to-be-demodulated symbol block.

35. A communication apparatus, wherein the communication apparatus comprises: a processing unit and a communication unit, wherein

the communication unit is configured to perform operations of receiving and sending a message performed by the sending device in the symbol processing method according to any one of claims 1 to 21; and the processing unit runs instructions to perform operations of processing or control performed by the sending device in the symbol processing method according to any one of claims 1 to 21; or
the communication unit is configured to perform operations of receiving and sending a message performed by the receiving device in the symbol processing method according to any one of claims 22 to 34; and the processing unit runs instructions to perform operations of processing or control performed by the receiving device in the symbol processing method according to any one of claims 22 to 34.

36. A communication system, wherein the system comprises a sending device and a receiving device, wherein

the sending device is configured to perform the symbol processing method according to any one of claims 1 to 21; and
the receiving device is configured to perform the symbol processing method according to any one of claims 22 to 34.

37. A chip, wherein the chip comprises at least one processor and a communication interface, the communication interface is coupled to the at least one processor, the at least one processor is configured to run a computer program or instructions to implement the symbol processing method according to any one of claims 1 to 21 or the symbol processing method according to any one of claims 22 to 34, and the communication interface is configured to communicate with a module other than the chip.

38. A computer-readable storage medium, wherein the computer-readable storage medium stores instructions; and when the instructions are run, the symbol processing method according to any one of claims 1 to 21 or the symbol processing method according to any one of claims 22 to 34 is implemented.

FIG. 1

FIG. 2

EP 4 697 660 A1

FIG. 3

FIG. 4

FIG. 5

| $K_{PTRS}=2$ | $K_{PTRS}=4$ | $K_{PTRS}=2$ |
| $L_{PTRS}=1$ | $L_{PTRS}=2$ | $L_{PTRS}=4$ |

FIG. 6

| |
|---|
| ⋮ |
| ⋮ |
| $l_B + u$ |
| ⋮ |
| $l_B$ |
| ⋮ |
| $l_B - u$ |
| ⋮ |
| $l_2 + u$ |
| ⋮ |
| $l_2$ |
| ⋮ |
| $l_2 - u$ |
| ⋮ |
| $l_1 + u$ |
| ⋮ |
| $l_1$ |
| ⋮ |
| $l_1 - u$ |
| ⋮ |
| |

FIG. 7

FIG. 8

FIG. 9A

FIG. 9B

FIG. 9C

FIG. 9D(a)

FIG. 9D(b)

FIG. 9E

```
┌─────────────────┐                                    ┌─────────────────┐
│  Sending device │                                    │    Receiving    │
│                 │                                    │     device      │
└─────────────────┘                                    └─────────────────┘
         │                                                      │
         │                                                      │
┌──────────────────────────────┐                               │
│ Step 1001: Obtain a first     │                               │
│ modulation symbol block       │                               │
└──────────────────────────────┘                               │
         │                                                      │
┌──────────────────────────────┐                               │
│ Step 1002: Perform time-      │                               │
│ domain inter-symbol           │                               │
│ transformation processing on  │                               │
│ the first modulation symbol   │                               │
│ block to obtain a second      │                               │
│ modulation symbol block       │                               │
└──────────────────────────────┘                               │
         │                                                      │
┌──────────────────────────────┐                               │
│ Step 1003: Add a pilot signal │                               │
│ to a time-domain symbol that  │                               │
│ is used for pilot signal      │                               │
│ mapping                       │                               │
└──────────────────────────────┘                               │
         │   Step 1004: Send a second modulation symbol         │
         │   block to which the pilot signal has been added     │
         │ ──────────────────────────────────────────────────► │
         │                               ┌───────────────────────────────────┐
         │                               │ Step 1005: Obtain a first to-be-  │
         │                               │ demodulated symbol block          │
         │                               └───────────────────────────────────┘
         │                                                      │
         │                               ┌───────────────────────────────────┐
         │                               │ Step 1006: Perform time-domain    │
         │                               │ inter-symbol inverse              │
         │                               │ transformation processing on the  │
         │                               │ first to-be-demodulated symbol    │
         │                               │ block to obtain a target to-be-   │
         │                               │ demodulated symbol block          │
         │                               └───────────────────────────────────┘
         │                                                      │
```

FIG. 10

5-DFT

Symbol set 11

| 0 | 1 | 2 | 3 | 4 | 5 | 6 | 7 | 8 | 9 | 10 | 11 | 12 | 13 |

Case 1

(a)

5-DFT　　　　6-DFT

Symbol set 21　　　Symbol set 22

| 0 | 1 | 2 | 3 | 4 | 5 | 6 | 7 | 8 | 9 | 10 | 11 | 12 | 13 |

Case 2

(b)

3-DFT　　　4-DFT　　　4-DFT

Symbol set 31　　Symbol set 32　　Symbol set 33

| 0 | 1 | 2 | 3 | 4 | 5 | 6 | 7 | 8 | 9 | 10 | 11 | 12 | 13 |

Case 3

(c)

FIG. 11

FIG. 12

FIG. 13

FIG. 14

FIG. 15

FIG. 16

FIG. 17(a)

DMRS

PTRS

K RB

FIG. 17(b)

FIG. 18(a)

FIG. 18(b)

FIG. 19A

FIG. 19B

FIG. 19C

FIG. 20

FIG. 21

FIG. 22

FIG. 23

FIG. 24

FIG. 25

## INTERNATIONAL SEARCH REPORT

International application No.

**PCT/CN2024/082689**

| A. | CLASSIFICATION OF SUBJECT MATTER |
|---|---|

H04L 27/26(2006.01)i

According to International Patent Classification (IPC) or to both national classification and IPC

| B. | FIELDS SEARCHED |
|---|---|

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, VEN, ENTXT, 3GPP, CJFD, IEEE: 调制, 符号, 矩阵, 资源, 时域, 频域, 子载波, 索引, 指示, modulate, symbol, matrix, resource, mapping, time, frequency, domain, sub-carrier, index, indication

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | WO 2022082689 A1 (HUAWEI TECHNOLOGIES CO., LTD.) 28 April 2022 (2022-04-28) description, page 4, line 5-page 35, line 10 | 1-2, 5-23, 26-38 |
| A | CN 116114227 A (HUAWEI TECHNOLOGIES CO., LTD.) 12 May 2023 (2023-05-12) entire document | 1-38 |
| A | CN 108288990 A (ZTE CORP.) 17 July 2018 (2018-07-17) entire document | 1-38 |
| A | US 2019357205 A1 (HUAWEI TECHNOLOGIES CO., LTD.) 21 November 2019 (2019-11-21) entire document | 1-38 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 June 2024** | **22 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/082689**

| Patent document cited in search report | | | Publication date (day/month/year) | Patent family member(s) | | | Publication date (day/month/year) |
|---|---|---|---|---|---|---|---|
| WO | 2022082689 | A1 | 28 April 2022 | CN | 116325539 | A | 23 June 2023 |
| | | | | EP | 4213424 | A1 | 19 July 2023 |
| | | | | EP | 4213424 | A4 | 15 November 2023 |
| | | | | US | 2023261841 | A1 | 17 August 2023 |
| | | | | IN | 202337027119 | A | 08 September 2023 |
| CN | 116114227 | A | 12 May 2023 | None | | | |
| CN | 108288990 | A | 17 July 2018 | WO | 2018126843 | A1 | 12 July 2018 |
| US | 2019357205 | A1 | 21 November 2019 | EP | 3562245 | A1 | 30 October 2019 |
| | | | | EP | 3562245 | A4 | 27 November 2019 |
| | | | | US | 11337189 | B2 | 17 May 2022 |
| | | | | WO | 2018141272 | A1 | 09 August 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310633888